# EUROPEAN PATENT APPLICATION

(11) **EP 4 822 411 A2**
(43) Date of publication of application: **14.10.2026**
(21) Application number: 26169588.6
(22) Date of filing: 31.03.2026
(51) Int. Cl.: G02B 6/32, G02B 6/38, G02B 6/42

(54) **OPTICAL FIBER CONNECTOR, ADJUSTMENT DEVICE OF OPTICAL SYSTEM AND ADJUSTMENT METHOD OF OPTICAL SYSTEM**

(30) Priority: 09.04.2025 TW 114113368
(71) Applicant: Ling, Kow-Je, Taipei City (TW)
(72) Inventor: Ling, Kow-Je, Taipei City (TW)
(74) Representative: Lippert Stachow Patentanwälte Rechtsanwälte

(57) **Abstract**

An optical fiber connector, an adjustment device of an optical system, and an adjustment method of an optical system are provided. The optical fiber connector includes an optical system and an optical integrated circuit. The optical system includes: a lens barrel portion; and a lens system disposed within the lens barrel portion, the lens system including at least one focusing lens. An outermost lens of the lens system has a planar focal plane serving as a matching join surface. The optical integrated circuit is coupled to the optical system and consists of an integrated circuit, an integrated optical circuit, or an optical fiber. A focal point of the lens system of the optical system is configured to coincide with a center point of the matching join surface.

## Description

### BACKGROUND

### Field of Invention

The present disclosure relates to an optical fiber connector, an adjustment device of an optical system and an adjustment method of an optical system.

### Description of Related Art

Conventional optical fiber connectors are generally categorized into two types, namely, physical contact optical fiber connectors and expanded beam optical fiber connectors. In general, the expanded beam optical fiber connector is provided with an optical system, which at least includes a collimating lens. When the collimating lens employs an ordinary lens, for example, a commonly used plastic lens, positional inaccuracy of the lens and angular inaccuracy of the lens (with respect to a plane perpendicular to an optical axis) are inevitably present. Such issues cause an error in a focal point of a parallel beam incident on the collimating lens. Moreover, since a core diameter of a single-mode optical fiber is only about 9 micrometers (µm), even a slight error may result in a considerable effect.

Accordingly, how to develop a solution to align the optical system with an optical integrated circuit with ease and precision, so as to complete a male or female optical fiber connector is an important issue.

### SUMMARY

In view of the above issues, according to an embodiment of the present disclosure, an optical fiber connector is provided, which includes an optical system and an optical integrated circuit or optical fiber. The optical system includes a lens barrel portion and a lens system. The lens system is disposed within the lens barrel portion. The lens system includes at least one focusing lens. An outermost lens of the lens system has a planar focal plane serving as a matching join surface. In addition, the optical integrated circuit is coupled to the optical system and consisting of an integrated circuit, an integrated optical circuit, or an optical fiber. A focal point of the lens system of the optical system is configured to coincide with a center point of the matching join surface.

In the above-mentioned embodiment of the optical fiber connector, the optical system further includes an alignment sleeve, and the lens barrel portion is fitted into the alignment sleeve to configure a female optical fiber connector.

In the above-mentioned embodiment of the optical fiber connector, the optical system further includes a matching join surface carrier configured to abut against an outward surface of the matching join surface.

In the above-mentioned embodiment of the optical fiber connector, the optical integrated circuit is an integrated circuit, and the integrated circuit further includes: an integrated circuit body, having an upper surface coupled to the matching join surface of the optical system; and an integrated circuit unit, located on or embedded below the upper surface, the integrated circuit unit being coupled to the center point of the matching join surface.

In the above-mentioned embodiment of the optical fiber connector, the optical integrated circuit is the integrated optical circuit, and the integrated optical circuit further includes: an integrated optical circuit body, having a receiving region; and an integrated optical circuit unit, accommodated in the receiving region, the integrated optical circuit unit being coupled to the center point of the matching join surface.

In the above-mentioned embodiment of the optical fiber connector, the at least one focusing lens of the lens system consists of a lens body and projecting lugs, and in a cross-sectional view, the projecting lugs are located at both ends of the lens body along its diameter.

In the above-mentioned embodiment of the optical fiber connector, each lens of the lens system is made of transparent plastic or polymeric material.

In addition, according to another embodiment of the present disclosure, an adjustment device of an optical system configured to adjust the optical system of an optical fiber connector is provided. The adjustment device includes a long straight tube, a light source and a monitoring device. The long straight tube has a first opening and a second opening, and the optical system is fitted into it from the second opening. The light source is disposed at a periphery of the first opening and configured to illuminate the optical system. The monitoring device is toward the second opening of the long straight tube to monitor a light spot imaged by the optical system. The optical system includes a lens barrel portion and a lens system, and the lens system includes at least one focusing lens. An outermost lens of the lens system has a planar focal plane serving as a matching join surface. The at least one focusing lens consists of a lens body and projecting lugs. The lens barrel portion has at least one lens barrel adjustment hole on a tube wall perpendicular to an optical axis of the optical system and corresponding to the projecting lugs of the at least one focusing lens. The long straight tube has at least one long straight tube adjustment hole on a tube wall and aligned with the at least one lens barrel adjustment hole. Through observation of the light spot on a screen of the monitoring device, the projecting lugs are moved in a transverse direction perpendicular to the optical axis using a tool through the at least one long straight tube adjustment hole and the at least one lens barrel adjustment hole so that the light spot is made to coincide with the center point of the matching join surface.

In the above-mentioned embodiment of the adjustment device of the optical system, the light source is a first uniform light source.

In the above-mentioned embodiment of the adjustment device of the optical system, the optical system further includes at least one fine adjustment positioning lens consists of a lens body and projecting lugs, and the lens barrel portion further has at least one other lens barrel adjustment hole on the tube wall perpendicular to the optical axis of the optical system and corresponding to the projecting lugs of the at least one fine adjustment positioning lens, and the long straight tube further has at least one other long straight tube adjustment hole on the tube wall and aligned with the at least one other lens barrel adjustment hole. Through observation of the light spot on a screen of the monitoring device, the projecting lugs of the at least one fine adjustment positioning lens are moved in the transverse direction perpendicular to the optical axis using the tool through the at least one other long straight tube adjustment hole and the at least one other lens barrel adjustment hole so that the light spot is made to coincide with the center point of the matching join surface.

In the above-mentioned embodiment of the adjustment device of the optical system, the optical system further includes a matching join surface carrier configured to abut against an outward surface of the outermost lens, and the light spot is made to coincide with the center point of the matching join surface by moving the matching join surface carrier in the transverse direction.

In the above-mentioned embodiment of the adjustment device of the optical system, the long straight tube further includes a first long straight inner tube fitted from a side of the first opening of the long straight tube.

In the above-mentioned embodiment of the adjustment device of the optical system, the long straight tube further includes: a first long straight inner tube, fitted from a side of the first opening of the long straight tube; and a second long straight inner tube, fitted from a side of the second opening of the long straight tube, and the optical system is fitted into the second long straight inner tube.

In the above-mentioned embodiment of the adjustment device of the optical system, the monitoring device is a camera.

In addition, according to another embodiment of the present disclosure, an adjustment method of an optical system for adjusting the optical system of an optical fiber connector is provided. The adjustment method of the optical system includes the following steps. The optical system is provided. The optical system includes a lens barrel portion and a lens system, the lens system including at least one focusing lens. An outermost lens of the lens system has a planar focal plane serving as a matching join surface. The at least one focusing lens consists of a lens body and projecting lugs, in which the lens barrel portion has at least one lens barrel adjustment hole on a tube wall perpendicular to an optical axis of the optical system and corresponding to the projecting lugs of the at least one focusing lens. A long straight tube is provided. The long straight tube has a first opening and a second opening. The long straight tube further has at least one long straight tube adjustment hole on a tube wall and aligned with the at least one lens barrel adjustment hole. A first uniform light source is disposed at a periphery of the first opening to illuminate the optical system. The optical system is fitted into the long straight tube from a side of the second opening. A monitoring device is provided toward the second opening of the long straight tube to monitor a light spot imaged by a focal point of the optical system. The light spot is made to coincide with the center point of the matching join surface through observation of the light spot on a screen of the monitoring device and moving the projecting lugs in a transverse direction perpendicular to the optical axis using a tool through the at least one long straight tube adjustment hole and the at least one lens barrel adjustment hole. When the light spot coincides with the center point of the matching join surface, an adhesive is injected into the at least one lens barrel adjustment hole through the at least one long straight tube adjustment hole and the at least one lens barrel adjustment hole to fix and position the at least one focusing lens to the lens barrel portion.

In the above-mentioned embodiment of the adjustment method of the optical system, the adjustment method further includes an annealing step after fixing and positioning the at least one focusing lens to the lens barrel portion with the adhesive.

In the above-mentioned embodiment of the adjustment method of the optical system, the optical system further includes at least one fine adjustment positioning lens consists of a lens body and projecting lugs. The lens barrel portion further has at least one other lens barrel adjustment hole on the tube wall perpendicular to the optical axis of the optical system and corresponding to the projecting lugs of the at least one fine adjustment positioning lens. The long straight tube further has at least one other long straight tube adjustment hole on the tube wall and aligned with the second lens barrel adjustment hole. The adjustment method further includes: making the light spot coincide with the center point of the matching join surface through observation of the light spot on a screen of the monitoring device and moving the projecting lugs of the at least one fine adjustment positioning lens in the transverse direction perpendicular to the optical axis using the tool through the at least one other long straight tube adjustment hole and the at least one other lens barrel adjustment hole. When the light spot coincides with the center point of the matching join surface, the adhesive is injected into the at least one other lens barrel adjustment hole through the at least one other long straight tube adjustment hole and the at least one other lens barrel adjustment hole to fix and position the at least one fine adjustment positioning lens to the lens barrel portion.

In the above-mentioned embodiment of the adjustment method of the optical system, the optical system further includes a matching join surface carrier configured to abut against an outward surface of the outermost lens. The light spot is made to coincide with the center point of the matching join surface through observation of the light spot on a screen of the monitoring device and moving the matching join surface carrier in the transverse direction. When the light spot coincides with the center point of the matching join surface, the matching join surface carrier is fixed and positioned to the lens barrel portion with the adhesive.

In the above-mentioned embodiment of the adjustment method of the optical system, the adjustment method further includes: providing a diffuser between the first uniform light source and the optical system to diffuse parallel light emitted from the first uniform light source.

In the above-mentioned embodiment of the adjustment method of the optical system, the monitoring device is a camera.

Through the foregoing configuration, the present disclosure can develop a male or female optical fiber connector in which the optical system can be aligned with the optical integrated circuit with ease and precision.

### BRIEF DESCRIPTION OF THE DRAWINGS

Fig. 1 is a schematic diagram illustrating a configuration of an expanded beam optical fiber connector system according to an embodiment of the present disclosure.
Figs. 2A and 2B are schematic cross-sectional diagrams illustrating an optical system of a first embodiment of the present disclosure.
Figs. 3A to 3E are schematic diagrams illustrating various modifications of a female optical fiber connector structure according to an embodiment of the present disclosure.
Fig. 4 is a schematic cross-sectional diagram illustrating an optical system of a second embodiment of the present disclosure.
Fig. 5A is a schematic diagram illustrating an optical system of a female optical fiber connector structure according to another embodiment of the present disclosure.
Fig. 5B is an enlarged partial view of a matching join surface carrier of Fig. 5A.
Fig. 5C is a perspective view of the matching join surface carrier of Fig. 5A.
Fig. 5D is a schematic diagram illustrating a variation of the optical system of Fig. 5A.
Figs. 6A to 6C are schematic diagrams respectively illustrating configurations of female optical fiber connectors using the optical system of Fig. 5A according to the present disclosure.
Figs. 6D to 6F are schematic diagrams respectively illustrating configurations of male and female optical fiber connectors using the optical system of Fig. 5D according to the present disclosure.
Figs. 6G and 6H are schematic diagrams illustrating states of the optical fiber connectors of Fig. 6C and Fig. 6F after insertion of optical fibers.
Fig. 6I is a schematic diagram illustrating a physical contact connector applicable to the present disclosure.
Fig. 7A is a schematic cross-sectional diagram illustrating an optical system of a third embodiment of the present disclosure.
Fig. 7B is a schematic diagram illustrating a female optical fiber connector according to an embodiment of the present disclosure.
Figs. 8A to 8D are schematic diagrams illustrating several examples of block-shaped matching join surface carriers according to an embodiment of the present disclosure.
Figs. 9A to 9D are simplified schematic diagrams illustrating configurations of optical fiber connectors according to an embodiment of the present disclosure.
Figs. 9E to 9G are schematic perspective and cross-sectional views illustrating a matching join surface carrier and a mating member in Figs. 9A to 9D.
Figs. 10A to 10D are schematic diagrams illustrating configurations of optical fiber connectors according to an embodiment of the present disclosure.
Figs. 10E to 10G are schematic perspective and cross-sectional views illustrating a matching join surface carrier and a mating member in Figs. 10A to 10D.
Figs. 11A and 11B are enlarged diagrams illustrating a recess of a matching join surface carrier and a protrusion of a mating member.
Figs. 12A to 12D are schematic diagrams illustrating configurations of optical fiber connectors according to an embodiment of the present disclosure.
Fig. 12E is a schematic diagram illustrating a matching join surface carrier and a mating member in Figs. 12A to 12D.
Figs. 13A and 13B are simplified schematic diagrams illustrating configurations of optical fiber connectors according to an embodiment of the present disclosure.
Figs. 14A to 14C are simplified schematic diagrams illustrating configurations of optical fiber connectors according to an embodiment of the present disclosure.
Figs. 15A to 15F are schematic diagrams illustrating a long straight-tube structure for adjusting an optical system and a manner of generating a parallel beam according to the present disclosure.
Figs. 16A and 16B are schematic diagrams illustrating several variations of a long straight-tube structure according to the present disclosure.
Figs. 17A and 17B are schematic diagrams illustrating variations of a longer long straight-tube structure according to the present disclosure.
Figs. 18A to 18C are explanatory diagrams illustrating a manner of focal point movement when a fine-adjustment positioning lens is displaced according to an embodiment of the present disclosure.
Fig. 19 is a schematic diagram illustrating a movable distance of each lens in a transverse direction according to an embodiment of the present disclosure.
Figs. 20A to 20D are schematic diagrams illustrating several feasible states of adjusting a focal point of an optical system according to the present disclosure.
Fig. 21 is a schematic diagram illustrating an exemplary configuration of a lens system in an optical system according to the present disclosure.
Figs. 22A to 22E are explanatory diagrams illustrating a manner of focal point movement when a fine-adjustment positioning lens is displaced according to another embodiment of the present disclosure.
Figs. 23A to 23D are schematic diagrams respectively illustrating configurations of an optical system of male and female optical fiber connectors according to another embodiment of the present disclosure.
Figs. 24A to 24C are schematic diagrams illustrating the fixing and adjustment of the devices of the connectors of Figs. 23A and 23B.
Figs. 25A and 25B are schematic diagrams respectively illustrating devices of in-device waveguide connectors according to another embodiment of the present disclosure.
Fig. 26 is a schematic diagram illustrating a support of the device of the connectors of Figs. 25A and 25B.
Figs. 27A and 27B are schematic diagrams illustrating the fixing and adjustment of the devices of the connectors of Figs. 25A and 25B.
Figs. 28A and 28B are schematic diagrams illustrating the adjustment of positions using an x-y positioner according to an embodiment of the present disclosure.
Fig. 28C is a schematic diagram of the x-y positioner according to an embodiment of the present disclosure.
Fig. 29 is a partially enlarged view of the clamp portion of the x-y positioner and a lens according to an embodiment of the present disclosure.
Fig. 30 is a schematic diagram of an optical fiber connector according to an embodiment of the present disclosure.
Fig. 31 is a three dimensional view of male connector portions of the optical fiber connector of Fig. 30 according to an embodiment of the present disclosure.
Fig. 32 is a schematic diagram illustrating three types of doublets used in connectors of some embodiments of the present disclosure.
Figs. 33A and 33B are schematic diagrams illustrating matching join surface carriers and mating members according to an embodiment of the present disclosure.
Fig. 34 is a schematic diagram illustrating a device of the connector according to an embodiment of the present disclosure.
Figs. 35A to 35C are schematic diagrams illustrating connectors including seal structures and physical connecting optical fibers according to an embodiment of the present disclosure.

### DETAILED DESCRIPTION

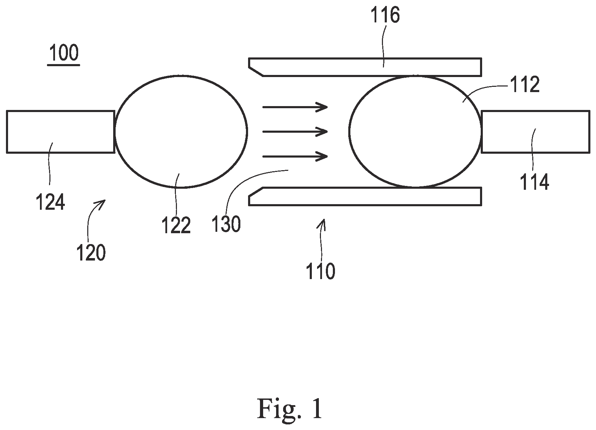

Fig. 1 is a schematic diagram illustrating a configuration of an expanded beam optical fiber connector system according to an embodiment of the present disclosure. The expanded beam optical fiber connector system 100 includes a female expanded beam optical fiber connector 110 and a male expanded beam optical fiber connector 120. For convenience of description, in circumstances without causing misunderstanding, the female expanded beam optical fiber connector 110 and the male expanded beam optical fiber connector 120 are hereinafter respectively referred to as the female optical fiber connector 110 and the male optical fiber connector 120. In general use, the male optical fiber connector 120 is inserted into the female optical fiber connector 110. Furthermore, Fig. 1 illustrates the schematic diagram of the system configuration for convenience of explanation, rather than a schematic diagram of an actual structure.

As shown in Fig. 1, the female optical fiber connector 110 generally includes a first optical system 112, a first optical integrated circuit 114, and an alignment sleeve 116. Similarly, the male optical fiber connector 120 generally includes a second optical system 122 and a second optical integrated circuit 124. The female optical fiber connector 110 and the male optical fiber connector 120 are similar in basic structure, except that the female optical fiber connector 110 is further provided with the alignment sleeve 116. The first optical integrated circuit 114 and the second optical integrated circuit 124 may respectively include a structure composed of an optical fiber or waveguide. In addition, one of the connectors, the male optical fiber connector 120 or the female optical fiber connector 110, may function as a light transmitting end, while the other may function as a light receiving end. Therefore, depending on whether the first optical integrated circuit 114 and the second optical integrated circuit 124 are configured as the transmitting end or receiving end, they may further include a detector (as a light detector), an emitter (as a light emitter), an optical fiber, or a waveguide. The detailed structures of the first optical integrated circuit 114 and the second optical integrated circuit 124 will be further described in subsequent embodiments.

In addition, the first optical integrated circuit 114 may be an integrated optical circuit, an integrated electronic circuit, or an arrangement including an integrated optical circuit and an integrated electronic circuit, and the present disclosure is not particularly limited thereto. Similarly, the second optical integrated circuit 124 may be an integrated optical circuit, an integrated electronic circuit, an arrangement including an integrated optical circuit and an integrated electronic circuit, or an optical fiber, and the present disclosure is not particularly limited thereto.

As an example, when the male optical fiber connector 120 functions as a transmitting end, the second optical integrated circuit 124 is provided with an emitter that can emit a light beam. After the light beam is converted into a parallel beam 130 by the second optical system 122, it is incident on the first optical system 112 of the female optical fiber connector 110 located within the alignment sleeve 116. Thereafter, the parallel beam 130 is focused onto the first optical integrated circuit 114 by the first optical system 112, and received by a detector of the first optical integrated circuit 114.

In this configuration, how to accurately focus the light beam from the second optical system 122 that passes through the first optical system 112 at a focal position so that it enters the detector, optical fiber, or waveguide of the first optical integrated circuit 114, or reversely, how to make the light emitted from the first optical integrated circuit 114 at the focal position enter the first optical system 112 to form the parallel beam 130 and be incident on the second optical system 122 of the male optical fiber connector 120, requires very accurate alignment. One of the key aspects of the present disclosure is how to position (determine) the first optical system 112 and the first optical integrated circuit 114 (or the second optical system 122 and the second optical integrated circuit 124), i.e., how to accurately align the detector, the emitter, the optical fiber, or the waveguide of the first optical integrated circuit 114 with the focal position of the first optical system 112. The same applies to the light transmission configuration of the male optical fiber connector 120. This will be further described below.

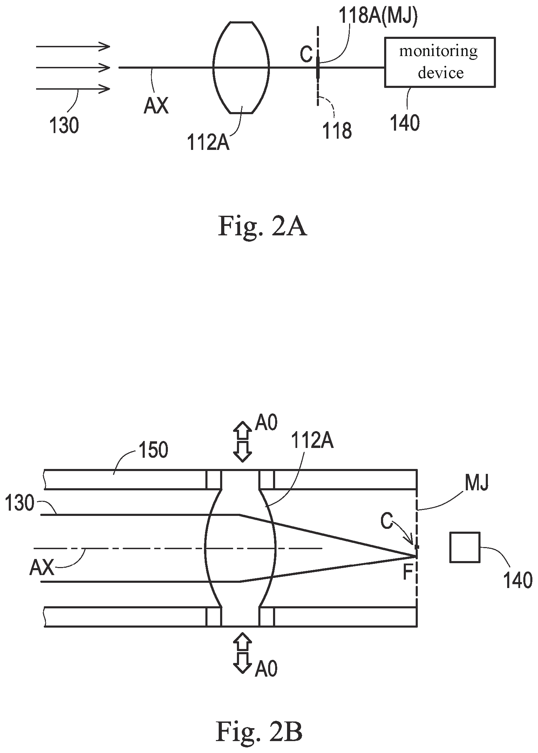

Fig. 2A is a schematic cross-sectional diagram illustrating an optical system of a first embodiment of the present disclosure, which is a partial schematic diagram of the first optical system 112 of Fig. 1. As shown in Fig. 2A, an ideal parallel beam 130 is focused by a collimating optical system 112A (which constitutes a portion of the first optical system 112 of Fig. 1) onto a focal plane 118 that is perpendicular to an optical axis AX. Thereafter, a specifically shaped surface 118A is defined in the vicinity of the intersection of the focal plane 118 with the optical axis AX. When the collimating optical system 112A or the specifically shaped surface 118A is moved, the incident parallel beam 130 can be focused on a specific point C on the surface 118A.

Generally, the specific shape may, for example, be a circle, and the specific point C may, for example, be the center point of the circle, i.e., the circle center. In addition, a monitoring device 140 disposed behind the collimating optical system 112A (more accurately, behind the surface 118A) may capture images, so that the movement of the center point C can be observed when the collimating optical system 112A or the specifically shaped surface 118A is moved. Here, the monitoring device 140 may be any commercially available camera, or any imaging apparatus or equipment capable of detecting the surface 118A and observing the movement of its center point C. Here, the specifically shaped surface 118A may be referred to as a matching join surface (MJ). The following description will use a camera as an example for illustration, but is not intended to limit the embodiments of the present disclosure.

Further description will now be given regarding the matching join surface MJ. In an optical system, if there is a need to externally connect another device at an appropriate position, this position is a specific surface perpendicular to an optical axis of the optical system, typically a circular surface. A specific point of light spots on this surface of the optical system, usually the center point, is found. Thereafter, accurate alignment can be obtained by combining the specific point (usually the center point) of the external device with the optical system. In general, the optical axes of the two systems are collinear, but in some cases they may not necessarily be collinear. In addition, the matching join surface MJ is often a focal plane of the optical system, though not necessarily.

Fig. 2B is a schematic diagram illustrating adjustment of the center point of the matching join surface according to an embodiment of the present disclosure. As shown in Fig. 2B, one important aspect of the present disclosure is that a center point C of a matching join surface MJ can be adjusted (moved) to coincide with a focal point F of a collimating optical system 112A by moving the collimating optical system 112A. For example, one way to implement the present disclosure is to move a lens of the collimating optical system 112A located in front of the matching join surface MJ in a plane perpendicular to an optical axis AX (the movement direction A0 indicated by the arrow in the figure), such that a focal point of a parallel beam 130 incident on the collimating optical system 112A is shifted to the center point C of the circular matching join surface MJ. Thereafter, the collimating optical system 112A is fixed to its lens barrel portion 150 (also referred to as a housing, lens holder, or the like).

In the embodiment of the present disclosure, the lens of the collimating optical system 112A is not directly fixed to the lens barrel portion 150 at the beginning, but a gap is provided so that the lens of the collimating optical system 112A can move along the movement direction A0. This operation may be observed using the above-mentioned monitoring device 140 such as a camera. After the focal point of the parallel beam 130 has moved to coincide with the center point C of the matching join surface MJ, the lens of the collimating optical system 112A is fixed to the lens barrel portion 150, for example, by an adhesive or the like. Thereafter, as illustrated in Fig. 1, the first optical integrated circuit 114 such as the detector, the emitter, the optical fiber, or the waveguide may be placed on (coupled to) the matching join surface MJ, thereby being coupled to the collimating optical system 112A with alignment to the center point C.

Thus, the focused light beam can enter the subsequently installed detector, emitter, optical fiber, or waveguide. Conversely, because light is reversible, light emitted from the detector, the emitter, the optical fiber, or the waveguide through this point will pass through the collimating optical system 112A and exit as the parallel beam 130.

Returning to Fig. 1, in general, the light transmitted between the male optical fiber connector 120 and the female optical fiber connector 110 of the expanded beam optical fiber connector system 100 is the parallel beam 130. If some of the parallel beam 130 is not aligned, as long as the misalignment is not too severe, a certain effect can still be achieved. In addition, if the alignment sleeve 116 is used, the light transmitted between them can be almost certainly well aligned. In such a case, light loss during transmission can be reduced, resulting in some power saving effect, while maintaining good optical transmission.

Subsequently, several embodiments will be described to illustrate the expanded beam optical fiber connector system of the present disclosure, particularly schematic structural diagrams of female optical fiber connectors. In addition, in the following description, references to upper, lower, left, and right are merely based on relative positions indicated in the figures, and are not definitive positions. If the orientation of the figure is changed, the directions such as up, down, left, and right will also change accordingly. The directions such as up, down, left, and right are not absolute limitations on the embodiments of the present disclosure, and the same applies to the following embodiments, which is hereby stated in advance. Furthermore, a term such as transverse direction or horizontal direction, unless otherwise specified, generally refers to a direction extending in a plane perpendicular to an optical axis of a lens or lens group. In addition, in the following description, unless specifically designated, all cross-sectional views, profiles, or similar terms refer to shapes obtained by cutting along a diametrical direction of a three-dimensional object.

### First Embodiment

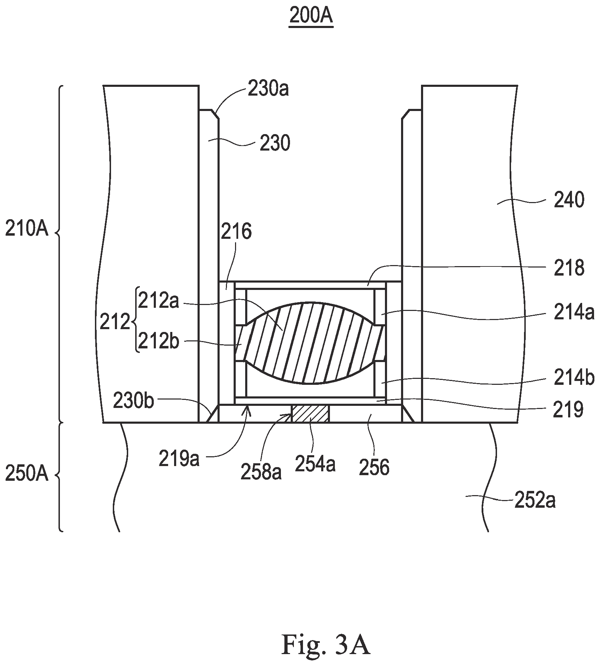

Fig. 3A is a schematic structural view of a female optical fiber connector according to an embodiment of the present disclosure. As shown in Fig. 3A, the female optical fiber connector 200A includes an optical system 210A and an integrated circuit 250A. For ease of explanation, in this embodiment, a collimating lens 212 is used as an example of a lens system in an optical system 210A. In this example, the single-lens collimating lens 212 is used for illustration; examples of a lens system including a collimating lens having multiple lenses will be described later. The collimating lens 212 serves as an example of a focusing lens. Moreover, according to an embodiment of the present disclosure, the lens system of the optical system 210A may further include at least one fine-adjustment positioning lens (not shown, see other embodiments described later). The collimating lens 212 can focus a parallel beam at its focal position, or convert light emitted from its focal point into a parallel beam.

The integrated circuit 250A may be composed of a detector and an emitter. The detector, emitter, and the like of the integrated circuit 250A are configured to be aligned with the center point C of the matching join surface MJ shown in Fig. 2A, that is, the focal point of the collimating lens 212 of the lens system of the optical system 210A or the center point of the detector or emitter, as described above. The details of the alignment method will be described later.

In the example shown in Fig. 3A, the optical system 210A at least includes a lens barrel portion 216, a collimating lens 212, positioning rings 214a and 214b, a first window 218, and a second window 219. Furthermore, in this and the following embodiments, the first window is used to protect the lens. If the environment is a cleanroom, the first window may be omitted. The collimating lens 212 further includes projecting lugs 212b formed at both ends in a diametrical direction of a lens body 212a of the collimating lens 212. The collimating lens 212 is fixed and positioned to the lens barrel portion 216 via the positioning rings 214a and 214b. The lens barrel portion 216 and the positioning rings 214a, 214b are basically hollow cylinders, and outer diameters of the positioning rings 214a, 214b are configured to fit into an inner diameter of the lens barrel portion 216.

Additionally, the positioning rings 214a and 214b clamp the projecting lugs 212b of the collimating lens 212 from above and below, respectively, thereby fixing the collimating lens 212 to the lens barrel portion 216 via the positioning rings 214a and 214b.

Furthermore, the collimating lens 212 may be made of transparent plastic or polymer material to facilitate the formation of the projecting lugs 212b. The collimating lens 212 may be further coated with an anti-reflective film.

It should be noted that the projecting lugs 212b of the collimating lens 212 are one of main features of the present disclosure. A length of the projecting lug 212b in a transverse direction (perpendicular to an optical axis) can extend to the lens barrel portion 216. The lens barrel portion 216 forms a hole at a position corresponding to the projecting lug 212b (not shown here, see later embodiments), allowing the projecting lug 212b of the collimating lens 212 to pass through the hole of the lens barrel portion 216.

During the assembly of the optical system 210A, the projecting lugs 212b are temporarily fixed to the lens barrel portion 216. According to the detailed description below, an assembler can use an appropriate tool to contact the projecting lugs 212b, thereby allowing the projecting lugs 212b to move in the transverse direction (perpendicular to the optical axis) (see the movement direction A0 in Fig. 2B). Once the center point of the matching join surface MJ is aligned with the focal point of the collimating lens 212, the collimating lens 212 is fixed to the lens barrel portion 216 using an adhesive or the like. In other words, the present disclosure utilizes the projecting lugs 212b to move the collimating lens 212 in the horizontal direction (perpendicular to the optical axis) to determine the center point of the optical system 210A and the matching join surface MJ of the integrated optical circuit, thereby achieving accurate alignment of the optical system 210A and the integrated circuit 250A. The detailed method will be described in detail later.

Additionally, the optical system 210A may further include a first window 218 and a second window 219. The first window 218 covers a first opening of the lens barrel portion 216, and the second window 219 covers a second opening side of the lens barrel portion 216 (toward the optical integrated circuit). The first and second windows 218, 219 may cover both sides of the lens barrel portion 216 to protect the collimating lens 212 inside the lens barrel portion 216. The first and second windows 218, 219 may be made of transparent glass, polymer, plastic, etc., and may further be coated with an anti-reflective film.

In the example shown in Fig. 3A, the first and second windows 218, 219 are embedded within the lens barrel portion 216, so that an outward surface of the first window 218 aligns with a top surface of the lens barrel portion 216, and an outward surface of the second window 219a aligns with a bottom surface of the lens barrel portion 216. However, if the positioning rings 214a, 214b are respectively aligned with top and bottom surfaces of the lens barrel portion 216, the first and second windows 218, 219 may respectively cover the top and bottom surfaces of the lens barrel portion 216.

The second window 219 has the outward surface 219a, and the outward surface of the second window 219a may serve as a focal plane, but also serve as a matching join surface MJ. The outward surface of the second window 219a serving as the matching join surface MJ is configured to be coupled to the integrated circuit 250A.

Additionally, the optical system 210A further includes an alignment sleeve 230, which is hollow and cylindrical. A height of the alignment sleeve 230 is greater than that of the lens barrel portion 216, allowing one end to accommodate the lens barrel portion 216, while a space at the other end permits insertion of a male optical fiber connector (see the schematic diagram of Fig. 1).

According to an embodiment of the present disclosure, the alignment sleeve 230 may further form an alignment sleeve chamfer 230a at an inner end portion of one end. The alignment sleeve chamfer 230a allows the male optical fiber connector (not shown) to smoothly insert into the female optical fiber connector 200A through the one end of the alignment sleeve 230.

Furthermore, as shown, a package body 240 integrally packages the alignment sleeve 230, lens barrel portion 216, collimating lens 212 and the like (also referred to as lenses) of the optical system 210A. For example, a height of the package body 240 may be equal to or greater than the height of the alignment sleeve 230.

In this embodiment, the integrated circuit 250A includes an integrated circuit body 252a, a mounting base 256, and an integrated circuit unit 254a. As shown in Fig. 3A, the mounting base 256 is disposed on an upper surface of the integrated circuit body 252a and includes a receiving region 258a. The receiving region 258a is configured to accommodate the integrated circuit unit 254a. A size (e.g., diameter) of the mounting base 256 is substantially equal to an outer diameter of the lens barrel portion 216.

In this embodiment, the integrated circuit unit 254a may be a detector or emitter. When the female optical fiber connector 200A emits light to the male optical fiber connector, the integrated circuit unit 254a serves as the emitter to emit a light beam. At this time, the light beam emitted from the emitter is converted into a parallel beam by the collimating lens 212 of the optical system 210A, and then enters a collimating lens of the male optical fiber connector. Conversely, when the female optical fiber connector 200A receives a parallel beam from the male optical fiber connector, the integrated circuit unit 254a serves as the detector to detect the light beam focused by the collimating lens 212. At this time, the parallel beam, which is emitted from the emitter and passes through the collimating lens of the male optical fiber connector, is focused by the collimating lens 212 of the lens system of the optical system 210A and then enters the detector.

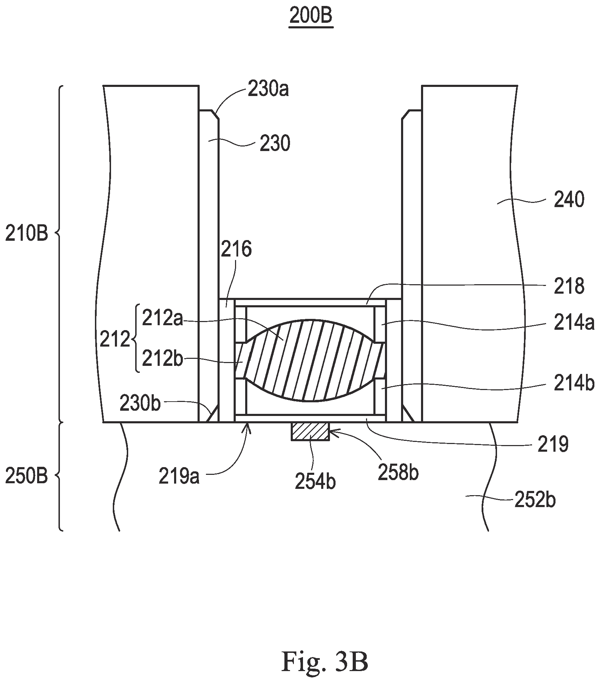

Fig. 3B is a schematic diagram of a modified example of the female optical fiber connector of Fig. 3A. The difference between Fig. 3B and Fig. 3A lies in the configuration of the integrated circuit. Therefore, the same reference symbols in Figs. 3A and 3B generally represent the same components, and the description is omitted herein. Only the differences are described below.

As shown in Fig. 3B, the difference between the female optical fiber connector 200B and the female optical fiber connector 200A of Fig. 3A is that an integrated circuit unit 254b of an integrated circuit 250B is not formed on an upper surface of an integrated circuit body 252b, but is embedded below the upper surface of the integrated circuit body 252b of the integrated circuit 250B. In this embodiment, a receiving region (or receiving hole) 258b is disposed below the upper surface of the integrated circuit 250B, which is also configured to accommodate the integrated circuit unit 254b. The integrated circuit unit 254b is substantially the same as the integrated circuit unit 254a, and the description for Fig. 3A also applies to the integrated circuit unit 254b.

Moreover, the optical system 210A of Fig. 3A and the optical system 210B of Fig. 3B are basically the same in configuration, but there are slight differences. As shown in Figs. 3A and 3B, because the difference between the integrated circuits 250A and 250B is that the integrated circuit units (detectors or emitters) 254a and 254b are located on the upper surface of the integrated circuit body 252a and below the upper surface of the integrated circuit body 252b, respectively. Therefore, in the optical system 210A of Fig. 3A and the optical system 210B of Fig. 3B, the lower surface of the lens barrel portion 216 in Fig. 3A is recessed inward from the lower surface of the alignment sleeve 230 to protect the integrated circuit unit 254a. Conversely, in Fig. 3B, the lower surface of the lens barrel portion 216 is substantially aligned with the lower surface of the alignment sleeve 230 because the integrated circuit unit 254b of the integrated circuit 250B is embedded. Thus, the lower surface of the lens barrel portion 216 in Fig. 3B does not need to be recessed inward from the lower surface of the alignment sleeve 230. However, depending on the specific structure and dimensions of the integrated circuit 250B, even if the integrated circuit unit 254b is embedded, the lens barrel portion 216 may still adopt the structure that is recessed inward from the lower surface of the alignment sleeve 230 as shown in Fig. 3A.

Except for the differences mentioned above, the optical system 210B of Fig. 3B is basically the same as the optical system 210A of Fig. 3A, and all descriptions for the optical system 210A also apply to the optical system 210B of Fig. 3B.

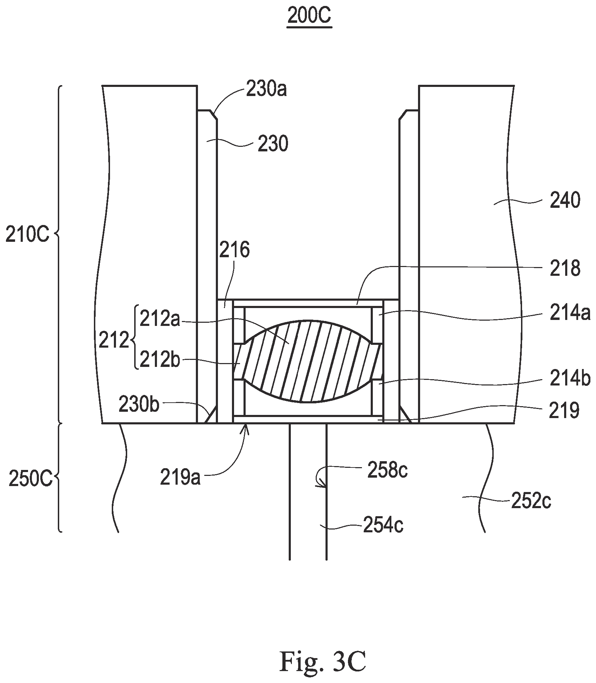

Fig. 3C is a schematic diagram of another modified example of the female optical fiber connector 200A shown in Fig. 3A. The difference between the female optical fiber connector 200C and the female optical fiber connector connectors 200A, 200B of Figs. 3A and 3B is that it uses an integrated optical circuit 250C instead of the integrated circuits 250A, 250B.

In this example, the integrated optical circuit 250C includes an integrated optical circuit body 252c, a receiving region (receiving hole) 258c provided in the integrated optical circuit body 252c, and an integrated optical circuit unit 254c. Here, the integrated optical circuit unit 254c may be a waveguide for transmitting optical signals. The receiving region 258c is configured to accommodate the waveguide serving as the integrated optical circuit unit 254c.

Except for the differences described above, the optical system 210C of Fig. 3C is basically the same or similar to the optical system 210A of Fig. 3A, and all descriptions for the optical system 210A of Fig. 3A also apply to the optical system 210C of Fig. 3C.

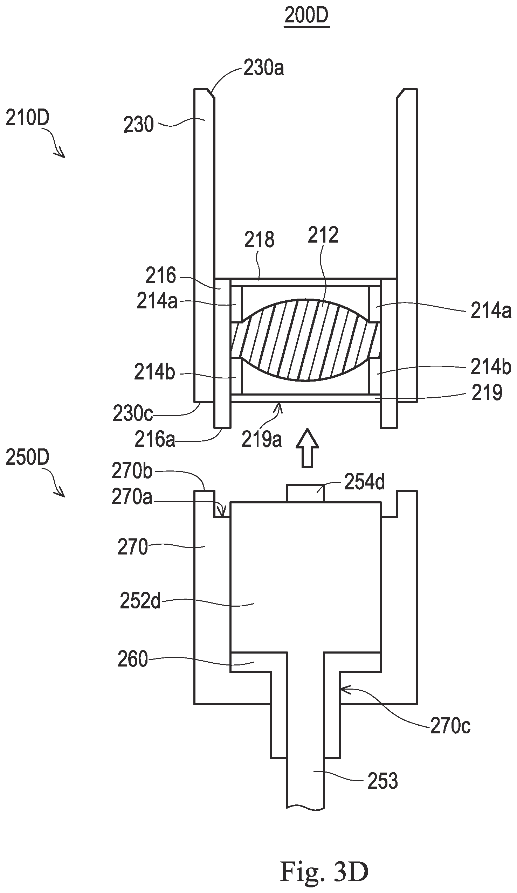

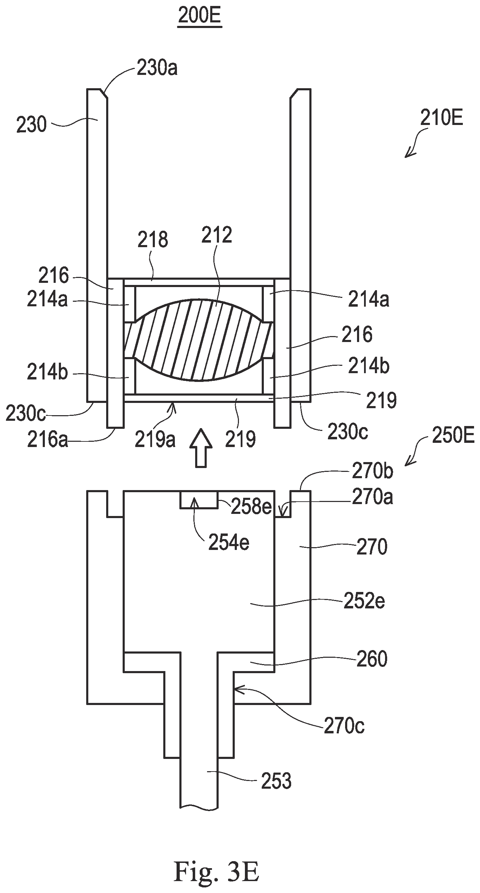

Figs. 3D and 3E are schematic diagrams of further modified examples of the female optical fiber connectors shown in Figs. 3A and 3B. Figs. 3D and 3E illustrate structures of female optical fiber connectors 200D and 200E, respectively. As shown in Figs. 3D and 3E, the same reference symbols as in Figs. 3A and 3B generally represent the same components, and the description is omitted herein. Only the differences are described.

In the explanations based on Figs. 3A to 3C, when manufacturing the package body 240, a circular hole is reserved so that the integrated circuit unit (detector or emitter) 254a, 254b and the integrated optical circuit unit (waveguide) 254c can be positioned at the center point of the circular hole. Moreover, the female optical fiber connectors 200A, 200B, 200C are positioned using the method described in Fig. 2B, so inserting the optical system into the circular hole of the package body 240 ensures that the focal point coincides with the center point of the end surface of the integrated circuit unit (detector or emitter) 254a, 254b, or the integrated optical circuit unit (waveguide) 254c.

Similarly, the female optical fiber connectors 200D and 200E shown in Figs. 3D and 3E are also positioned using the positioning method described in Fig. 2B. A detector or emitter as an integrated circuit unit 254d, 254e is already positioned at a center point of an upper surface of an integrated circuit body 252d, 252e during manufacturing.

As shown in Fig. 3D, the female optical fiber connector 200D also includes an optical system 210D and an integrated circuit 250D. The difference between the optical system 210D of the female optical fiber connector 200D and the optical system 210A of the above embodiment is that the lower surface 216a of the lens barrel portion 216 of the optical system 210A further extends from a lower surface of an alignment sleeve 230c, that is, the alignment sleeve 230 does not cover the entire lens barrel portion 216. Although the structures are slightly different, functions of various parts of the entire optical system 210D are the same as those of the optical system 210A. Here, the package body of the optical system 210A is omitted, but the package body can still be used to enclose the optical system 210D.

Similarly, the optical system 210D of Fig. 3D is basically the same or similar to the optical system 210A of Fig. 3A, and all descriptions for the optical system 210A of Fig. 3A also apply to the optical system 210D of Fig. 3D.

Furthermore, the integrated circuit 250D shown in Fig. 3D may further include a housing 270 and a waterproof and anti-bending portion 260. This structure can also be applied to the integrated circuits 250A, 250B shown in Figs. 3A to 3B. In this embodiment, the integrated circuit body 252d may further include an extension portion 253. The extension portion 253 may be, for example, an optical fiber, waveguide, or wire (for transmitting electrical signals) connected to the integrated circuit body 252d. Moreover, as an example, the housing 270 of the integrated circuit 250D may be configured as a hollow cylindrical structure for accommodating the integrated circuit body 252d, and a lower surface of the housing 270 has a hole 270c through which the extension portion 253 can pass.

Additionally, the upper portion of the housing 270 is configured with an opening to allow the integrated circuit body 252d to be inserted and accommodated therein. The upper surface 270b of the housing 270 forms an opening 270a, and the opening 270a extends downward along an axis of the housing 270 to a predetermined depth.

In this example, the predetermined depth is approximately equal to a length that the lens barrel portion 216 of the optical system 210D extends downward from the lower surface of the alignment sleeve 230c. Furthermore, a radial width (thickness) of the opening 270a is substantially the same as a radial width of the lens barrel portion 216 of the optical system 210D. Furthermore, a radial width of the upper surface 270b is substantially the same as a radial width (thickness) of the alignment sleeve 230. With this structure, when the integrated circuit 250D is inserted into the optical system 210D along the direction indicated by the arrow, the downwardly extending length of the lens barrel portion 216 enters the opening 270a of the housing 270, and the upper surface 270b of the housing 270 abuts against the lower surface of the lens barrel portion 216a of the optical system 210D.

As a result, the optical system 210D can be tightly coupled with the integrated circuit 250D. At this time, the detector or emitter serving as the integrated circuit unit 254d can contact or approach the outward surface 219a of the second window 219, thereby further aligning with the center point of the matching join surface MJ of the optical system 210D. In addition, in this embodiment, since the integrated circuit 250D is inserted into the optical system 210D using a latch-like manner, it is not necessary to form the alignment sleeve chamfer 230b shown in Figs. 3A to 3C on the alignment sleeve 230. Of course, the chamfer may still be formed in this configuration to facilitate insertion. The present disclosure is not particularly limited.

Furthermore, although the integrated circuit unit 254d is illustrated as directly attached to the upper surface of the integrated circuit body 252d shown in Fig. 3D, the mounting base 256 structure shown in Fig. 3A may also be further used to accommodate the integrated circuit unit 254d.

Moreover, regarding the integrated circuit body 252d and extension portion 253 of the integrated circuit 250D, the waterproof and anti-bending portion 260 may be further provided between them and the housing 270. The waterproof and anti-bending portion 260 can prevent water from entering the integrated circuit body 252d and reinforce the extension portion 253 to avoid bending.

In addition, as shown in Fig. 3E, the female optical fiber connector 200E also includes an optical system 210E and an integrated circuit 250E. The optical system 210E of the female optical fiber connector 200E is substantially the same as the optical system 210D of Fig. 3D. Therefore, all descriptions regarding the optical system 210D in Fig. 3D also apply to the optical system 210E.

Furthermore, the difference between the integrated circuit 250E shown in Fig. 3E and the integrated circuit 250D shown in Fig. 3D is that an integrated circuit unit 254e of the integrated circuit 250E is embedded, that is, the integrated circuit unit 254e is embedded in an accommodating area 258e of an integrated circuit body 252e. Apart from this, all descriptions regarding the integrated circuit 250D in Fig. 3D also apply to the integrated circuit 250E in Fig. 3E.

In all the above embodiments and their variations, the center point of the matching join surface MJ of the optical system can be made to coincide with its focal point, thereby allowing the detector, sensor, optical fiber, or waveguide to be accurately aligned with the optical system.

In addition, if necessary, the detector, sensor, or waveguide mentioned in the above examples may also have an anti-reflective film applied to their end surfaces. Furthermore, in the following examples, when the detector, sensor, or waveguide is referred to, even if not specifically stated, it should be understood that such detector, sensor, or waveguide may also have an anti-reflective film applied to their end surfaces.

### Second Embodiment

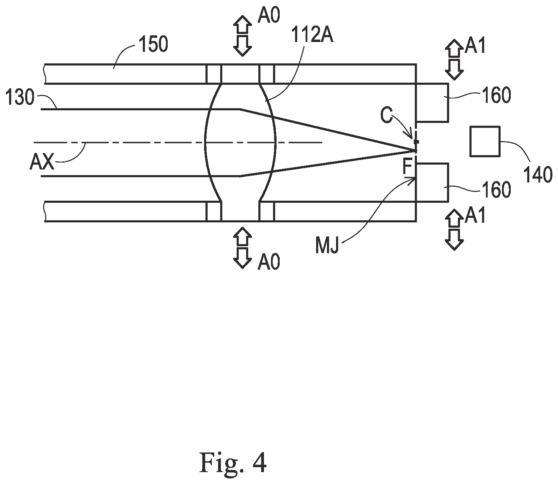

Fig. 4 is a schematic cross-sectional diagram illustrating an optical system of a second embodiment of the present disclosure. In this schematic diagram, identical reference numerals indicate the same or similar components shown in Fig. 2B. The functions of these components are basically the same, so the detailed description can refer to Fig. 2B. Only the differences are described herein.

In the first embodiment, as shown in Figs. 2A and 2B, the center point C of the matching join surface MJ is moved by shifting the collimating optical system 112A, so that the center point C of the matching join surface MJ can coincide with the focal point F. In the second embodiment, a matching join surface carrier 160 is further provided to move the center point C of the matching join surface MJ. In this embodiment, the matching join surface carrier 160 can be basically configured as a hollow cylinder, i.e., an annular matching join surface carrier. As shown in Fig. 4, the matching join surface MJ is mounted on the matching join surface carrier 160. By moving the matching join surface carrier 160 along a movement direction A1, the center point C of the matching join surface MJ can be moved to coincide with the focal point F.

In this embodiment, as detailed in subsequent examples, the matching join surface carrier 160 is initially not fixed directly to a lens barrel portion 150, but instead has a gap, allowing the matching join surface carrier 160 to move along the movement direction A1. This operation can be observed using a monitoring device 140 such as a camera. After the center point C of the matching join surface MJ coincides with a focal point of a parallel beam 130, the matching join surface carrier 160 is fixed to the lens barrel portion 150, for example, using an adhesive, etc. Subsequently, as described with reference to Fig. 1, the first optical integrated circuit 114 of the detector, the emitter, the optical fiber, or the waveguide can be placed on (coupled to) the matching join surface MJ, thereby being coupled to the collimating optical system 112A with alignment to the center point C.

Thus, the focused light beam can enter the subsequently installed detector, optical fiber, or waveguide. Conversely, because light is reversible, light emitted from the emitter, optical fiber, or waveguide through this point will also pass through the collimating optical system 112A and exit as the parallel beam 130.

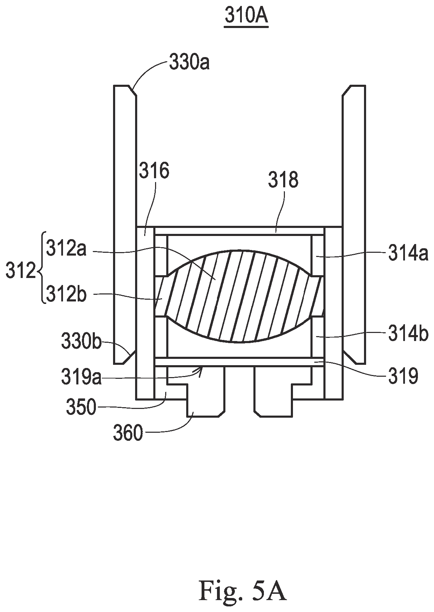

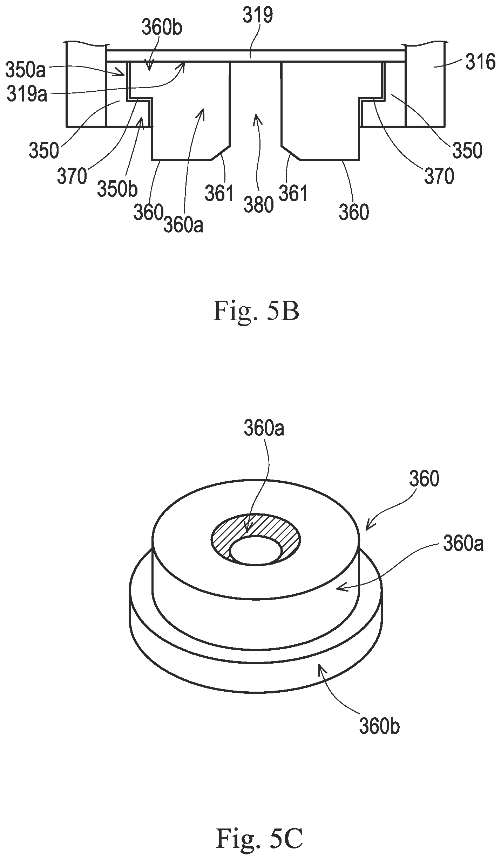

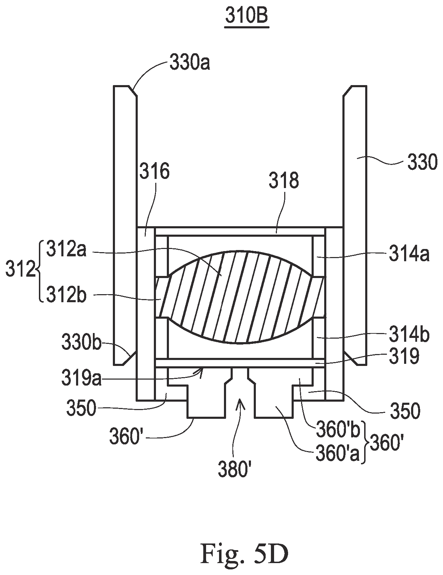

Furthermore, in the following description, Figs. 5A, 5B, and 5C illustrate structures applicable to a detector or emitter, while Fig. 5D illustrates a structure applicable to an optical fiber. The structures shown in Figs. 5A to 5D have been adjusted using the method of Fig. 4. Additionally, if necessary, the collimating optical system 112A may also be moved to improve accuracy.

Fig. 5A is a schematic diagram illustrating an optical system of a female optical fiber connector according to an embodiment of the present disclosure; Fig. 5B is an enlarged partial view of a matching join surface carrier of Fig. 5A; Fig. 5C is a perspective view of the matching join surface carrier of Fig. 5A. As shown in Fig. 5A, the optical system 310A is basically similar in structure to the optical systems 210A to 210E shown in Figs. 3A to 3E. For convenience, a collimating lens 312 is also used as an example of an optical system 310A. In this example, a single collimating lens 312 is used for illustration; similarly, the lens system of the optical system 310A may include a collimating lens including multiple lenses. Furthermore, the lens system of the optical system 310A may further include at least one fine adjustment positioning lens (not shown, see other embodiments described later). As in the previous embodiment, the collimating lens 312 can focus a parallel beam at its focal point, or convert light emitted from its focal point into a parallel beam.

In the example of Fig. 5A, the optical system 310A also includes at least a lens barrel portion 316, a collimating lens 312, positioning rings 314a and 314b, a first window 318, and a second window 319. The collimating lens 312 further includes projecting lugs 312b formed around a periphery of a lens body 312a (circumferentially and perpendicular to an optical axis of the lens) and surrounding the collimating lens 312. The collimating lens 312 is fixed and positioned to the lens barrel portion 316 via the positioning rings 314a and 314b. The lens barrel portion 316 and the positioning rings 314a, 314b are basically hollow cylinders, and outer diameters of the positioning rings 314a, 314b are configured to fit into an inner diameter of the lens barrel portion 316.

Additionally, the positioning rings 314a and 314b clamp the projecting lugs 312b of the collimating lens 312 from above and below, respectively, thereby fixing the collimating lens 312 to the lens barrel portion 316 via the positioning rings 314a and 314b.

Furthermore, similar to the first embodiment, the collimating lens 312 may be made of transparent plastic or polymer material to facilitate the formation of the projecting lugs 312b. Similarly, the collimating lens 312, the first window 318, and the second window 319 may be further coated with an anti-reflective film.

The projecting lugs 312b of the collimating lens 312 have the same or similar structure and function as the projecting lugs 212b of the first embodiment shown in Fig. 3A. Therefore, the details of the projecting lugs 312b can refer to the description of the projecting lugs 212b shown in Fig. 3A, which is omitted herein.

Regarding the first window 318, second window 319, lens barrel portion 316, positioning rings 314a, 314b, alignment sleeve 330, and related structures of the optical system 310A, those are basically the same or similar to the first window 218, second window 219, lens barrel portion 216, positioning rings 214a, 214b, and alignment sleeve 230 of the optical system 210A. The details can refer to the description of each component in Fig. 3A, which are omitted here.

As shown in Fig. 5A, the difference between the optical system 310A in this embodiment and the optical system 210A lies in the inclusion of a matching join surface carrier 360. The matching join surface carrier 360 is used to carry the matching join surface MJ and can move in a direction perpendicular to an optical axis of the optical system 310A, allowing the center point C of the matching join surface MJ to move (see Fig. 4 and its description).

As described above, in order to accurately align the optical system of the female optical fiber connector with the optical integrated circuit, the previous embodiment adjusts the collimating lens 212 of the optical system 210A in the transverse direction (perpendicular to the optical axis) to move the center point C of the matching join surface MJ to coincide with the focal point of the collimating lens 212. In this embodiment, the matching join surface MJ is further moved in the transverse direction (perpendicular to the optical axis) to achieve more accurate alignment. Note that in the above description, the state shown in Fig. 5A represents a state after adjustment is completed using the method described in Fig. 4.

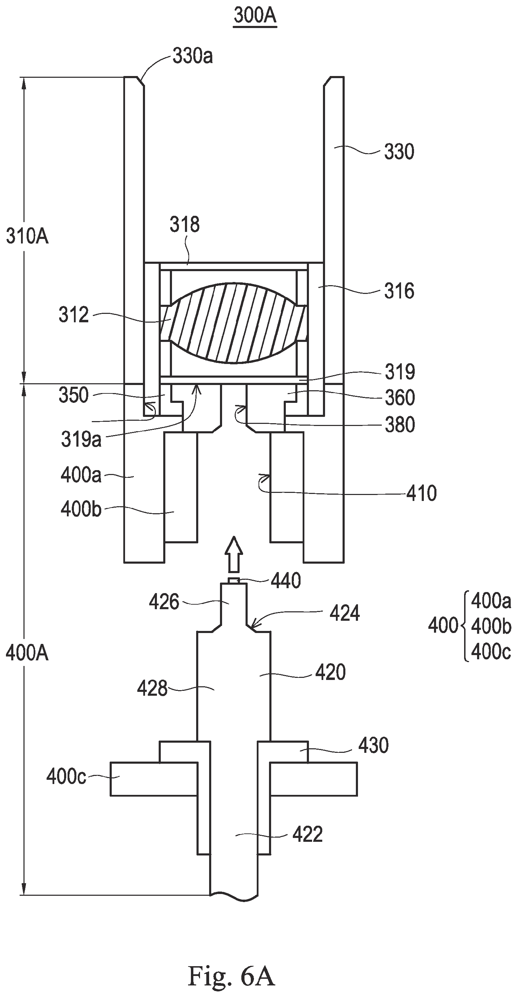

As shown in Figs. 5B and 5C, the matching join surface carrier 360 can be designed as a hollow cylinder, and the matching join surface carrier 360 has a central hole serving as an insertion hole 380 for an optical integrated circuit (see Fig. 6A). The insertion hole 380 has an insertion-hole profile in a cross-sectional view taken along a diametrical direction, and the insertion-hole profile is consistent with a cross-sectional profile of the optical integrated circuit to be inserted. In addition, in order to facilitate insertion of the optical integrated circuit into the insertion hole 380, the insertion hole 380 of the matching join surface carrier 360 is further formed with a chamfer 361 on a side facing the side for mounting the optical integrated circuit.

As an example, the matching join surface carrier 360 may include a matching join surface carrier body 360a and a carrier flange 360b integrally formed. In addition, the cross-sectional profile of the insertion hole 380 may be correspondingly designed in accordance with an external shape (the cross-sectional profile taken along the diametrical direction) of the optical integrated circuit to be inserted. A surface of the matching join surface carrier 360 on the side of the carrier flange 360b may abut against an outward surface of the second window 319a (i.e., matching join surface MJ), and the cylindrical structure of the matching join surface carrier body 360a extends downward from a lower surface of the lens barrel portion 316 along the optical axis toward the bottom of the plane of the figure.

The optical system 310A further includes a matching join surface carrier pressing foot 350 for fixing the matching join surface carrier 360. The matching join surface carrier pressing foot 350 is a structure with an upper opening which has a wall portion 350a and bottom portion 350b integrally formed. As shown in Fig. 5B, the bottom portion 350b has a lower opening with a diameter slightly larger than an outer diameter of the matching join surface carrier body 360a of the matching join surface carrier 360, allowing the matching join surface carrier body 360a to be inserted into the lower opening of the bottom portion 350b. The matching join surface carrier body 360a is inserted from the upper opening and extends out of the lower opening. After the matching join surface carrier body 360a is inserted, the carrier flange 360b of the matching join surface carrier 360 abuts against the bottom portion 350b, thereby temporarily fixing the matching join surface carrier 360 on the matching join surface carrier pressing foot 350. The matching join surface carrier 360 and the matching join surface carrier pressing foot 350 are then placed together into the lens barrel portion 316 and abut against the outward surface of the second window 319a.

At this time, the matching join surface carrier pressing foot 350 is not in complete tight contact with the matching join surface carrier 360, but rather a slight gap 370 exists between the two. After the optical system 310A is assembled, the matching join surface carrier pressing foot 350 and the matching join surface carrier 360 remain somewhat loose. Accordingly, during the adjustment stage, through the gap 370, an assembler may use an appropriate tool to move the matching join surface carrier 360 in a direction perpendicular to the optical axis. Thus, by means of the gap 370, a portion of the matching join surface carrier body 360a extending out from the lens barrel portion 316 can be moved to move the center point C of the matching join surface MJ, thereby adjusting the center point to coincide with the focal point of the collimating lens 312 of the optical system 310A. Thereafter, the matching join surface carrier pressing foot 350 and the matching join surface carrier 360 are fixed together using an adhesive or the like.

In addition, similar to the preceding embodiment, an alignment sleeve chamfer 330a is formed at one end of the alignment sleeve 330 of the optical system 310A. By means of the alignment sleeve chamfer 330a, a male optical fiber connector (not shown) can be smoothly inserted via the one end side of the alignment sleeve 330 into the optical system 310A of the female optical fiber connector. Likewise, if necessary, an alignment sleeve chamfer 330b may also be formed at one end of the alignment sleeve 330 to facilitate the insertion of subsequent component assemblies.

In addition, if the optical system 310A is used in a male optical fiber connector, a structure of the alignment sleeve 330 may be omitted.

Fig. 5D is a schematic diagram illustrating a variation of the optical system of Fig. 5A. An optical system 310B shown in Fig. 5D is basically similar in structure to the optical system 310A shown in Fig. 5A, except that a matching join surface carrier 360' also includes a matching join surface carrier body 360'a and a carrier flange 360'b. Likewise, as shown in Fig. 5D, the same or similar components as those in the optical system 310A are denoted with the same reference numerals, and only the differences will be described hereinafter.

The difference between the matching join surface carrier 360' shown in Fig. 5D and the matching join surface carrier 360 shown in Fig. 5A mainly lies in the structure or cross-sectional profile of the insertion hole 380' inside the matching join surface carrier 360'. Comparing Fig. 5A with Fig. 5B, it can be clearly seen that the insertion hole 380 shown in Fig. 5A has a substantially uniform diameter from one end to the other, and the insertion hole 380' shown in Fig. 5D has a substantially tapered diameter from one end to the other. In this regard, the insertion hole 380 shown in Fig. 5A is suitable for inserting the integrated circuit of the optical integrated circuit, such as the detector or emitter, and the insertion hole 380' shown in Fig. 5D is suitable for inserting the optical fiber.

In addition, although not explicitly depicted in Fig. 5D, there is still the gap 370 between the matching join surface carrier pressing foot 350 and the matching join surface carrier 360', as shown in Fig. 5B, to allow adjustment of the center point of the matching join surface MJ. The adjustment method is the same as described in Fig. 5B, and therefore the description is omitted herein.

In addition, if the optical system 310A or the optical system 310B is used in a male optical fiber connector, the structure of the alignment sleeve 330 may be omitted.

Figs. 6A to 6C are schematic diagrams illustrating configurations of female optical fiber connectors using the optical system of Fig. 5A according to the present disclosure. As shown in Fig. 6A, the female optical fiber connector 300A includes an optical system 310A and an integrated circuit 400A. The detailed structure and description of the optical system 310A may be referred to the above description of Figs. 5A to 5B. The integrated circuit 400A includes a housing 400 and an integrated circuit body 420.

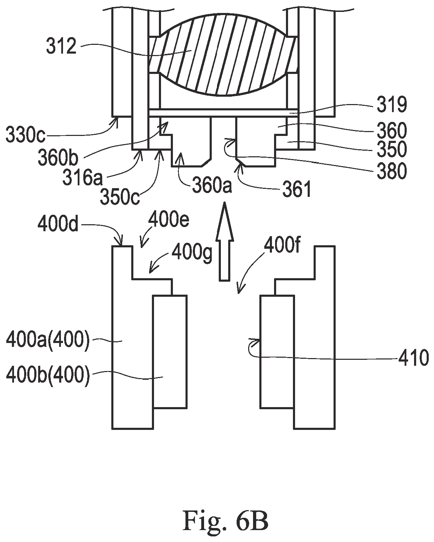

Fig. 6B further illustrates a structural relationship between the optical system 310A and the housing 400. As shown in Figs. 6A and 6B, the housing 400 is basically a hollow cylindrical structure, and its upper portion (relative to Fig. 6B) forms a first opening 400e. A diameter of the first opening 400e is substantially equal to an outer diameter of a lens barrel portion 316 of the optical system 310A. Accordingly, the housing 400 can be inserted into the optical system 310A.

With reference to Fig. 6B, the first opening 400e of the housing 400 extends downward from an upper surface 400d of the housing 400 along an axis of the housing 400 to a predetermined depth and reaches a bottom surface 400g. The first bottom surface 400g has a second opening 400f. A diameter of the second opening 400f is substantially equal to the outer diameter of the matching join surface carrier body 360a of the matching join surface carrier 360 (see Fig. 5B). In addition, the diameter of the second opening 400f is larger than that of the insertion hole 410. Accordingly, the matching join surface carrier body 360a can be inserted into the second opening 400f of the housing 400.

In this example, the predetermined depth from the upper surface 400d to the first bottom surface 400g is substantially equal to a length by which the lens barrel portion 316 of the optical system 310A extends downward from a lower surface of an alignment sleeve 330c. Furthermore, the radial width (or thickness) of the upper surface 400d is substantially equal to the radial width (or thickness) of the alignment sleeve 330. The sum of the radial width of the lower surface 316a of the lens barrel portion 316 and the radial width of the lower surface 350c of the matching join surface carrier pressing foot 350 is substantially equal to the radial width of the first bottom surface 400g. Thus, by means of this structure, after the matching join surface carrier body 360a is inserted into the second opening 400f of the housing 400 in the direction indicated by the arrow, the upper surface 400d of the housing 400 abuts against the lower surface of the alignment sleeve 330c of the optical system 310A, while the lower surface of the lens barrel portion 316a and the lower surface of the matching join surface carrier pressing foot 350c abut against the first bottom surface 400g of the housing 400.

As shown in Figs. 6A and 6B, the housing 400 further includes an outer housing 400a, an inner housing 400b, and a cover 400c. The inner housing 400b is sleeved inside the outer housing 400a, with its upper surface abutting against the lower surface of the matching join surface carrier body 360a, and its lower surface abutting against a waterproof and anti-bending portion 430, which will be described later. The inner housing 400b is also a hollow cylindrical structure and has an insertion hole 410. The insertion hole 380 on the side of the optical system 310A and the insertion hole 410 of the inner housing 400b share the same axis. A cross-sectional profile of an integrated circuit body 420, which will be described later, is consistent with the cross-sectional profile constituted by the insertion holes 380 and 410, so that the integrated circuit body 420 can be inserted into the insertion holes 380 and 410 and fixed within the housing 400 and aligned with the center point of the matching join surface MJ of the optical system 310A. Although the outer housing 400a and the inner housing 400b are distinguished herein, the outer housing 400a and the inner housing 400b may be integrally formed.

In this embodiment, the cross-sectional profile of the integrated circuit body 420 includes a narrow portion 426, a wide portion 428, and an extending portion 422, as well as a corner portion connecting the narrow portion and the wide portion. An integrated circuit unit 440 is disposed on an upper surface of the narrow portion 426. Accordingly, the cross-sectional profile of the insertion holes 380 and 410 may be designed to correspond to the cross-sectional profile of the integrated circuit body 420. However, in this embodiment, the shape, size, and dimensions of the cross-sectional profile of the integrated circuit body 420 are not particularly limited. Therefore, the structural design of the housing 400 is also not particularly limited, provided that the integrated circuit body 420 can be inserted into the housing 400 and reach the optical system 310A.

Further, the cover 400c of the housing 400 has a hole so that the extending portion 422 of the integrated circuit body 420 (e.g., optical fiber, waveguide, wire, etc.) can be inserted into the hole. In addition, before the integrated circuit body 420 is inserted into the hole, the waterproof and anti-bending portion 430 can first be inserted into the hole to prevent external moisture from entering the housing 400 or to prevent bending or deformation of the extending portion 422. Subsequently, the cover 400c equipped with the integrated circuit body 420 and the waterproof and anti-bending portion 430 covers the lower opening of the housing 400 to seal the housing 400.

In this embodiment, the detector or emitter serving as the integrated circuit unit 440 is disposed on the upper surface of the integrated circuit body 420. When the optical system 310A and the housing 400 of the integrated circuit 400A are tightly assembled in the manner described above, the detector or emitter of the integrated circuit unit 440 can contact or approach the outward surface of the second window 319a, thereby being further aligned with the center point of the matching join surface MJ of the optical system 310A.

In addition, this embodiment only illustrates the detector or emitter, which serves as the integrated circuit unit 440, being disposed on the upper surface of integrated circuit body 420. While the mounting base 256 shown in Fig. 3A may be used, the present disclosure is not particularly limited.

In addition, in this embodiment, because the integrated circuit 400A is inserted into the optical system 310A using a latch-like manner, it is not necessary to form the alignment sleeve chamfer 330b shown in Fig. 5A on the alignment sleeve 330. Of course, the chamfer may still be formed in this configuration to facilitate insertion. The present disclosure is not particularly limited. Furthermore, the alignment sleeve 330 can be removed to form a male optical fiber connector.

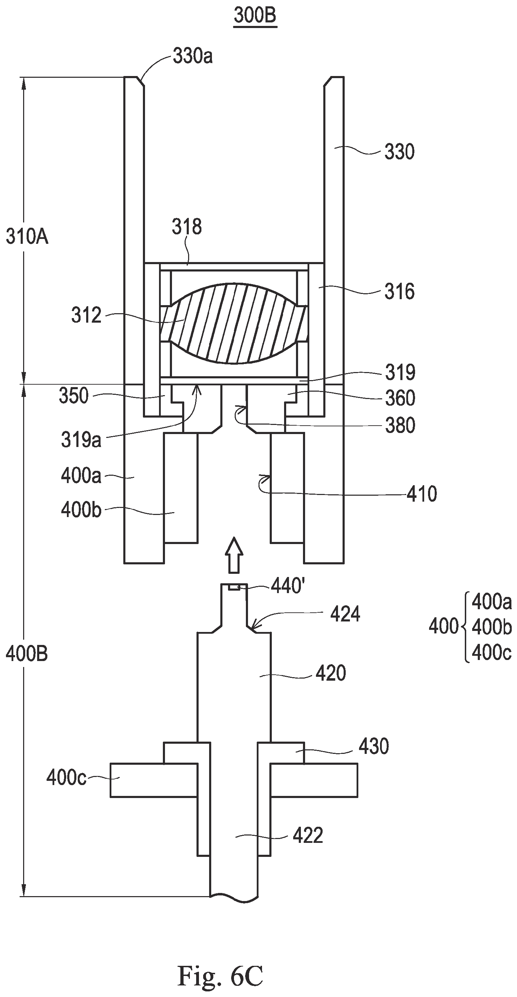

Fig. 6C shows a modified example of Fig. 6A. As shown in Fig. 6C, the female optical fiber connector 300B includes an optical system 310A and an integrated circuit 400B. The structures of Figs. 6A and 6C are basically the same, except that a detector or emitter of an integrated circuit unit 440' is embedded below an upper surface of an integrated circuit body 420. Other components are the same as those described with reference to Figs. 6A and 6B, and the description of which is omitted herein.

Moreover, in the structures shown in Figs. 6A to 6C, prior to final positioning, fine adjustment of the matching join surface carrier 360 is required. Therefore, the diameter of the second opening 400f shown in Fig. 6B should be slightly larger than the outer diameter of the matching join surface carrier body 360a of the matching join surface carrier 360. Similarly, as shown in Fig. 6C, the inner diameter of the inner housing 400b should be slightly larger than the diameter of the integrated circuit body 420.

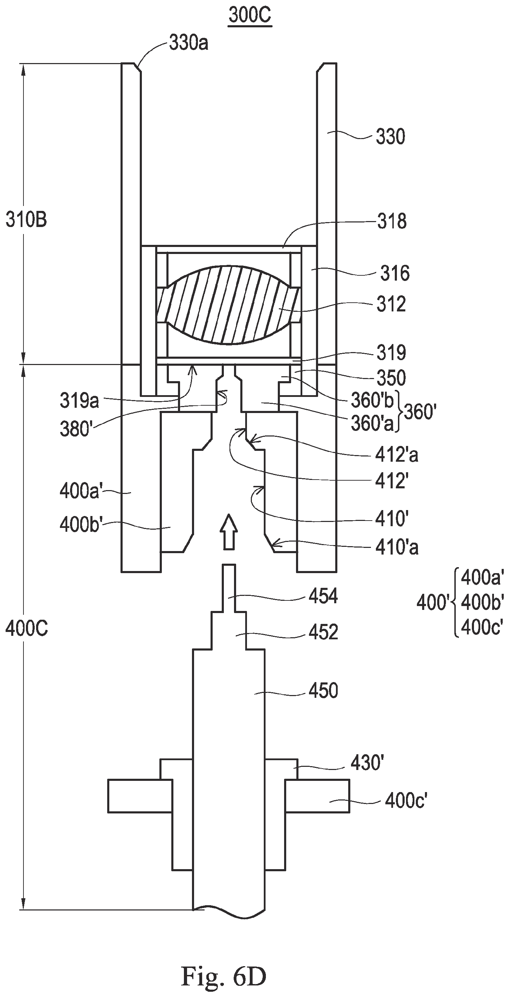

Figs. 6D to 6F are schematic diagrams illustrating configurations of male and female optical fiber connectors using the optical system of Fig. 5D according to the present disclosure. As shown in Fig. 6D, the female optical fiber connector 300C includes an optical system 310B and an integrated optical circuit 400C or optical fiber. The specific structure of the optical system 310B and its description can refer to the explanation of Fig. 5D. The integrated optical circuit 400C or optical fiber includes a housing 400' and an integrated optical circuit body 450 or optical fiber.

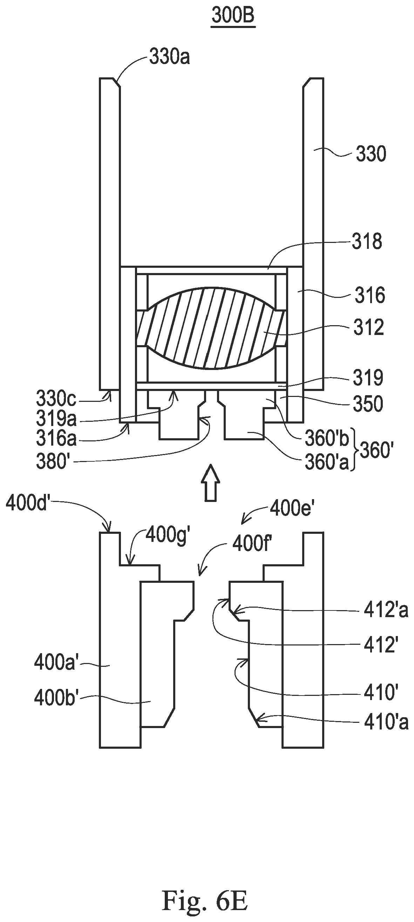

Fig. 6E further illustrates a structural relationship between the optical system 310B and the housing 400'. As shown in Figs. 6D and 6E, the housing 400' is basically a hollow cylindrical structure, and its upper portion (relative to Fig. 6E) forms a first opening 400e'. A diameter of the first opening 400e' is substantially equal to an outer diameter of the lens barrel portion 316 of the optical system 310B, thereby allowing the housing 400' to be inserted into the optical system 310B.

With reference to Fig. 6E, the first opening 400e' of the housing 400' extends downward from an upper surface 400d' of the housing 400' along an axis of the housing 400' to a predetermined depth d and reaches a bottom surface 400g'. The first bottom surface 400g' has a second opening 400f'. A diameter of the second opening 400f' is larger than those of the insertion holes 410', 412' and slightly larger than the outer diameter of the matching join surface carrier body 360'a. Accordingly, the matching join surface carrier body 360'a can be inserted into the second opening 400f' of the housing 400'.

In this example, as shown in Fig. 6E, the predetermined depth d is substantially equal to a length by which the lens barrel portion 316 extends downward from a lower surface of an alignment sleeve 330c. Furthermore, the radial width (or thickness) of the upper surface 400d' is substantially equal to the radial width (or thickness) of the alignment sleeve 330. The sum of the radial width of the lower surface 316a of the lens barrel portion 316 and the radial width of the lower surface 350c of the matching join surface carrier pressing foot 350 is substantially equal to the radial width of the first bottom surface 400g'. Thus, by means of this structure, after the matching join surface carrier body 360'a is inserted into the second opening 400f' of the housing 400' in the direction indicated by the arrow, the upper surface 400d' of the housing 400' abuts against the lower surface of the alignment sleeve 330c of the optical system 310B, while the lower surface of the lens barrel portion 316a and the lower surface of the matching join surface carrier pressing foot 350c abut against the first bottom surface 400g' of the housing 400'.

As shown in Figs. 6D and 6E, the housing 400' further includes an outer housing 400a', an inner housing 400b', and a cover 400c'. The inner housing 400b' is sleeved inside the outer housing 400a', with its upper surface abutting against the lower surface of the matching join surface carrier body 360'a, and its lower surface abutting against a waterproof and anti-bending portion 430'. The inner housing 400b' is also a hollow cylindrical structure and has insertion holes 410' and 412'. In response to the cross-sectional profile of the integrated optical circuit body 450 or optical fiber described later, the diameter of the lower insertion hole 410' of the inner housing 400b' is larger than that of the upper insertion hole 412'.

In addition, the insertion hole 380' on the side of the optical system 310B is coaxial with the insertion holes 410', 412' of the inner housing 400b'. The cross-sectional profile of the integrated optical circuit body 450 or optical fiber corresponds to the cross-sectional profile constituted by the insertion holes 380', 410', and 412', so that the integrated optical circuit body 450 or optical fiber can be inserted into the insertion holes 380', 410', 412' and fixed within the housing 400' and aligned with the center point of the matching join surface MJ of the optical system 310B. Although the outer housing 400a' and inner housing 400b' are distinguished herein, the outer housing 400a' and inner housing 400b' may be integrally formed. Furthermore, a chamfer 412'a may be further formed at a corner of the insertion hole 412', and a chamfer 410'a may be further formed at a corner of the insertion hole 410', so that the integrated optical circuit body 450 or optical fiber can be inserted into the insertion holes 380', 410', 412'.

In this embodiment, the cross-sectional profile of the integrated optical circuit body 450 or optical fiber includes a cladding 452 and a core 454 (illustrated as one example). Accordingly, the cross-sectional profile of the insertion holes 380', 410', and 412' can be designed to correspond to the cross-sectional profile of the integrated optical circuit body 450 or optical fiber. The shape, size, and dimensions of the cross-sectional profile of the integrated optical circuit body 450 or optical fiber are not particularly limited. Therefore, the structure of the housing 400' is also not particularly limited, provided that the integrated optical circuit body 450 or optical fiber can be inserted into the housing 400' and reach the optical system 310B.

Further, the cover 400c' of the housing 400' has a hole so that the integrated optical circuit body 450 or optical fiber can be inserted into the hole. In addition, before the integrated optical circuit body 450 or optical fiber is inserted into the hole, a waterproof and anti-bending portion 430' can be first inserted into the hole to prevent external moisture from entering the housing 400' or to prevent bending or deformation of the optical fiber. Subsequently, the cover 400c' equipped with the integrated optical circuit body 450 or optical fiber and the waterproof and anti-bending portion 430' covers the lower opening of the housing 400' to seal the housing 400'.

When the optical system 310B and the housing 400' of the integrated optical circuit body 450 are tightly assembled as described above, the integrated optical circuit body 450 or optical fiber can contact or approach the outward surface of the second window 319a, thereby further aligning with the center point of the matching join surface MJ of the optical system 310B.

In addition, in this embodiment, because the integrated optical circuit 400C is inserted into the optical system 310B using a latch-like manner, it is not necessary to form the alignment sleeve chamfer 330b shown in Fig. 5D on the alignment sleeve 330. Of course, the chamfer may still be formed in this configuration to facilitate insertion. The present disclosure is not particularly limited.

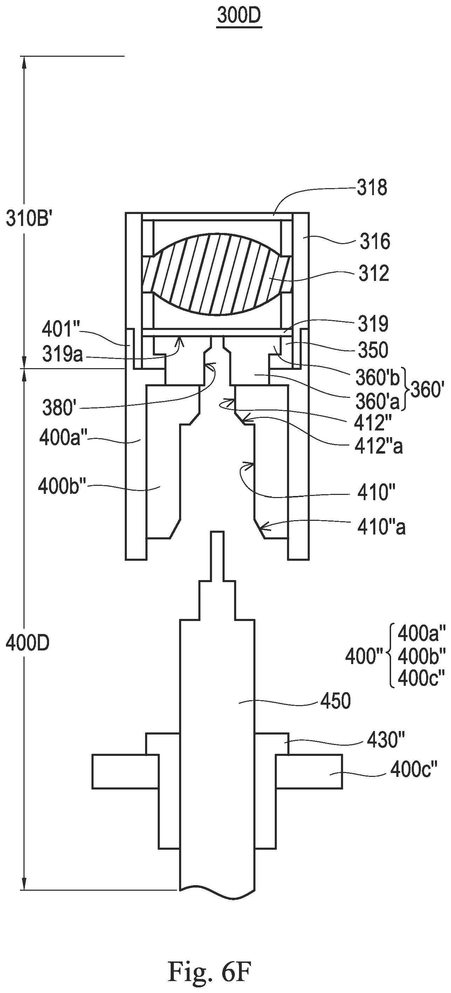

Fig. 6F illustrates a male optical fiber connector 300D including an optical system 310B' and an integrated optical circuit 400D or optical fiber. The structure of Fig. 6F is basically similar to that of Fig. 6D, except that the male optical fiber connector 300D does not include the alignment sleeve 330 of the female optical fiber connector 300A, 300B, or 300C. Accordingly, an outer housing 400a" of a housing 400" also differs in design from the outer housing 400a' of the housing 400' of Fig. 6D. Other components such as the inner housing 400b", cover 400c", chamfers 410"a, 412"a, and waterproof and anti-bending portion 430" have the same structures and functions as the corresponding components in Fig. 6D and are not redundantly described here.

As shown in Fig. 6F, the outer housing 400a" of Fig. 6F is structurally similar to the outer housing 400a of Fig. 6B, the outer housing 400a of Fig. 6C, and the outer housing 400a' of Fig. 6D, but includes a protruding structure 401" extending upward from a periphery of an upper surface of the outer housing 400a". Because the optical system 310B of the male optical fiber connector 300D does not include the alignment sleeve 330, a recess is formed on the lens barrel portion 316 at a position corresponding to the protruding structure 401" so that the protruding structure 401" of the outer housing 400a" can engage with the recess to fix it to the lens barrel portion 316. In addition, a diameter of an opening corresponding to the second opening 400f' in Fig. 6E is slightly larger than an outer diameter of the matching join surface carrier 360'. In this way, the cover 400c" equipped with the integrated optical circuit body 450 and the waterproof and anti-bending portion 430" can cover the lower opening of the housing 400" to seal the housing 400".

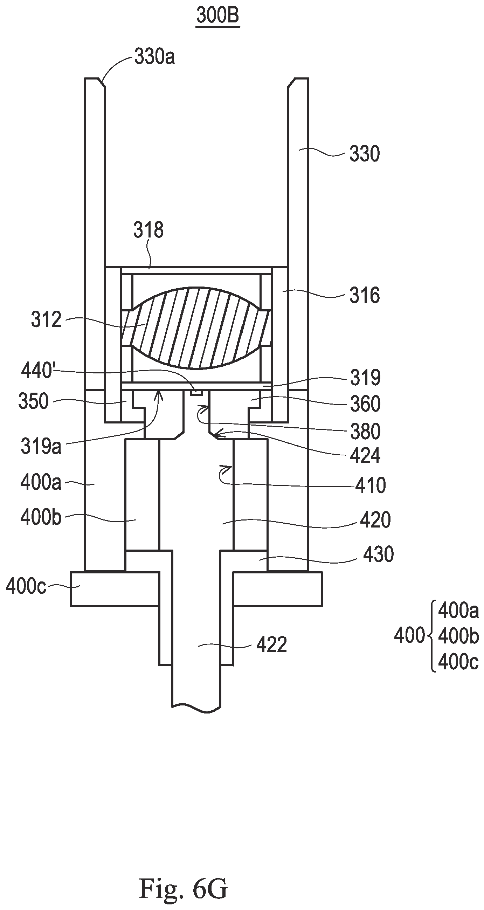

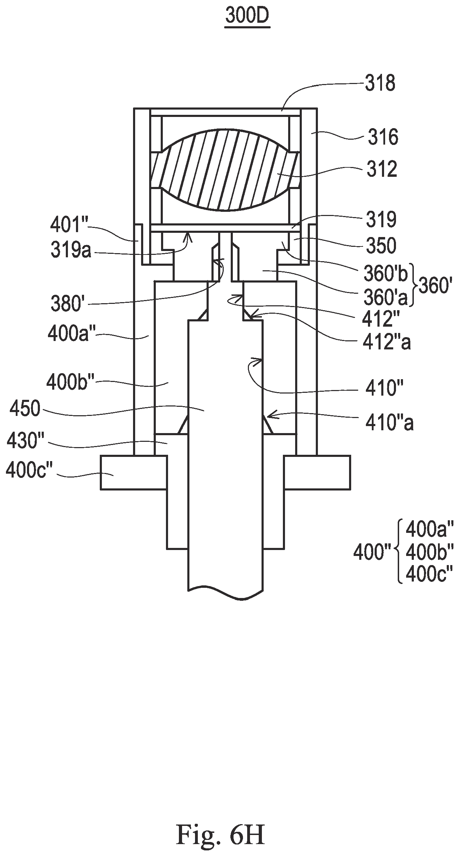

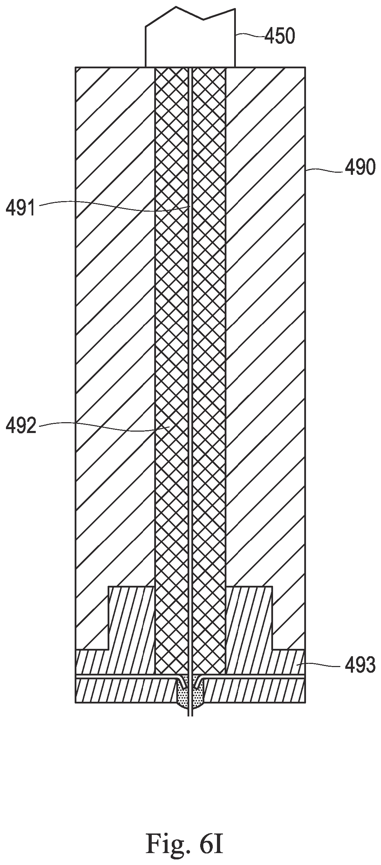

Fig. 6G illustrates a state after the optical integrated circuit 450 or optical fiber is inserted into the female optical fiber connector of Fig. 6C, while Fig. 6H illustrates a state after the optical integrated circuit 450 or optical fiber is inserted into the female optical fiber connector of Fig. 6F. Fig. 6I is a schematic view of a physical contact connector. Because the physical contact connector is not suitable for dusty environments, it preferably used in controlled environments such as computer rooms. To connect to general external spaces, one end can be the physical contact connector while the other end is the expanded beam optical fiber connector, such as the various optical fiber connectors described above. Figs. 6G and 6H (including the embodiments described below) illustrate examples of the expanded beam optical fiber connectors. The integrated optical circuit 450 or optical fiber of the expanded beam optical fiber connectors shown in Figs. 6G and 6H can be further connected to the physical contact connector 490 shown in Fig. 6I. The physical contact connector 490 is suitable for use in controlled environments, where a bare optical fiber 491 is surrounded by a protective layer 492 and positioned by a positioning mechanism 493. The bare optical fiber 491 can be further connected to the optical integrated circuit 450 or optical fiber in the optical fiber connector shown in Figs. 6G or 6H.

### Third Embodiment

In the second embodiment, the center point of the matching join surface is adjusted by using the annular matching join surface carrier provided on the outward surface of the second window of the optical system. In this embodiment, another type of matching join surface carrier is employed to adjust the center point of the matching join surface.

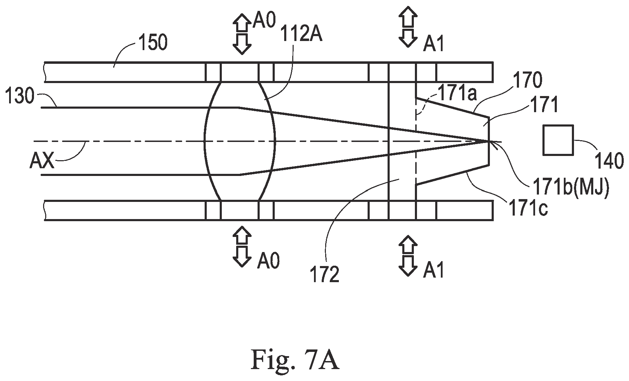

Fig. 7A is a schematic cross-sectional diagram illustrating an optical system of a third embodiment of the present disclosure. In this diagram, the same reference numerals are used to denote components that are the same as or similar to those in Fig. 2B or Fig. 4. The functions of these components are substantially identical, so the detailed descriptions may refer to Figs. 2B and 4. Only the differences are described herein. As shown in Fig. 7A, this embodiment uses a block-shaped matching join surface carrier 170. The block-shaped matching join surface carrier 170 is also suitable for optical signal input and output of an integrated circuit and an integrated optical circuit.

In the second embodiment, as described in Fig. 4, the method for moving the center point C of the matching join surface MJ involves moving the collimating optical system 112A and/or moving the annular matching join surface MJ in the movement direction A0, so that the parallel beam entering the collimating optical system 112A can be focused on the center point C of the matching join surface MJ. In this embodiment, the block-shaped matching join surface carrier 170 and collimating optical system 112A are used instead.

As shown in Fig. 7A, the matching join surface carrier 170 includes a conical portion 171 and a base portion 172. The base portion 172 may be a flattened cylinder with a certain height. The conical portion 171 and the base portion 172 can be bonded to each other using an adhesive or similar means. Without affecting the function of the matching join surface carrier 170, the conical portion 171 and the base portion 172 may also be integrally formed. Furthermore, Fig. 7A illustrates an example in which a bottom surface of the base portion 172 is larger than that of the conical portion 171, and the matching join surface carrier 170 forms a structure having a flange (see examples described later). However, a bottom surface area of the base portion 172 may be equal to that of the conical portion 171.

Moreover, in a profile cut along the diametrical direction, the conical portion 171 of the matching join surface carrier 170 has two parallel surfaces, namely a first surface (the bottom surface of the conical portion) 171a and a second surface (the top surface of the conical portion) 171b. The first surface 171a and second surface 171b are substantially perpendicular to the optical axis AX of the collimating optical system 112A. The second surface 171b serves as the matching join surface MJ. Here, the area of the second surface 171b is smaller than that of the first surface 171a. In addition, the first surface 171a may be connected to the second surface 171b via a third surface 171c (the side surface of the conical portion), and the third surface 171c is an inclined surface. Without affecting the function of the matching join surface carrier 170, the matching join surface carrier 170 may consist solely of the conical portion 171.

In this embodiment, as in the detailed examples later, the matching join surface carrier 170 is initially not directly fixed to the lens barrel portion 150, but has a certain gap (not shown), allowing the matching join surface carrier 170 to move along the movement direction A1. This operation can be observed using the camera or the like as the monitoring device 140 described above. Once the center point C of the matching join surface MJ aligns with the focal point of the parallel beam 130, the matching join surface carrier 170 is fixed to the lens barrel portion 150 using, for example, an adhesive or the like. Subsequently, as illustrated in Fig. 1, the first optical integrated circuit 114 such as the detector, the emitter, the optical fiber, or the waveguide is placed on (coupled to) the matching join surface MJ, thereby being coupled to the collimating optical system 112A with alignment to the center point C.

Thus, the focused light beam can enter the subsequently installed detector, optical fiber, or waveguide. Conversely, because light is reversible, light emitted from the emitter, optical fiber, or waveguide through this point will pass through the collimating optical system 112A and exit as the parallel beam 130.

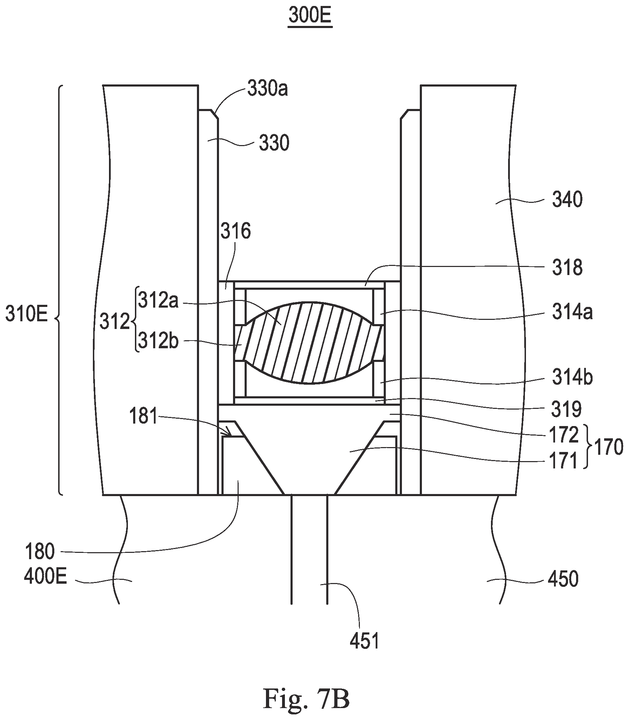

Fig. 7B is a schematic diagram illustrating a female optical fiber connector 300E according to an embodiment of the present disclosure. The optical system 310E shown in Fig. 7B is basically similar to that in Fig. 6A, except that the annular matching join surface carrier 360, 360', etc., is replaced with the block-shaped matching join surface carrier 170. Moreover, the components of the optical system 310E in Fig. 7B can refer to the corresponding descriptions of Figs. 6A to 6F, which are omitted here. The structure shown in Fig. 7B represents the state after adjustment using the method illustrated in Fig. 7A.

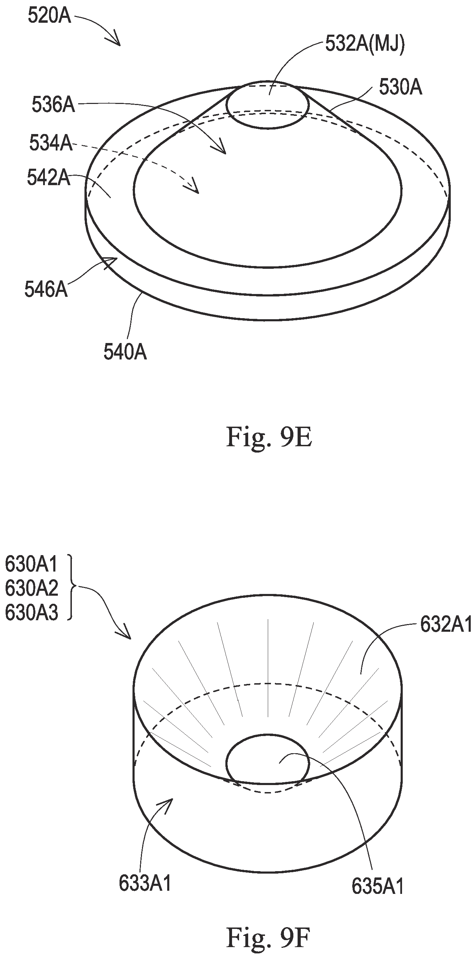

In this embodiment, the block-shaped matching join surface carrier 170 is disposed below the second window 319 in a contact or close manner (relative to the plane of the figure). As shown in Figs. 7A and 7B, the matching join surface carrier 170 includes the conical portion 171 and the base portion 172, with the diameter of the base portion 172 being greater than or equal to the bottom diameter of the conical portion 171. The specific structure of the matching join surface carrier 170 will be further described with reference to Figs. 9E to 9G.

Additionally, a mating member 180, also referred to as a point-package, is provided on a surface of the integrated optical circuit main body 450 of the integrated optical circuit 400E. The mating member 180 is basically a cylinder with a bottom and an open top (toward the side of the optical system 310E). The mating member 180 has a first opening and a second opening. The first opening allows the insertion of the conical portion 171 of the matching join surface carrier 170. When the conical portion 171 of the matching join surface carrier 170 reaches the second opening, it can contact or approach the waveguide 451, etc., disposed in the integrated optical circuit body 450 (Fig. 7B).

Moreover, a cross-section of the mating member 180 cut in the diametrical direction can be a trapezoid or triangle; that is, a top surface 181 of the cross-section of the mating member 180 may be flat or dotted. When the top surface 181 is flat, it is equivalent to an annular structure with width when viewed from above. The specific structure and variations of the mating member 180 will be further described later. Additionally, when viewed from above, the mating member 180 serving as the point-package has a hole in the center, i.e., the above-mentioned second opening corresponds to the position of the detector, the emitter, the optical fiber, or the waveguide of the integrated circuit or integrated optical circuit.

Furthermore, mechanical errors may exist during assembly, so a slight gap can be provided between the alignment sleeve 330 and the package body 340, and between the mating member 180 and the alignment sleeve 330. Finally, the female optical fiber connector calibrated using the method of Fig. 7A is inserted into the packaging hole (i.e., the second opening) of the mating member 180 on the integrated circuit or integrated optical circuit.

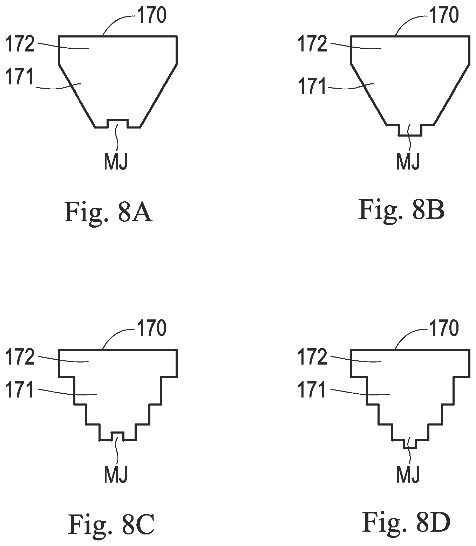

Figs. 8A to 8D are schematic diagrams illustrating several examples of block-shaped matching join surface carriers according to an embodiment of the present disclosure. Figs. 8A and 8B show a block-shaped matching join surface carrier 170 with a conical portion 171 having an inclined surface along a height direction. A top surface of the conical portion 171 in Fig. 8A has a recess, with the bottom of the recess serving as a matching join surface MJ. A top surface of the conical portion 171 in Fig. 8B has a protrusion, which is cylindrical and its surface serves as a matching join surface MJ. Depending on whether the detector or sensor of the integrated circuit coupled to the optical system is disposed on or embedded below a surface of the integrated circuit body, the top surface of the conical portion 171 may be correspondingly formed as a recess or a protrusion.

Figs. 8C and 8D illustrate conical portions 171 of matching join surface carriers 170 with stepped structures along a height direction. A top surface of the conical portion 171 in Fig. 8C (the uppermost layer of the stepped structure, i.e., the surface with the smallest area) has a recess, and the surface of which serves as a matching join surface MJ. A top surface of the conical portion 171 in Fig. 8D (the uppermost layer of the stepped structure, i.e., the surface with the smallest area) has a protrusion, which is cylindrical and its surface serves as a matching join surface MJ.

Therefore, depending on whether the detector or sensor of the integrated circuit coupled to the optical system is disposed on or embedded below the surface, the top surface of the conical portion 171 shown in Figs. 8A to 8D may be correspondingly formed as a recess or a protrusion.

If high precision is not required, the various block-shaped matching join surface carriers 170 may be made of plastic using a method such as hot pressing, injection molding, or 3D printing. Conversely, if high precision is required, a portion of the block-shaped matching join surface carrier 170 near the matching join surface MJ may be made of optical glass or general glass, while a portion of the block-shaped matching join surface carrier 170 farther from the matching join surface MJ may be made of plastic. The plastic and glass portions are then bonded using an adhesive or the like to complete the matching join surface carrier 170. The glass portion may be fabricated using semiconductor processes, such as etching or coating, or covering the entire piece of glass with photoresist material and then exposing to remove unnecessary portions. For example, the conical portion 171 near the matching join surface MJ may be made of glass, and the base portion 172 near the optical system may be made of plastic.

Generally, precision for precision plastic processes is about 10 micrometers (µm), while precision for precision 3D printing is about 2 micrometers (µm). For glass portions, using etching, coating, or photoresist in semiconductor processes, precision may be less than or equal to several micrometers (µm), even less than 1 micrometer (µm).

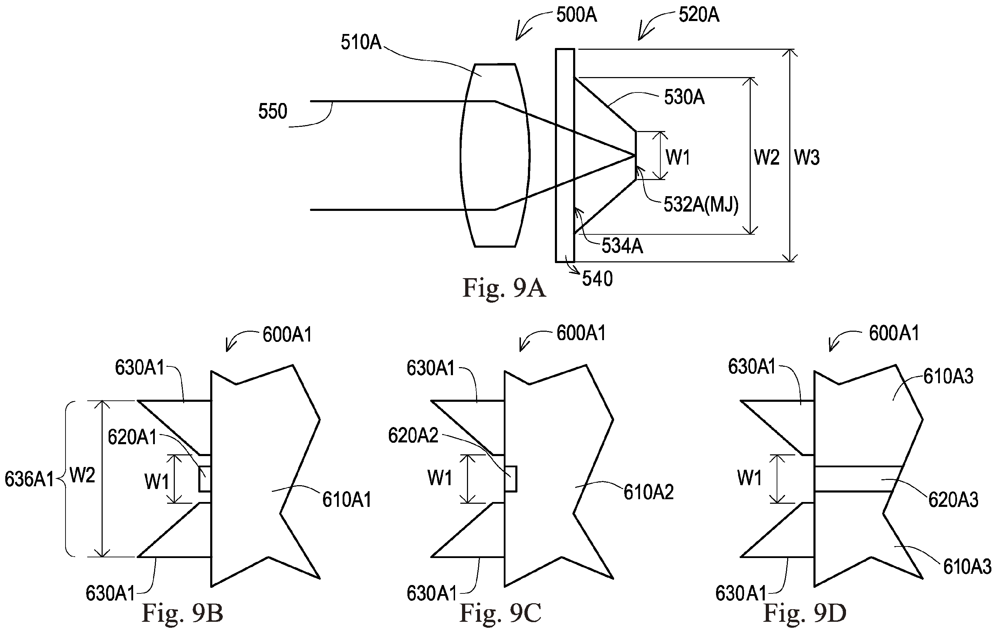

Figs. 9A to 9D are simplified schematic diagrams illustrating configurations of optical fiber connectors according to an embodiment of the present disclosure. Figs. 9E to 9G are schematic perspective and cross-sectional views illustrating a matching join surface carrier and a mating member of an optical integrated circuit in Figs. 9A to 9D. As in the above embodiments, terms such as bottom surface, top surface, upper, and lower are used for relative reference only and do not limit the structure of the present disclosure.

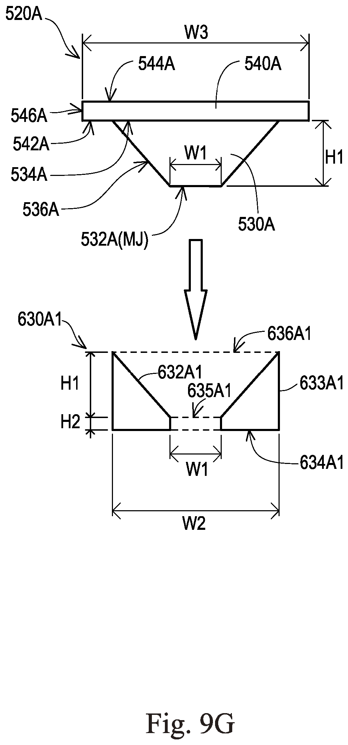

As shown in Fig. 9A, the conical portion 530A of the block-shaped matching join surface carrier 520A has a top surface 532A on a side facing the integrated circuit or integrated optical circuit, which serves as the matching join surface MJ. After the parallel beam 550 is incident on the optical system 500A, it is focused onto the matching join surface MJ (i.e., the top surface 532A of the conical portion 530A of the matching join surface carrier 520A) by the collimating lens 510A of the lens system. The top surface 532A of the matching join surface carrier 520A has a diameter W1, and a bottom surface of the conical portion 534A has a diameter W2, where W2 > W1. The detailed structure of the matching join surface carrier 520A will be described with reference to Figs. 9E and 9G.

Figs. 9B and 9C illustrate simplified structures of integrated circuits, while Fig. 9D illustrates a simplified structure of an integrated optical circuit. As shown in Fig. 9B, the integrated circuit 600A1 has an integrated circuit body 610A1, and an integrated circuit unit 620A1 of the integrated circuit body 610A1 is formed on a surface of the integrated circuit body 610A1 (the side facing the matching join surface MJ). In addition, a mating member 630A1 is formed on the surface of the integrated circuit body 610A1 for mating with the matching join surface carrier 520A on the side of the optical system 500A. The mating member 630A1 has a first opening 636A1 with a diameter W2 equal to the diameter W2 of the bottom surface of the conical portion 534A of the matching join surface carrier 520A.

The integrated circuit 600A2 in Fig. 9C also includes an integrated circuit body 610A2, with its integrated circuit unit 620A2 embedded below a surface of the integrated circuit body 610A2. In addition, the integrated circuit body 610A2 also has a mating member 630A1 for mating with the matching join surface carrier 520A on the side of the optical system 500A. Furthermore, the integrated circuit units 620A1 and 620A2 may be detectors or emitters. An integrated optical circuit 600A3 in Fig. 9D also includes an integrated optical circuit body 610A3, with its integrated optical circuit unit 620A3 formed within the integrated optical circuit body 610A3. The integrated optical circuit unit 620A3 may be an optical fiber or a waveguide. In addition, a mating member 630A1 is formed on the integrated optical circuit body 610A3, for mating with the matching join surface carrier 520A on the side of the optical system 500A. A cross-section of the conical portion 530A of the matching join surface carrier 520A (the cross-section along the diameter) and a cross-section of the mating member 630A1 (the cross-section along the diameter) have the same profile, allowing the conical portion 530A to be inserted into the mating member 630A1. The detailed structure of the mating member 630A1 will be described with reference to Figs. 9F and 9G.

Figs. 9E and 9G illustrate perspective and cross-sectional views of the block-shaped matching join surface carrier 520A according to this embodiment. The matching join surface carrier 520A is composed of the conical portion 530A and the base portion 540A. The conical portion 530A and the base portion 540A may be integrally formed. Generally, due to different precision requirements between the side adjacent to the optical system and the side adjacent to the optical integrated circuit, the conical portion 530A and the base portion 540A may be manufactured separately and then bonded together using an adhesive or similar means.

The conical portion 530A is generally a cone with a bottom surface of the conical portion 534A (a first surface 171a, toward the side of the lens), a top surface of the conical portion 532A (a second surface 171b, serving as a matching join surface MJ and toward the size of the integrated optical circuit or integrated circuit) and a side surface of the conical portion 536A (a third surface 171c). As shown in Fig. 9A, 9E, the diameter W1 of the top surface of the conical portion 532A is less than the diameter W2 of the bottom surface of the conical portion 534A. In addition, the top surface of the conical portion 532A and the bottom surface of the conical portion 534A are substantially parallel. The side surface of the conical portion 536A connects the top surface of the conical portion 532A and the bottom surface 534A to form the conical portion 530A. In addition, the conical portion 530A has a height H1. The conical portion 530A is close to the integrated optical circuit or integrated circuit side and requires higher precision, so it may be made of optical glass or general glass. The glass portion may be made using semiconductor processes, such as etching or coating, or covering the entire piece of glass with photoresist material and then exposing to remove unnecessary portions.

In addition, the base portion 540A is basically a cylinder and has two parallel surfaces, namely a top surface of the base portion 542A and a bottom surface of the base portion 544A, and further has a side surface of the base portion 546A connecting the surface of the base portion 542A and the surface of the base portion 544A, thereby forming the base portion 540A. A diameter of the surface of the base portion 544A and the surface of the base portion 542A is W3. The diameter W3 is greater than the diameter W2, such that the matching join surface carrier 520A forms a structure with a flange at its bottom side. Of course, the diameter W3 of the surface of the base portion 544A and the surface of the base portion 542A may be equal to the diameter W2 of the bottom surface of the conical portion 534A. In addition, as shown in Fig. 7A, the diameter W2 of the bottom surface of the conical portion 534A is less than or equal to the inner diameter of the lens barrel portion 150 of the optical system 112A. The base portion 540A may be formed using plastic, for example by means of hot pressing, injection molding, or 3D printing.

Finally, the conical portion 530A and the base portion 540A are bonded together, for example using an adhesive or similar means to complete the matching join surface carrier 520A. At this time, the bottom surface 534A of the conical portion 530A is bonded to the surface 542A of the base portion 540A.

In addition, Figs. 9F and 9G illustrate schematic structural diagrams of the mating member 630A1 according to this embodiment. The mating member 630A1 is basically a cylinder with a bottom surface and an opening at its upper side (toward the side of the optical system 500A). The mating member 630A1 has a bottom surface 634A1 and a side surface 633A1, and the side opposite to the bottom surface 634A1 is a first opening 636A1 of the mating member 630A1. The mating member 630A1 has the first opening 636A1 and the second opening 635A1, with a diameter of the first opening 636A1 being larger than that of the second opening 635A1. Thus, the mating member 630A1 gradually reduces its diameter downward from the edge side (the first opening 636A1) to the second opening 635A1, thereby forming an inclined surface 632A1 inside the mating member 630A1. A slope of the inclined surface 632A1 is the same as that of the side surface 536A of the conical portion 530A. In addition, inside the mating member 630A1, a cylindrical hole is formed starting from the second opening 635A1. The cylindrical hole has a height H2. Furthermore, the inclined surface 632A1 within the mating member 630A1 has a height H1 along the side surface 633A1. Accordingly, a total height of the entire mating member 630A1 is H1+H2. In some examples, the height H2 of the cylindrical hole may be zero, as shown in the structure of Fig. 9C or 9D. Moreover, the aforementioned cylindrical hole is suitable for accommodating an integrated circuit unit, particularly the integrated circuit unit 620A1 disposed on the surface of the integrated circuit body 610A1 shown in Fig. 9B. The mating member 630A1 may be fabricated using semiconductor photolithography and etching processes, and the etching may include isotropic etching, anisotropic etching, or a combination thereof.

Next, with reference to Figs. 9A to 9D and Fig. 9G, a connection method between the optical system 500A and the integrated circuit 600A1, 600A2, or the integrated optical circuit 600A3 is described. Only the main matching join surface carrier 520A and the mating member 630A1 are illustrated here. When the conical portion 530A of the matching join surface carrier 520A (a portion of the optical system 500A) is inserted into the mating member 630A1 from the direction indicated by the arrow (the integrated circuit 600A1 shown in Fig. 9B as an example), the side surface of the conical portion 536A comes into contact with the inclined surface 632A1 of the mating member 630A1, thereby being fixed.

Furthermore, the top surface of the conical portion of the matching join surface carrier 532A (the matching join surface MJ) will reach the second opening 635A1 of the mating member 630A1. Since the diameter of the top surface 532A of the conical portion is equal to that of the second opening 635A1, the matching join surface carrier 520A can only be inserted to the position of the second opening 635A1. At this time, the center point of the matching join surface MJ will align with the integrated circuit unit 620A1 of the integrated circuit 600A1 (the same applies to the integrated circuit 600A2 and the integrated optical circuit 600A3). Meanwhile, the periphery of the first opening 636A1 of the mating member 630A1 will abut against the surface of the base portion 542A. In this way, mating between the optical system of the optic fiber connector and the integrated circuit is completed.

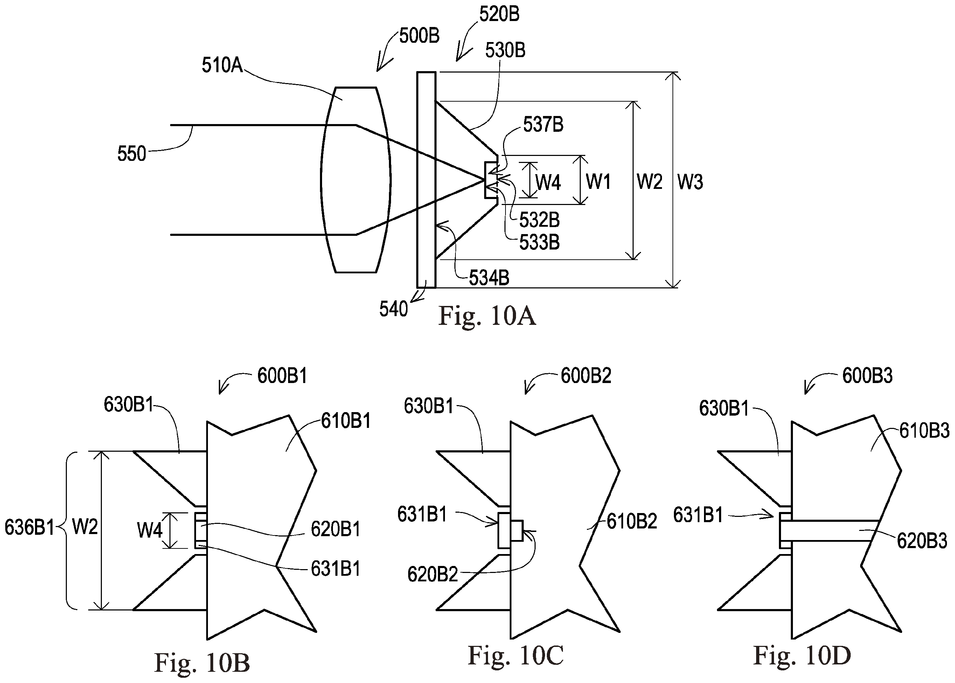

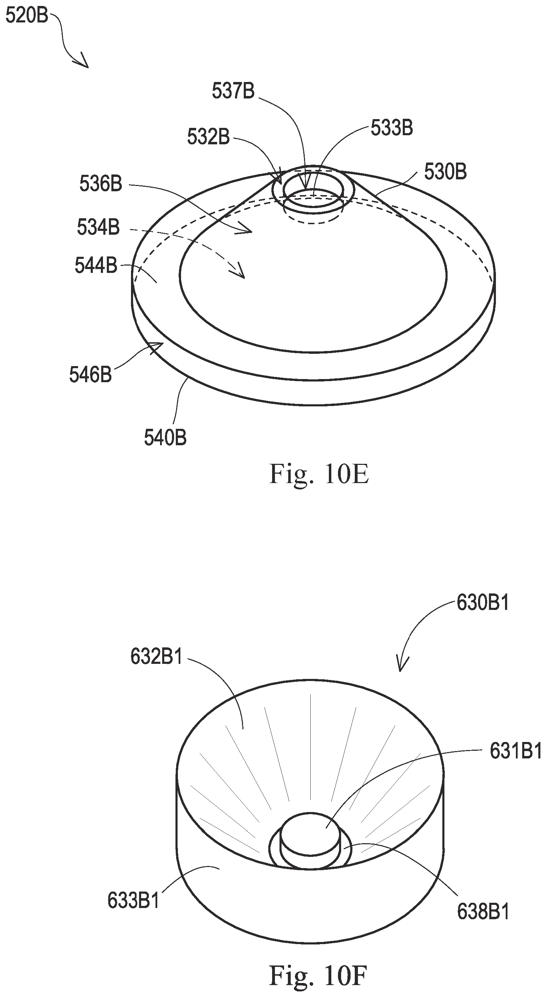

Figs. 10A to 10D are simplified schematic diagrams illustrating configurations of optical fiber connectors according to an embodiment of the present disclosure. Figs. 10E to 10G are schematic perspective and cross-sectional views illustrating a matching join surface carrier and a mating member in Figs. 10A to 10D. Figs. 10A to 10G represent variations of Figs. 9A to 9G, and the following description explains only the differences.

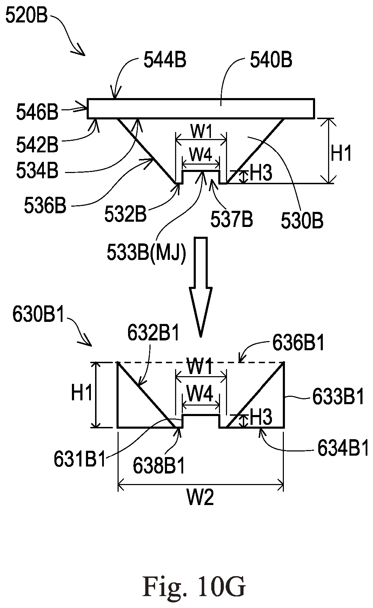

As shown in Fig. 10A, the conical portion 530B of the block-shaped matching join surface carrier 520B has a recess 537B on a side facing the integrated circuit or integrated optical circuit, and the recessed bottom surface 533B serves as the matching join surface MJ. After the parallel beam 550 is incident on the optical system 500B, it is focused onto the matching join surface MJ (i.e., the recessed bottom surface 533B of the conical portion 530B of the matching join surface carrier 520B) by the collimating lens 510A. A diameter of a top surface 532B of a conical portion 530B of the matching join surface carrier 520B is W1, and a diameter of the bottom surface is W2, and a diameter of the recessed bottom surface is W4, where W2 > W1 > W4. The detailed structure of the matching join surface carrier 520B will be described with reference to Figs. 10E and 10G.

In addition, Figs. 10B and 10C illustrate simplified structures of integrated circuits, and Fig. 10D illustrates a simplified structure of an integrated optical circuit. As shown in Fig. 10B, the integrated circuit 600B1 has an integrated circuit body 610B1, and an integrated circuit unit 620B1 of the integrated circuit body 610B1 is formed on a surface of the integrated circuit body 610B1 (the side facing the matching join surface MJ). In addition, a mating member 630B1 is formed on the surface of the integrated circuit bodies 610B1, 610B2 and the integrated optical circuit body 610B3 for mating with the matching join surface carrier 520B on the side of the optical system 500B. The mating member 630B1 has a first opening 636B1, which has a diameter W2 equal to the diameter W2 of the bottom surface of the conical portion 534B. In addition, the bottom surface of the inner side of the mating member 630B1 has a protrusion 631B1.

An integrated circuit unit 620B2 of an integrated circuit 600B2 in Fig. 10C is embedded below the surface of the integrated circuit body 610B2. Moreover, the integrated circuit body 610B2 also has the mating member 630B1 for mating with the matching join surface carrier 520B on the side of the optical system 500B. The integrated optical circuit 600B3 in Fig. 10D also has an integrated optical circuit body 610B3. When an integrated optical circuit unit 620B3 is a waveguide, it is formed within the integrated optical circuit body 610B3, and a front end of the waveguide may protrude from a surface of the integrated optical circuit body 610B3. This can be achieved by etching to make it protrude. The semiconductor process allows highly precise control. Furthermore, the integrated optical circuit body 610B3 is also formed with the mating member 630B1 for mating with the matching join surface carrier 520B on the side of the optical system 500B. The cross-section (along the diameter) of the conical portion 530B of the matching join surface carrier 520B is identical to the cross-section (along the diameter) of the mating member 630B1, allowing the conical portion 530B to be inserted into the mating member 630B1. The detailed structure of the mating member 630B1 will be described with reference to Figs. 10F and 10G.

Figs. 10E and 10G illustrate perspective and cross-sectional views of the block-shaped matching join surface carrier 520B according to this embodiment. The matching join surface carrier 520B is composed of the conical portion 530B and the base portion 540B. The conical portion 530B and the base portion 540B may be integrally formed. Generally, due to different precision requirements between the side adjacent to the optical system and the side adjacent to the optical integrated circuit, the conical portion 530B and the base portion 540B may be manufactured separately and then bonded together using an adhesive or similar means. Furthermore, the base portion 540B is substantially the same in structure as the base portion 540A, while the conical portion 530B differs from the conical portion 530A in that it has a recess 537B.

The top surface of the conical portion 532B , the bottom surface 534B of the conical portion, and the side surface 536B of the conical portion are basically the same as the top surface of the conical portion 532A, the bottom surface of the conical portion 534A, and the side surface of the conical portion 536A shown in Figs. 9E and 9G. The detailed structure thereof can be referred to the descriptions of Figs. 9E and 9G. Here, a central portion of the top surface of the conical portion 532B has a recess 537B, and the recess has a recessed bottom surface 533B. The recess 537B is formed as an opening from the top surface of the conical portion 532B toward the interior of the conical portion 530B, extending to the recessed bottom surface 533B. This recess 537B has a height H3 and a diameter W4. In addition, the base portion 540B is basically the same as the base portion 540A shown in Figs. 9E and 9G, so its detailed structure can be referred to the description of the base portion 540A. Finally, similarly, the conical portion 530B and the base portion 540B are bonded together, such as using an adhesive or similar means, to complete the matching join surface carrier 520B. At this time, the bottom surface of the conical portion 534B is bonded to the top surface 542B of the base portion 540B.

In addition, Figs. 10F and 10G illustrate schematic structural diagrams of the mating member 630B1 according to this embodiment. The mating member 630B1 basically has a bottom and an opening at its upper side (toward the side of the optical system 500B). The mating member 630B1 has a bottom surface 634B1 and a side surface 633B1, and the side opposite to the bottom surface 634B1 is a first opening 636B1 of the mating member 630B1. The mating member 630B1 has the first opening 636B1 and the inner bottom surface 638B1. A diameter W2 of the first opening 636B1 is larger than a diameter W1 of the inner bottom surface 638B1. Thus, the mating member 630B1 gradually reduces its diameter downward from the edge side (the first opening 636B1) to the inner bottom surface 638B1, thereby forming an inclined surface 632B1 inside the mating member 630B1. A slope of the inclined surface 632B1 is the same as that of the side surface 536B of the conical portion 530B. In addition, inside the mating member 630B1, a protrusion 631B1 is formed starting from the inner bottom surface 638B1. The protrusion 631B1 has a height H3. Furthermore, the inclined surface 632B1 within the mating member 630B1 has a height H1 along the side surface 633B1. Moreover, the depth H3 is equal to the height H3 of the recess 537B of the conical portion of the matching join surface carrier 520B, so their profiles are consistent. Thus, the protrusion 631B1 of the mating member 630B1 may be embedded into the recess 537B. In addition, the recess 537B is suitable for accommodating an integrated circuit unit, particularly the integrated circuit unit 620B1 disposed on the surface of the integrated circuit body 610B1 shown in Fig. 10B.

Next, with reference to Fig. 10G, a connection method between the optical system 500B and the integrated circuit 600B1, 600B2, or the integrated optical circuit 600B3 is described. Only the main matching join surface carrier 520B and the mating member 630B1 are illustrated here. When the conical portion 530B of the matching join surface carrier 520B (a portion of the optical system 500B) is inserted into the mating member 630B1 from the direction indicated by the arrow, the side surface 536B of the conical portion 530B comes into contact with the inclined surface 632B1 of the mating member 630B1, thereby being fixed.

Furthermore, the recess 537B of the top surface 532B of the conical portion of the matching join surface carrier 520B will reach the protrusion 631B1 on the inner side of the mating member 630B1. Thus, the protrusion 631B1 on the inner side of the mating member 630B1 will be embedded into the recess 537B of the matching join surface carrier 520B. At this time, the center point of the matching join surface MJ will align with the integrated circuit unit 620B1 of the integrated circuit 600B1 (the same applies to the integrated circuit unit 620B2 of the integrated circuit 600B2 and the integrated optical circuit unit 620B3 of the integrated optical circuit 600B3). Meanwhile, the periphery of the first opening 636B1 of the mating member 630B1 will abut against the surface 542B of the base portion 540B of the matching join surface carrier 520B. In this way, mating between the optical system of the optical fiber connector and the integrated circuit is completed. In another embodiment, the periphery of the first opening 636B1 of the mating member 630B1 does not need to abut against the surface 542B of the base portion 540B of the matching join surface carrier 520B.

In addition, for general precision detectors or emitters of integrated circuits, the matching join surface carrier 520B may be manufactured by precision plastic molding methods, such as hot pressing, injection molding, or precision 3D printing. However, for precision integrated optical circuits (optical fibers or waveguides), such as when a cross-section of the waveguide is about 0.4 micrometers (µm) × 0.2 micrometers (µm), the matching join surface carrier 520B is preferably made of glass or optical glass. Moreover, the recess 537B may be formed by etching of a semiconductor process. Of course, the recess 537B may be fabricated using photoresists and repeated exposure techniques.

Furthermore, although the cross-section of the waveguide is only about 0.4 micrometers (µm) × 0.2 micrometers (µm), the diameters W4 of both the recess 537B of the top surface of the conical portion of the matching join surface carrier 520B and the protrusion 631B1 of the mating member 630B1 may be slightly larger, such as by several micrometers (µm). The key point is to locate the center point. As long as the recess 537B and the protrusion 631B1 are sufficiently accurate, the center point will be in the same position. Therefore, if the diameter W4 is slightly larger by several micrometers (µm), fabrication becomes relatively easier, and the cost can be slightly reduced.

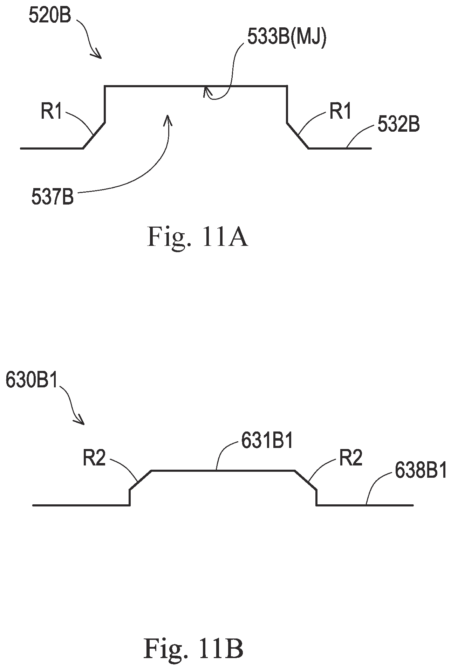

In addition, Figs. 11A and 11B are enlarged diagrams illustrating a recess of a matching join surface carrier and a protrusion of a mating member. Regarding the recess 537B of the top surface of the conical portion of the matching join surface carrier 520B and the protrusion 631B1 of the mating member 630B1, in order to facilitate the insertion of the matching join surface carrier 520B in the optical system 500B into the mating member 630B1 of the optical integrated circuit, a chamfer R1 may be formed at a corner of the recess 537B of the top surface of the conical portion of the matching join surface carrier 520B, as shown in Fig. 11A, or a chamfer R2 may be formed at a corner of the protrusion 631B1 of the mating member 630B1, as shown in Fig. 11B. In this way, the matching join surface carrier 520B may be more easily inserted into the mating member 630B1.

However, dimensions of the chamfers R1 and R2 are very small, making them difficult to process by mechanical machining (e.g., using a chamfering milling cutter). Therefore, a more suitable method is to etch the corners of the recess 537B and the protrusion 631B1 with strong acid or weak acid. At this time, in addition to the corners of the recess 537B and the protrusion 631B1 being etched, adjacent portions may also be etched. Therefore, consideration may be given to the etching thickness (change in diameter) of the recess 537B and the protrusion 631B1, and the thickness expected to be etched away may be compensated for in advance when fabricating the recess 537B and the protrusion 631B1.

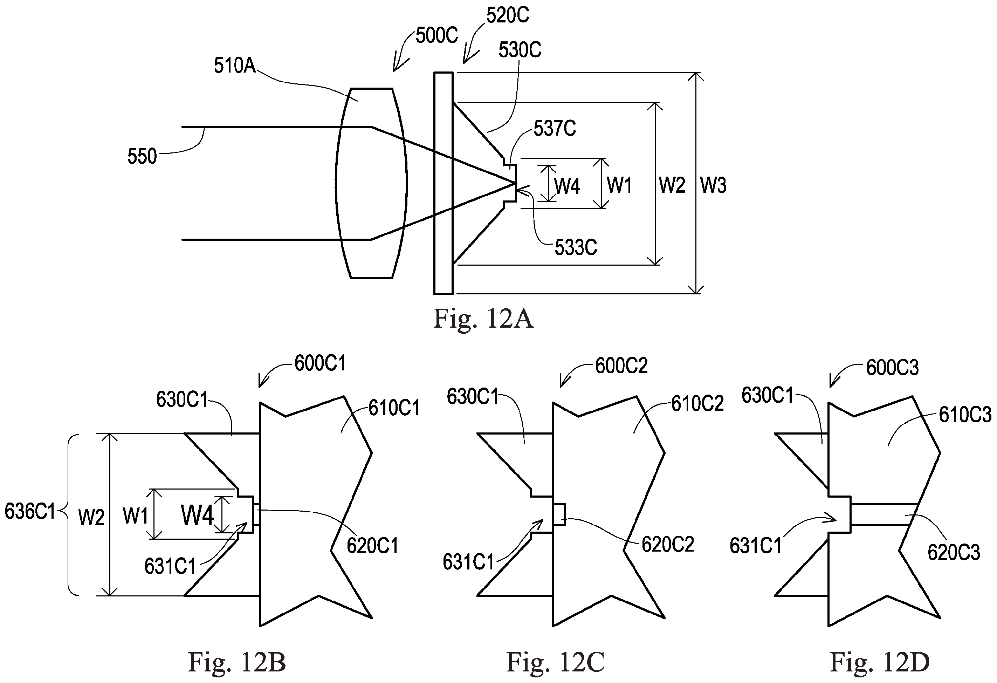

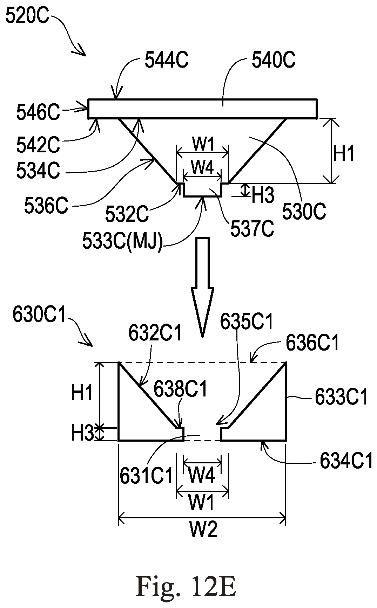

Figs. 12A to 12D are simplified schematic diagrams illustrating configurations of optical fiber connectors according to an embodiment of the present disclosure. Fig. 12E illustrates a cross-sectional view of a matching join surface carrier and a mating member. Figs. 12A to 12E are variations of Figs. 10A to 10G. In the following description, identical or similar components are denoted with the same reference numerals, and only the differences are described.

As shown in Fig. 12A, the conical portion 530C of the block-shaped matching join surface carrier 520C has a protrusion 537C whose protrusion surface 533C is on a side facing the integrated circuit or integrated optical circuit, which serves as the matching join surface MJ. After the parallel beam 550 is incident on the optical system 500C, it is focused onto the matching join surface MJ (i.e., the protrusion surface 533C of the conical portion 530C of the matching join surface carrier 520C) by the collimating lens 510A.

In addition, Figs. 12B and 12C illustrate simplified structures of integrated circuits, and Fig. 12D illustrates a simplified structure of an integrated optical circuit. These are basically similar to the simplified schematic diagrams of the integrated circuits shown in Figs. 10B and 10C and the simplified schematic diagram of the integrated optical circuit shown in Fig. 10D, with the difference being the structure of the mating member 630C1.

As shown in Figs. 12B to 12D, the integrated circuits 600C1, 600C2 and the integrated optical circuit 600C3 correspond to the integrated circuits 600B1, 600B2 and the integrated optical circuit 600B3 shown in Figs. 10B to 10D, respectively, and the integrated circuit bodies 610C1, 610C2 and the integrated optical circuit body 610C3 correspond to the integrated circuit bodies 610B1, 610B2 and the integrated optical circuit body 610B3 shown in Figs. 10B to 10D, respectively, and the integrated circuit units 620C1, 620C2 and the integrated optical circuit unit 620C3 correspond to the integrated circuit units 620B1, 620B2 and the integrated optical circuit unit 620B3 in Figs. 10B to 10D, respectively, and their description is omitted herein. In addition, a mating member 630C1 is formed on a surface of the integrated circuit bodies 610C1, 610C2 and the integrated optical circuit body 610C3 for mating with the matching join surface carriers 520C on the side of the optical system 500C. The structure of the mating member 630C1 will be described below with reference to Fig. 12E.

As shown in Fig. 12E, the conical portion 530C of the matching join surface carrier 520C and its bottom surface of the conical portion 534C, the top surface 532C of the conical portion, the side surface of the conical portion 536C, and the like have the same structure as the conical portion 530B of the matching join surface carrier 520B and its bottom surface of the conical portion 534B, the top surface of the conical portion 532B, the side surface 536B of the conical portion, and the like. The base portion 540C and its top surface of the base portion 542C, bottom surface of the base portion 544C, and side surface of the base portion 546C have the same structure as the base portion 540B of the matching join surface carrier 520B and its top surface of the base portion 542B, bottom surface of the base portion 544B, and side surface of the base portion 546B. Thus, their description is omitted herein.

The difference between the conical portion 530C and the conical portion 530B lies in that a central portion of the top surface of the conical portion 532C has a protrusion 537C, and the protrusion 537C has a protrusion surface 533C. The protrusion 537C has a height H3 and a diameter W4. Furthermore, the base portion 540C is basically the same as the base portion 540C shown in Figs. 10E and 10G, so its detailed description can be referred to the description of the base portion 540B. Finally, similarly, the conical portion 530C and the base portion 540C are bonded together, such as using an adhesive or similar means, to complete the matching join surface carrier 520C. At this time, the bottom surface of the conical portion 534C is bonded to the surface of the base portion 542C.

In addition, Fig. 12E also illustrates a schematic structural diagram of the mating member 630C1 according to this embodiment. The mating member 630C1 is basically a cylinder with a bottom surface and an opening at its upper side (toward the side of the optical system 500C). The mating member 630C1 has a bottom surface 634C1, an inner bottom surface 638C1, and a side surface 633C1, and the side opposite to the bottom surface 634C1 is a first opening 636C1 of the mating member 630C1. The inner bottom surface 638C1 has a diameter W1, and the center of the inner bottom surface 638C1 has a second opening 635C1 with a diameter of W4. The inner bottom surface 638C1 is parallel to the bottom surface 634C1, and a distance between the two is H3, corresponding to the height H3 of the protrusion 537C of the matching join surface carrier 520C. Furthermore, the diameter of the first opening 636C1 (equal to the diameter W2 of the bottom surface 534C of the conical portion 530C) is larger than the diameter of the second opening 635C1 (equal to the diameter W4 of the protrusion 537C). Thus, the mating member 630C1 gradually reduces its diameter downward from the edge side (the first opening 636C1) to the second opening 635C1, thereby forming an inclined surface 632C1 inside the mating member 630C1. A slope of the inclined surface 632C1 is the same as that of the side surface of the conical portion 536C. A vertical distance H1 from the first opening 636C1 to the second opening 635C1 is equal to the height H1 of the conical portion. In addition, inside the mating member 630C1, a cylindrical hole is formed starting from the second opening 635C1 of the inner bottom surface 638C1 and extending toward the bottom surface 634C1 of the mating member 630C1. The cylindrical hole has a height H3, corresponding to the height H3 of the protrusion 537C. Therefore, a total height of the mating member 630C1 is the sum of H1 and H3. Moreover, the cylindrical hole is suitable for accommodating an integrated circuit unit, particularly the integrated circuit unit 620C1 disposed on the surface of the integrated circuit body 610C1 shown in Fig. 12B.

In addition, if the mating member 630C1 does not have the structure corresponding to the height H3, i.e., if the mating member 630C1 is manufactured only with the portion having the height H1, as shown in Fig. 12D, the recess 631C1 may be formed on the surface of the optical integrated circuit 610C3, allowing the protrusion 537C to be placed into the recess 631C1.

Next, with reference to Fig. 12E, when the conical portion 530C of the matching join surface carrier 520C (a portion of the optical system 500C) is inserted into the mating member 630C1 from the direction indicated by the arrow, the side surface of the conical portion 536C comes into contact with the inclined surface 632C1 of the mating member 630C1, thereby being fixed. Furthermore, the protrusion 537C of the top surface of the conical portion 532C of the matching join surface carrier 520C will reach the recess 631C1 on the inner side of the mating member 630C1. In this way, the protrusion 537C of the matching join surface carrier 520C will be embedded into the recess 631C1 on the inner side of the mating member 630C1. At this time, the center point of the matching join surface MJ will align with the integrated circuit unit 620C1 of the integrated circuit 600C1 (the same applies to the integrated circuit 600C2 and the integrated optical circuit 600C3). Meanwhile, the periphery of the first opening 636C1 of the mating member 630C1 will abut against the surface of the base portion 542C of the matching join surface carrier 520C. In this way, mating between the optical system of the optic fiber connector and the integrated circuit is completed.

Furthermore, a manufacturing method of the matching join surface carrier 520C may refer to the description of the manufacturing method of the matching join surface carrier 520B.

Additionally, a corner portion of the protrusion 537C or the recess 631C1 shown in Fig. 12E may also refer to the chamfers illustrated in Figs. 11A and 11B, and the manufacturing method is the same. Therefore, the position and procedure of the chamfer may be appropriately modified by referring to the description of Figs. 11A and 11B, and the description thereof is omitted herein.

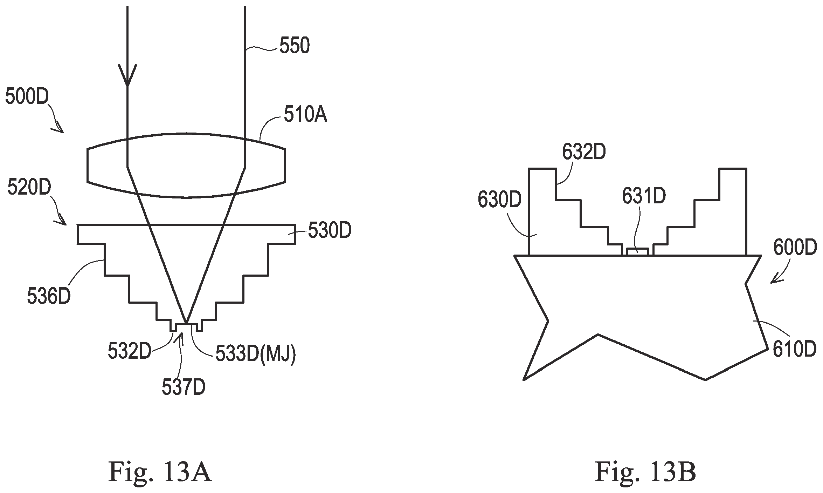

Figs. 13A and 13B are simplified schematic diagrams illustrating configurations of optical fiber connectors according to an embodiment of the present disclosure. Figs. 13A and 13B are variation examples of Figs. 10A to 10G. The structures shown in Figs. 13A and 13B are basically similar to the conical portion 530B and the mating member shown in Fig. 10G, and only the differences are described here. Except for the differences, the structures and functions of the other portions of the conical portion 530D and the mating member 630D shown in Figs. 13A and 13B may refer to the description of Figs. 10A to 10G.

As shown in Fig. 13A, similar to the conical portion 530B of the matching join surface carrier 520B in Fig. 10G, the conical portion 530D of the matching join surface carrier 520D disposed in the optical system 500D has a top surface of the conical portion 532D, and a recess 537D is formed on the top surface of the conical portion 532D. A recessed bottom surface 533D of the recess 537D serves as the matching join surface MJ. Furthermore, the side portion of the conical portion 530D is changed from the linear side surface 536B in Fig. 10G to a stepped outer side surface 536D.

As shown in Fig. 13B, a mating member 630D is formed on the surface of the integrated circuit body 610D. Compared with the mating member 630B1 shown in Fig. 10G, the inner side of the mating member 630D is changed to a stepped inner side surface 632D. It should be noted that the number of steps and the cross-sectional profile of the stepped inner side surface 632D correspond to those of the stepped outer side surface 536D of the conical portion 530D so that the conical portion 530D can be fitted into the stepped inner side surface 632D. In addition, the bottom surface of the mating member 630D also has a protrusion 631D, which has the same structure as the protrusion 631B1. Here, except for the stepped inner side surface 632D, other components of the mating member 630D are the same as those of the mating member 630B1, so reference can be made to the description of Figs. 10A to 10G.

Although not explicitly illustrated, similar to Fig. 10B, the integrated circuit unit of the integrated circuit 600D is disposed on the surface of the integrated circuit body 610D and is covered by a space inside the protrusion 631D. In addition, the integrated optical circuit 600B3 shown in Fig. 10D may also employ the matching join surface carrier 520D and mating member 630D.

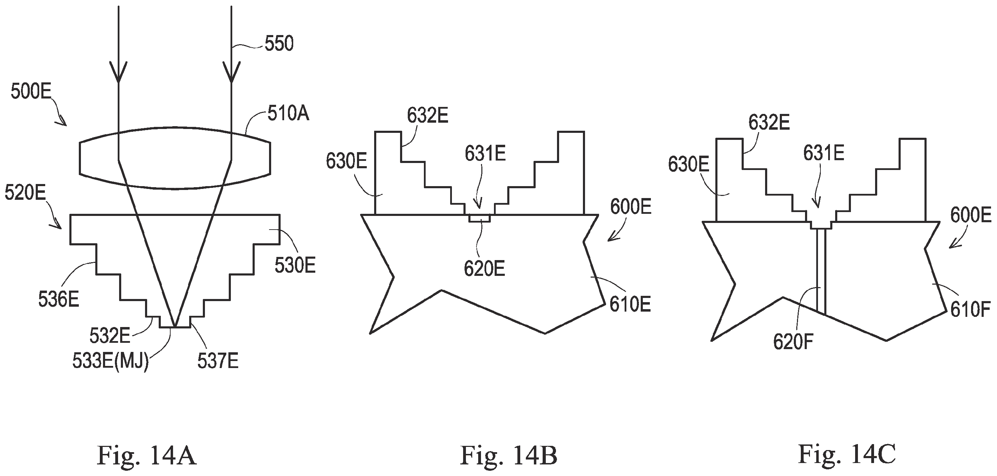

Figs. 14A to 14C are simplified schematic diagrams illustrating configurations of optical fiber connectors according to an embodiment of the present disclosure. Figs. 14A and 14B are variation examples of Figs. 12A to 12E. The structures shown in Figs. 14A and 14B are basically similar to the conical portion 530C and the mating member 630C1 shown in Fig. 12E, and only the differences are described here. Except for the differences, the structures and functions of the conical portion 530E and the mating member 630E shown in Figs. 14A and 14B may refer to the description of Fig. 12E.

As shown in Fig. 14A, similar to the conical portion 530C of the matching join surface carrier 520C in Fig. 12E, the matching join surface carrier 520E disposed in the optical system 500E has a top surface of the conical portion 532E, and a protrusion 537E is formed on the top surface of the conical portion 532E. A protrusion surface 533E of the protrusion 537E serves as the matching join surface MJ. Furthermore, compared with the conical portion 530C of the matching join surface carrier 520C in Fig. 12E, which has a straight-line cross-sectional profile, the side surface of the matching join surface carrier 520E is changed to a stepped outer side surface 536E.

As shown in Fig. 14B, the integrated circuit unit 620E of the integrated circuit body 610E is buried under the surface of the integrated circuit body 610E. Furthermore, the integrated circuit body 610E has a mating member 630E formed on its surface. Compared with the mating member 630C1 shown in Fig. 12E, an inner side of the mating member 630E is changed to a stepped inner side surface 632E. It should be noted that the number of steps and the cross-sectional profile of the stepped inner side surface 632E correspond to those of the stepped outer side surface 536E of the conical portion 530E so that the conical portion 530E can be fitted into the stepped inner side surface 632E. In addition, the bottom surface of the mating member 630E also has a recess 631E, which has the same structure as the recess 631C1. Here, except for the stepped inner side surface 632E, other components of the mating member 630E are the same as those of the mating member 630C1, so reference can be made to the description of Fig. 12E.

Although not explicitly illustrated, similar to Fig. 12C, the integrated circuit unit of the integrated circuit 600E is embedded below the surface of the integrated circuit body 610E. In addition, the integrated circuit 600C1 and the integrated optical circuit 600C3 shown in Figs. 12B and 12D may also employ the matching join surface carrier 520E and mating member 630E. Furthermore, similar to the structure shown in Fig. 12D, the structure shown in Fig. 14C also has a recess 631C1 formed on the surface of the integrated optical circuit body 610F, and the recess 631C1 further connects the integrated optical circuit unit 620F or optical fiber.

As described above, compared with the matching join surface carriers and mating members shown in Figs. 10G and 12E, in Figs. 13A and 13B as well as Figs. 14A and 14B, the matching join surface carrier has the stepped outer side surface, while the mating member has the stepped inner side surface. A height of each step increases as it is farther from the surface of the optical integrated circuit. In this way, when the mating member is inserted into the matching join surface carrier, the upper portion of the mating member first contacts the positioning assistance of each step behind the matching join surface of the matching join surface carrier. Thus, when the mating member is inserted, it is inserted step by step from top to bottom to ensure that the protrusion and recess are finally accurately combined.

Furthermore, chamfers may also be formed at corner portions of the recesses (537D, 631E) or protrusions (631D, 537E) in Figs. 13A and 13B as well as Figs. 14A and 14B, similar to those shown in Figs. 11A and 11B, to facilitate insertion of the matching join surface carrier and the mating member.

In summary, for the matching join surface carrier shown in the above examples, the dimensions at and near the matching join surface should be highly accurate, which can be achieved using semiconductor processes. For example, photoresist can be used for multiple exposures to obtain the desired accurate shape. In addition, when using the photoresist, precision in the xy-plane (the plane perpendicular to the optical axis) can reach the nanometer level, whereas in the z-direction (along the optical axis), there may be slight inaccuracy. However, since optical lens focusing has a depth of focus, even if there is slight inaccuracy in the z-direction, it may still fall within a range of the depth of focus, so the precision is still acceptable.

In addition, for the matching join surface carrier, the inclined surface farther away from the matching join surface merely serves as a guide, and chamfering may be applied, so a permissible tolerance is larger. Therefore, the portion of the inclined surface farther away can be formed by general precision plastic molding, such as hot pressing or injection molding.

In conclusion, from the three embodiments described above, it can be seen that as long as an outward surface of the lens closest to the focal point in the lens system of the optical system is a plane, and the focal point lies on this plane, then this plane (as in the first and second embodiments) can function as the second window. The second window can serve as the matching join surface. In addition, as the above mentioned second window, because light is focused after passing through the lens (the second window), it is necessary to take the lens into consideration when designing the optical lens, so the second window is part of the optical system.

Furthermore, for example, the block-type matching join surface carrier is also a double-flat lens and is part of the optical system. Moreover, if the lens closest to the focal point is a plano-convex lens with an outward surface being a plane, and the focal point is near the plane, then the plane can serve as the matching join surface. Therefore, the plane is generally referred to as the focal plane. The focal plane itself, or with some additional suitable components, can serve as the matching join surface. For example, in the first and third embodiments, the plane is the matching join surface. Similar to the second embodiment, the plane together with the annular matching join surface carrier, the central portion of the plane serves as the matching join surface.

The optical system according to the embodiment of the present disclosure has been described in detail above, particularly regarding how to use the lens, matching join surface carrier, and so forth to align the focal point of the optical system with the center point of the matching join surface. When adjustment of the focal point of the optical system and the center point of the matching join surface is required, an adjustment device should be designed. In the adjustment device, one key point is how to generate a parallel beam for irradiating the optical system; another key point is how to locate the focal point using the lens and the matching join surface carrier, and how to align the focal point with the center point of the matching join surface. This will now be described in detail.

In an optical system, parallel light is generally produced using a collimator or a laser. However, the setup of a collimator is also subject to mechanical errors. It is usually difficult to set up a collimator with very high precision and very small mechanical error. The present disclosure proposes a simple and inexpensive method for generating parallel light.

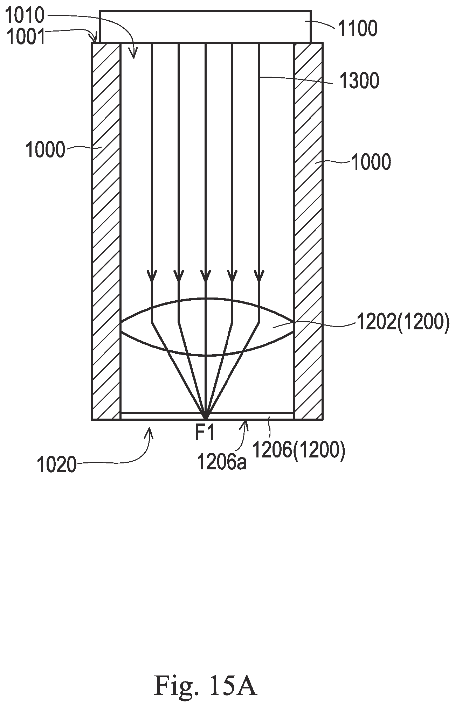

Figs. 15A to 15F are schematic diagrams illustrating a long straight-tube structure for adjusting an optical system and a manner of generating a parallel beam according to the present disclosure. As in the preceding embodiments, directions such as up and down, left and right described below are based on relative orientations in the drawings, merely for ease of explanation and not as absolute directions.

Fig. 15A is a schematic diagram illustrating the long straight-tube structure for adjusting the optical system and the manner of generating the parallel beam according to the present disclosure, and a schematic diagram of a light path of the parallel beam parallel to the optical axis. As shown in Fig. 15A, during fabricating the optical system 1200, this embodiment first provides a long straight tube 1000, which is basically a hollow cylindrical structure, so that the optical system 1200 can be placed inside the long straight tube 1000, thereby allowing adjustment of a transverse direction of the collimating lens 1202 (perpendicular to the optical axis of the collimating lens 1202). For convenience in explaining the parallel light used during the adjustment, the optical system 1200 shown here only illustrates the relevant collimating lens 1202, the second window 1206, and the outward surface of the second window 1206a.

In addition, the long straight tube 1000 has a first opening 1010 and a second opening 1020 at its two ends. A light source (first light source) 1100 is provided above the first opening 1010, for example, a uniform light source. The following will be described with reference to the uniform light source 1100. The uniform light source 1100 is placed on an upper edge surface of the long straight tube 1001. The optical system 1200 of the optical fiber connector is placed inside the long straight tube 1000 and near the second opening 1020. The parallel light beams 1300 generated by the uniform light source 1100 are incident on the collimating lens 1202 of the lens system of the optical system 1200, and the parallel light beams 1300 are focused to the focal point F1 of the collimating lens 1202.

Generally, the standard uniform light source 1100 is an integrating sphere light source. However, according to this embodiment of the present disclosure, an inner diameter of the long straight tube 1000 is only a few millimeters (mm). Therefore, the uniform light source 1100 may include at least one light-emitting source or annular arrangement of light-emitting sources. Furthermore, the uniform light source 1100 may be monochromatic light or white light, depending on requirements.

With respect to characteristics of the uniform light source, light from each point of the uniform light source 1100 is emitted in all directions with approximately the same intensity (if an emission angle does not deviate much from the optical axis). Accordingly, corresponding to each point of the uniform light source 1100, light in any direction corresponds to a group of light parallel thereto, among which there is a group of parallel light beams 1300 parallel to the optical axis of the optical system, as shown in Fig. 15A, and the parallel light beams 1300 are focused to the focal point F1 on the optical axis.

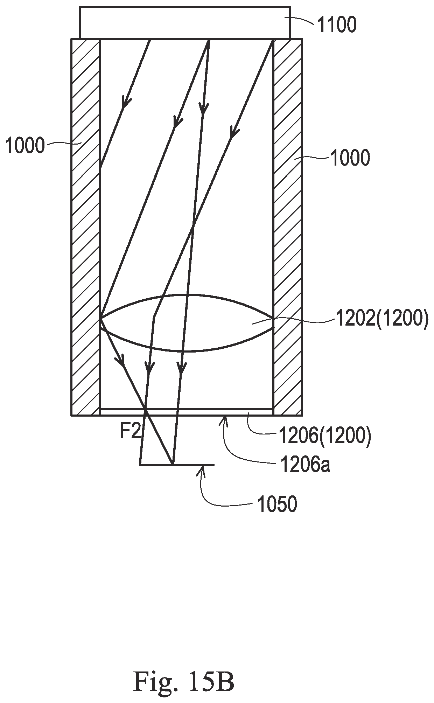

Fig. 15B is a schematic diagram illustrating the optical paths and imaging of the edge beam and parallel beam parallel thereto in the long straight tube of the present disclosure. As shown in Fig. 15B, all parallel beams converge on the focal plane (i.e., the outward surface of the second window 1206a) of the collimating lens 1202 of the lens system of the optical system 1200, and then reach the imaging surface 1050. Light passing through the center of the lens also converges on the focal plane (i.e., the outward surface of the second window 1206a) and then reaches the imaging surface 1050. Therefore, compared to the mechanical error involved in setting up the general collimator, the uniform light source 1100 provides the group of parallel light beams 1300 parallel to the optical axis of the collimating lens 1202. Moreover, compared with other parallel beams at different angles (the angle relative to the optical axis), the position and size of the uniform light source 1100 can be adjusted so that the light intensity distribution of the parallel light beams 1300 parallel to the optical axis of the collimating lens 1202 at the focal point are more suitable for operation.

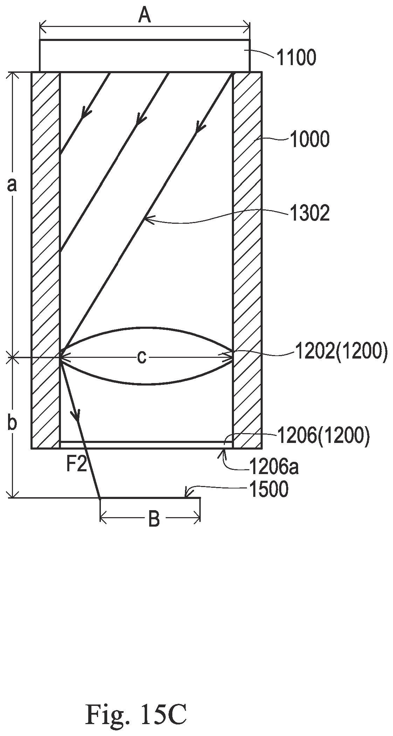

Next, referring to Figs. 15A, 15B, and 15C, an analysis is provided for the optical path of light emitted from the uniform light source 1100 and focused by the collimating lens 1202 of the lens system of the optical system 1200, and then reaching the focal plane (i.e., the outward surface of the second window 1206a). Several key points of the optical path are discussed below.

First, the uniform light source 1100 emits multiple parallel light beams 1300. The parallel light beams converge on the focal plane after passing through the optical system 1200, where the focal plane is the outward surface of the second window 1206a. Moreover, the light beam emitted from each point of the uniform light source 1100 passes through the optical system 1200 and then through the outward surface of the second window 1206a (i.e., the focal plane), and finally converges to form an image on the imaging surface 1050, as shown in Figs. 15B and 15C.

In this configuration, the group of parallel beams parallel to the optical axis of the collimating lens 1202 emitted by the uniform light source 1100 ultimately converges on the focal point F1 of the parallel beam. However, due to unavoidable mechanical errors in the optical system 1200, the focal point F1 usually does not exactly coincide with the center point of the outward surface of the second window 1206a (i.e., the focal plane). The issue of how to make the focal point F1 and the center point of the outward surface of the second window 1206a coincide as closely as possible is what the embodiment of the present disclosure seeks to address.

Furthermore, as shown in Fig. 15C, this illustrates a process of determining the maximum diameter of the light intensity distribution of the uniform light source 1100 on the focal plane, that is, on the outward surface of the second window 1206a. As shown in the figure, an edge light 1302 is emitted from the outermost point of the uniform light source 1100 and reaches the opposite side of the optical system 1200 (close to the tube wall of the long straight tube 1000). Then, after passing through the focal plane (the outward surface of the second window 1206a), its intersection is the focal point F2 of the edge light 1302. Afterward, the edge light 1302 reaches the imaging surface 1050.

As shown in Fig. 15C, the group of the parallel beam parallel to the edge light 1302 hits the tube wall of the long straight tube 1000 except the edge light 1302. Therefore, the parallel beam with an angle larger than that of the edge light 1302 hits the tube wall of the long straight tube 1000 and does not pass through the optical system 1200, while the beam with a smaller angle partly hits the tube wall and partly hits the optical system 1200, as shown in Fig. 15B.

Also, as shown in Fig. 15A, in the lens system of the optical system, only the parallel light beams 1300 parallel to the optical axis of the collimating lens 1202 pass entirely through the optical system 1200 without hitting the tube wall of the long straight tube 1000, and are focused at the focal point F1 of the parallel light beams 1300 parallel to the optical axis. Therefore, the light intensity of the parallel light beams 1300 parallel to the optical axis is the strongest; conversely, the farther from the center, the weaker the light intensity, and beyond the focal point F2 of the edge light 1302, the light intensity is zero.

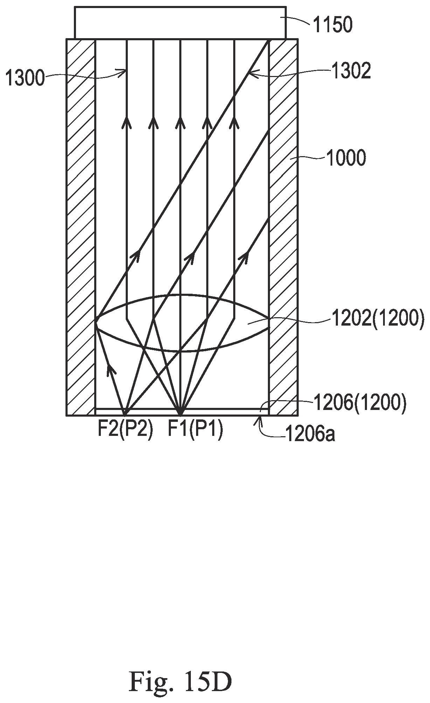

Fig. 15D shows a case where light emitted from point light sources at different positions P1, P2 (focal points F1, F2) on the focal plane (the outward surface of the second window 1206a) passes through the optical system 1200, then passes through the interior of the long straight tube 1000, and finally reaches the sensor 1150. Here, since the light path is reversible, light emitted from the focal plane (the second window 1206) will form parallel light beams 1300 and edge light 1302 in the opposite direction of the original direction after passing through the optical system 1200.

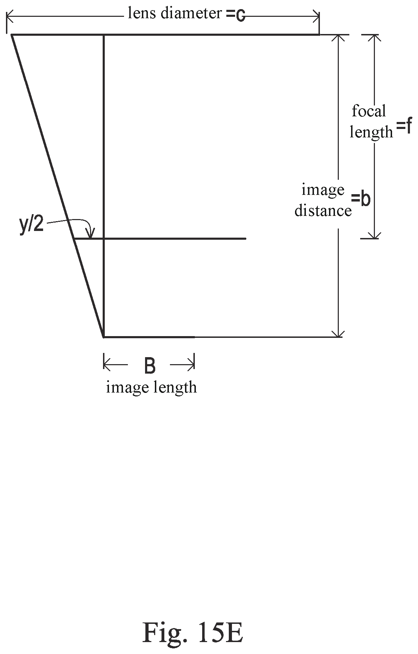

As shown in Fig. 15D and 15E, light emitted from the point light source at the focal point F2 (the position P2) of the edge light 1302, where the outermost beam (i.e., the edge light 1302) hits the opposite side of the sensor 1150, and other light parallel to the edge light 1302 hits the tube wall of the long straight tube 1000. In addition, light emitted from the point light source at the focal point F1 (the position P1) of the parallel light parallel to the optical axis of the collimating lens 1202, as shown in Fig. 15D, does not hit the tube wall of the long straight tube 1000 but directly reaches the sensor 1150, so its light intensity is the strongest. Conversely, the farther toward the outside (away from the center of the second window 1206), the weaker the light intensity becomes, until beyond the focal point F2 of the edge light 1302, where the light intensity is zero.

Next, referring to Fig. 15E, the calculation of the diameter of the light spot formed by the focal point F2 of the edge light 1302 is described, where parameters are defined as follows:
A: object length, B: image length, D: diameter of the light spot at the focal point; a: object distance, b: image distance, c: diameter of the collimating lens, f: lens focal length;

First, based on a lens imaging formula, the following equation can be obtained: $\frac{1}{a} + \frac{1}{b} = \frac{1}{f}$ (1) It follows that: $b = \frac{fa}{a - f}$ (2) Also, $\frac{A}{a} = \frac{B}{b}$ (3) From the above Equation (2) and Equation (3), it follows that: $B = \frac{Ab}{a} = \left(\frac{A}{a}\right) \left(\frac{fa}{a - f}\right)$ (4) In addition, $\frac{c - B}{b} = \frac{y}{b - f}$ (5) It follows that: $y = \frac{\left(c-B\right) \left(b-f\right)}{b}$ (6) A diameter D of the light spot at the focal point is y + B, which can be calculated as follows: $D = y + B = \frac{\left(c-B\right) \left(b-f\right)}{b} + B$ (7) where y is an increased length from the image distance to the focal length.

Based on the formula for calculating the diameter D of the light spot in the above Equation (7), two examples are provided below for further illustration.

### Example 1

In this example, assume that the tube length of the long straight tube 1000 is 10 cm, the focal length f is 4 mm, the object length A of the uniform light source 1100 is 4 mm, and the object distance a is 10 cm-4 mm=96 mm. Based on the above Equation (2), the image distance b is obtained as 4.1739 mm, and based on the above Equation (4), the image length B is 0.1739 mm.

Therefore, based on the above Equation (6), the increased length y from the image distance to the focal length is calculated to be 0.1511mm. Finally, from Equation (7), the diameter D of the light spot is obtained as 0.1511 mm+0.1739 mm=0.325 mm.

### Example 2

In this example, assume that the tube length of the long straight tube 1000 is 100 cm, the focal length f is 4 mm, the object length A of the uniform light source 1100 is 4 mm, and the object distance a is 100 cm-4 mm=996 mm. Based on the above Equation (2), the image distance b is obtained as 4.0161 mm, and based on the above Equation (4), the image length B is 0.0161 mm.

Therefore, based on the above Equation (6), the increased length y from the image distance to the focal length is calculated to be 0.0152mm. Finally, from Equation (7), the diameter D of the light spot is obtained as 0.0152 mm+0.0161 mm=0.0313 mm=31.3 µm.

Based on the above two calculation examples, it can be seen that when the tube length of the long straight tube 1000 is 10 cm, the diameter D of the light spot at the focal plane (the outward surface of the second window 1206a) is 0.0313 mm=31.3 µm. In addition, when the tube length of the long straight tube 1000 is 100 cm, the diameter D of the light spot at the focal plane (the outward surface of the second window 1206a) is 0.325 mm=325 µm. Moreover, a diameter of a typical optical fiber is about 0.125 mm=125 µm, and the central opening of the outward surface of the second window 1206a (i.e., the matching join surface MJ) is about 126 µm or 127 µm. Therefore, if the diameter D of the light spot is 325 µm, there will certainly be light at the central opening of the outward surface of the second window 1206a (i.e., the matching join surface MJ), and thus the center point can be located accordingly. However, the variation in light intensity is relatively slow, and the variation in light intensity at the center point is relatively small. Conversely, if the diameter D of the light spot is 31.3 µm, the variation in light intensity is larger, making it relatively easier to accurately locate the center point. However, at the start of the operation, the diameter of this light spot cannot be guaranteed to be exactly at the center opening of the positioning plate. Here, the center opening of the outward surface of the second window 1206a (i.e., the matching join surface MJ) can be used for positioning the detector, the emitter, the optical fiber, or the waveguide of the optical integrated circuit, and thus the matching join surface MJ may also be referred to as the positioning plate.

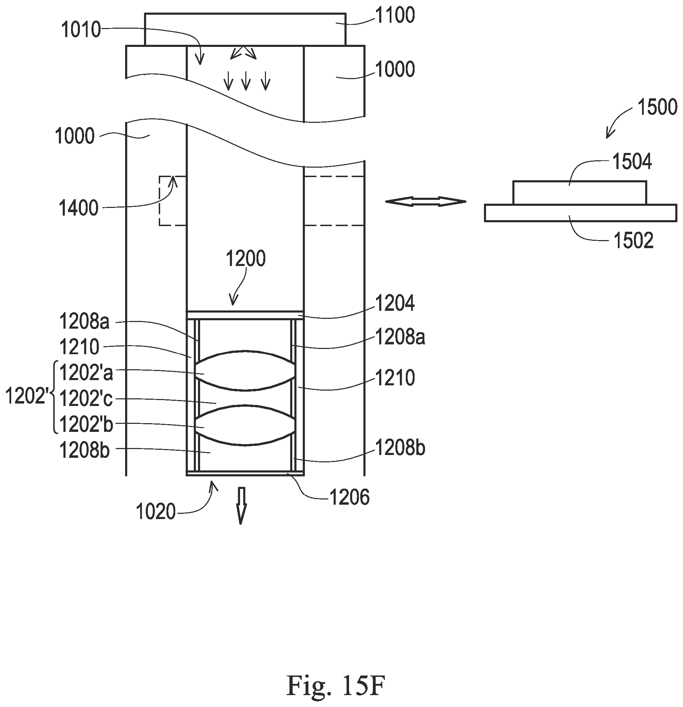

Accordingly, the method for rapidly and accurately determining the focal point is illustrated in Fig. 15F. At least one diffuser 1502 is further provided in the long straight tube 1000. Since the diffuser 1502 is closer to the optical system 1200, the light spot is larger, making it possible to observe the light spot at the beginning of the operation. The light spot is then moved closer to the target position, and then the diffuser 1502 is removed. At this time, the focal light spot of the relatively distant uniform light source 1100 is typically within the observable range. The light from the diffuser 1502 includes light in all directions. For all light beams emitted from the uniform light source 1100, each light beam corresponds to a group of light beams emitted from each point on the diffuser 1502 as well as a parallel beam parallel to the light beam. As an example, the diffuser 1502 may be made of frosted glass or the like.

Compared with the long straight tube 1000 shown in Fig. 15A, the long straight tube 1000 shown in Fig. 15F may further include a diffuser module 1500 disposed inside the long straight tube 1000. For example, the tube wall of the long straight tube 1000 may have a diffuser mounting hole 1400 for accommodating the diffuser module 1500. The diffuser mounting hole 1400 is perpendicular to the axis of the long straight tube 1000. The diffuser module 1500 is disposed between the uniform light source 1100 and the optical system 1200. The diffuser module 1500 may include a diffuser 1502, which diffuses the parallel beam incident on the diffuser 1502. In addition, if needed, a uniform light source (secondary light source) 1504 may further be disposed on the diffuser 1502. The diffuser module 1500 may be inserted into or removed from the diffuser mounting hole 1400 as required.

Furthermore, the diffuser 1502 corresponding to the long straight tube 1000 may, for example, be a disk-shaped structure with a certain thickness, the disk surface being parallel to the radial direction of the long straight tube 1000 and perpendicular to the axial direction of the long straight tube 1000, or in other words, perpendicular to the optical axis of the collimating lens 1202.

In addition, in this example, the optical system 1200 is similar to the structure illustrated in Fig. 3A and the like. The optical system 1200 may include a lens barrel portion 1210, a collimating lens 1202', positioning rings 1208a and 1208b, a first window 1204, a second window 1206, etc. Their specific functions and structures can be referred to the descriptions of the embodiments in Fig. 3A and the like, which are omitted here. However, the collimating lens 1202' is a triple lens composed of biconvex lenses 1202'a, 1202'b and a biconcave lens 1202'c. Of course, this is only an example, and the collimating lens 1202' may be composed of various different structures.

In addition, the optical system 1200 is adjusted by means of the parallel light through the long straight tube 1000 as shown in Fig. 15F. Specifically, the collimating lens 1202' and/or the matching join surface carrier (not shown) described in the above embodiments are moved such that the focal point of the optical system 1200 coincides with the center point of the outward surface of the second window 1206a. The collimating lens 1202' and/or the matching join surface carrier are then fixed. Thereafter, the optical system 1200 is removed from the direction indicated by the arrow.

Moreover, as shown in Fig. 15F, the illustrated optical system 1200 is suitable for manufacturing a male optical fiber connector. If a female optical fiber connector is to be manufactured, the optical system 1200 may be further provided with an alignment sleeve. The details of which can be referred to in the descriptions of the embodiments above.

The method for making the focal point of the optical system 1200 coincide with the center point of the outward surface of the second window 1206a will be described in detail later.

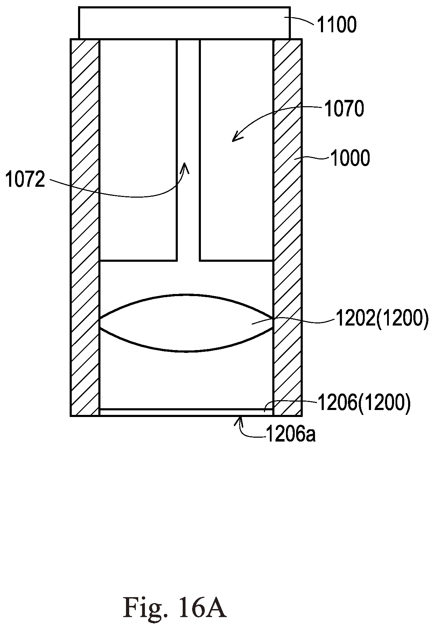

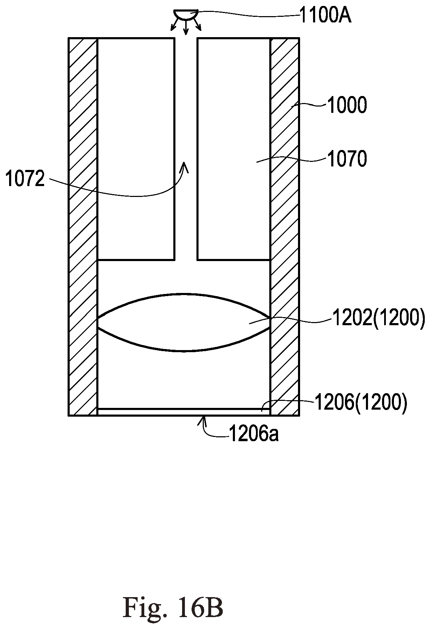

Furthermore, Figs. 16A and 16B show variations of the long straight tube structure of the present disclosure. To achieve rapid and accurate focus determination, a long straight inner tube is further provided inside the long straight tube 1000 in this embodiment of the disclosure.

As shown in Fig. 16A, a long straight inner tube 1070 is disposed inside the long straight tube 1000. The long straight inner tube 1070, like the long straight tube 1000, is a hollow cylinder. The long straight inner tube 1070 has a straight central hole 1072. Light emitted from the uniform light source 1100 can be incident through the central hole 1072 onto the collimating lens 1202 of the lens system of the optical system 1200.

As an example, an outer diameter of the long straight inner tube 1070 is substantially equal to the inner diameter of the long straight tube 1000, allowing the long straight inner tube 1070 to be sleeved into the long straight tube 1000. A height of the long straight inner tube 1070 is less than that of the long straight tube 1000, and it is located between the uniform light source 1100 and the optical system 1200. As a result, the diameter of the light spot on the focal plane can be altered during the operation of coinciding the focal point with the outward surface of the second window 1206a (the matching join surface MJ). Therefore, the focal point can be located more rapidly and accurately.

Fig. 16B shows a variation of Fig. 16A, the difference being that Fig. 16B uses a light source 1100A, which is a general light source. Even in the presence of the long straight inner tube 1070, the configuration of Fig. 16B can still provide rapid and accurate determination of the focal point.

For example, as shown in Fig. 16A and based on Example 2, if the long straight inner tube 1070 with the adjustment hole 1072 having the diameter of about 1 mm is sleeved into the long straight tube 1000, then the diameter of the light spot on the focal plane (the outward surface of the second window 1206a) is about one-quarter of the original, i.e., 31.3 µm/4=8 µm. Under this condition, the geometric center of the light spot can be easily located.

As shown in Fig. 16B, if the general light source 1100A is used, the diameter of the light spot on the focal plane (the outward surface of the second window 1206a) is also about 8 µm. At this time, the geometric center of the entire pattern is the focal point. In this configuration, the precision may be slightly lower, but the error is estimated to be less than 1 µm. Therefore, for a single-mode optical fiber to be coupled to the side of the integrated optical circuit of the optical system 1200, where the core diameter is about 9 µm, the configuration of Fig. 16B is sufficient. In addition, for the detector or the emitter to be coupled to the side of the integrated circuit of the optical system 1200, where the size is larger, the configuration of Fig. 16B with the general light source is also sufficient. However, for the waveguide to be coupled to the side of the integrated optical circuit of the optical system 1200, since the waveguide has a size of less than 0.5 µm, it is preferable to adopt the configuration of the uniform light source 1100.

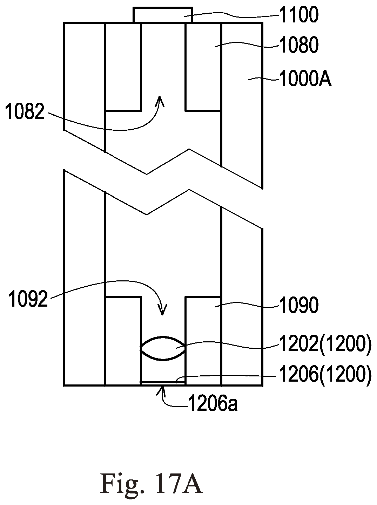

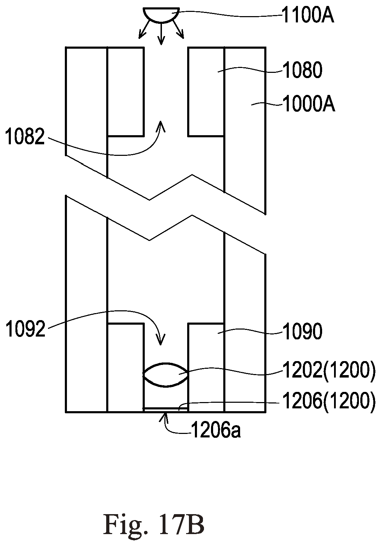

In addition, Figs. 17A and 17B are schematic diagrams illustrating variations of a longer long straight-tube structure according to the present disclosure. As shown in Fig. 17A, if the long straight tube 1000A is longer in length and has a smaller inner diameter, the long straight tube 1000A may not be straight and may not be convenient for inserting the long straight inner tube 1070 as shown in Figs. 16A and 16B. In this case, a long straight inner tube 1080 having a central hole 1082 may be inserted at the side of the uniform light source 1100. In addition, another long straight inner tube 1090 having a central hole 1092 may be sleeved at the side of the optical system 1200. The diameter of the central hole 1092 is substantially equal to the outer diameter of the optical system 1200. Furthermore, as shown in Fig. 17B, which is a variation of FIG. 17A, the uniform light source 1100 is replaced by the general light source 1100A.

In this case, if the diameter (inner diameter) of the central holes 1082, 1092 is 1 mm and the length of the long straight tube 1000A is 400 cm, then the diameter of the light spot on the focal plane is about 2 µm. At this time, the center point or the point of maximum light intensity is sufficient for the single-mode optical fiber or that with a smaller core diameter, and it is also sufficient for the waveguide.

The above description explains how to generate ideal parallel light, and the following describes a method for the fine adjustment of the collimating lens, fine-adjustment positioning lens, and matching join surface carrier of the lens system of the optical system. As described above, taking Fig. 15A as an example, due to inevitable mechanical errors during assembly of the optical system, the focal point of the optical system described above will not exactly fall on the center point of the outward surface of the second window 1206a. Therefore, it is necessary to move the collimating lens 1202, the fine-adjustment positioning lens (not shown, disposed between the collimating lens 1202 and the outward surface of the second window 1206a (the matching join surface MJ)), and the matching join surface carrier (not shown) of the lens system in the optical system 1200, so that the focal point of the optical system 1200 falls on the center point of the matching join surface. This movement is in a direction (e.g., the x-y direction) perpendicular to the optical axis of the optical system 1200 (e.g., the z direction).

The following description refers first to Fig. 15A and the like. When performing the above operation, the optical system (e.g., the optical system 1200 of Fig. 15A) and the monitoring device (e.g., the monitoring device 140 of Fig. 2A, Fig. 4, etc.) are required. The monitoring device may be a camera or a detector array, etc. During the operation, the optical system is placed in the long straight tube 1000 of the above embodiments, and the uniform light source 1100 generates parallel light beams 1300, which is incident on the collimating lens 1202 inside the long straight tube 1000. Next, the focal point is located, and the focal point is then made to coincide with the center point of the outward surface of the second window 1206a (the matching join surface MJ). Afterward, the collimating lens 1202, the fine-adjustment positioning lens (not shown), and the matching join surface carrier (not shown) are fixed.

Before proceeding with the explanation, the so-called center of light intensity ${R}^{⇀} \left(X, Y\right)$ is defined. Here, the center of light intensity ${R}^{⇀} \left(X, Y\right)$ is analogous to the concept of the center of mass in mechanics, where (X, Y) represents a two-dimensional coordinate system on the screen. In addition, the screen refers to the screen of the camera (see the monitoring device shown in Fig. 2A, etc.). Further, assuming that the light intensity at the i-th point on the screen is denoted as *mᵢ*, the position vector of the i-th point is denoted as *rᵢ* (position in a 2D plane coordinate) and M represents the total light intensity, the center of light intensity ${R}^{⇀} \left(X, Y\right)$ can be defined as follows. ${R}^{⇀} \left(X, Y\right) = \frac{\sum {m}_{i} \times {{r}_{i}}^{⇀}}{M} ,$ (8) where $X = \frac{\sum {m}_{i} {x}_{i}}{M} , Y = \frac{\sum {m}_{i} {y}_{i}}{M} , M = \sum {m}_{i}$

When it is determined that all the light spots on the focal plane are projected onto the screen, the center of light intensity ${R}^{⇀} \left(X, Y\right)$ can be calculated, which serves as the center point. At this time, even if the focusing is not optimal and aberrations are present, a suitable center point can still be obtained. In addition, since there are various methods for positioning the center point of the central circular hole of the matching join surface, a similar definition of the center of light intensity may be employed for calculation, as expressed by Equation (9) below. $X = \frac{\sum {m}_{i} {x}_{i}}{M} , Y = \frac{\sum {m}_{i} {y}_{i}}{M}$ (9)

Here, the light intensity at each point on the screen where the central circular hole is imaged is set to 1, and M represents a total number of points on the screen of the camera where the circular hole is imaged. This is the center point of the screen. If the center of light intensity does not coincide with the center point, it is moved to the center point, and the center of light intensity is recalculated, repeating the procedure until the center point and the center of light intensity coincide or are substantially coincident; this is defined as the actual center point.

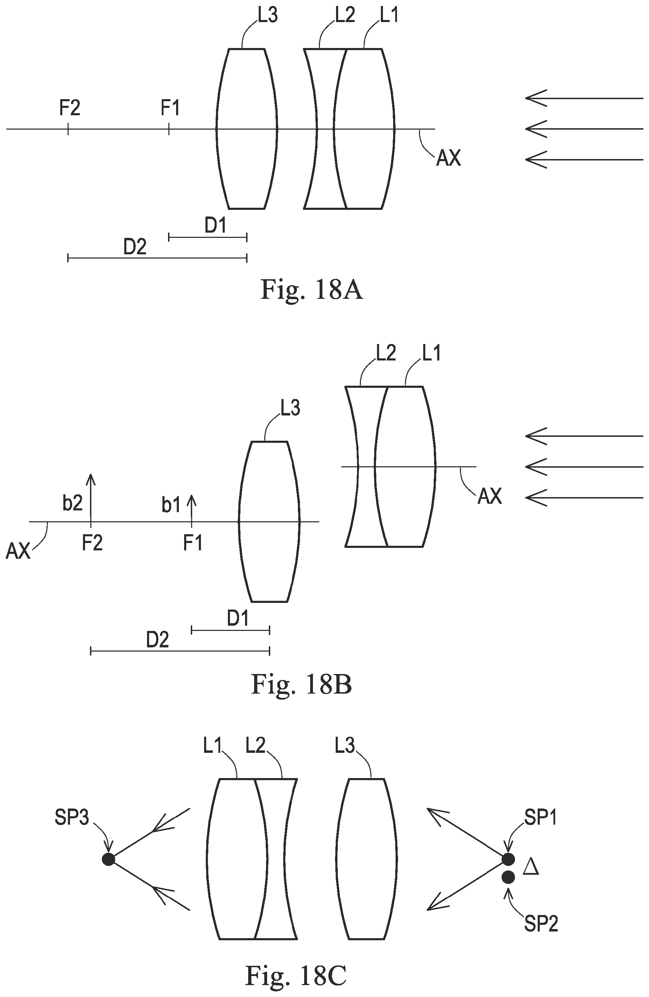

Figs. 18A to 18C are schematic diagrams illustrating a manner of focal point movement when a fine-adjustment positioning lens is displaced according to an embodiment of the present disclosure. Next, a lens system of an optical system having a collimating lens and a fine adjustment positioning lens is taken as an illustrative example. The following description, with reference to Figs. 18A to 18C, the variation of the light spot when the fine adjustment positioning lens is displaced (moving the fine adjustment positioning lens transversely) is illustrated. Moreover, the design of optical lenses is already a well-established technology. For each specification requirement, the necessary lens combinations are almost conclusive. For example, focusing multiple wavelengths of parallel light along the optical axis can generally be achieved using only a doublet lens combined with an aspherical design to meet specification requirements. If, in the lens group, in addition to the necessary lenses, there is a lens having a longer focal length (low coefficient/refractive index), such lens can be referred to as the fine adjustment positioning lens.

Generally, when a lens is displaced, the focused light spot also displaces accordingly. Therefore, assuming a light spot-to-lens displacement ratio is denoted by S, it can be defined by the following Equation (10). 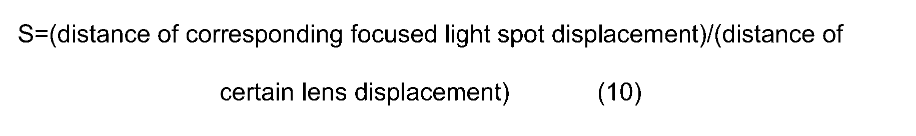 S=(distance of corresponding focused light spot displacement)/(distance of certain lens displacement) (10)

As an example, the lens system of the optical system includes a first lens L1, a second lens L2, and a third lens L3, where the first lens L1 and the second lens L2 constitute the doublet lens and serve as the collimating lens. The third lens L3 serves as the fine adjustment lens, which has a focal length f. Depending on requirements, the fine adjustment positioning lens may also be the doublet lens. As shown in Fig. 18A, the following Equation (11) can be obtained. $- \frac{1}{D 2} + \frac{1}{D 1} = \frac{1}{f}$ (11)

Here, D1 is known, and D2 is the quantity to be determined. D2 represents the focal point of the doublet lens L1 and L2 in the absence of the third lens L3.

As shown in Fig. 18B, assuming the moving distance of the third lens is b2 (i.e., the object distance), and b1 is the image distance, the displacement Δ of the first focal point caused by the displacement of the third lens L3 can be calculated as follows. $Δ = b 2 - b 1$ (12) $b 1 = \frac{D 1 b 2}{D 2}$ (13) $\frac{1}{D 2} = \frac{1}{D 1} - \frac{1}{f} = \frac{f - D 1}{D 1 f}$ (14) $D 2 = \frac{D 1 f}{f - D 1}$ (15) $b 1 = D 1 b 2 \left(\frac{f - D 1}{D 1 f}\right) = b 2 \left(\frac{f - D 1}{f}\right)$ (16) $\begin{matrix}Δ = b 2 - b 1 = \left(1-\frac{\left(f-D1\right)}{f}\right) b 2 \\ = b 2 \left(\frac{f - f + D 1}{f}\right) \\ = \frac{b 2 D 1}{f}\end{matrix}$ (17)

Based on this result, if the focal length f=10D1 is chosen, when the moving distance b2 of the third lens L3 is 2 micrometers (µm), the moving distance of the light spot is 0.2 µm. At this time, according to Equation (10), the light spot-to-lens displacement ratio S is 0.2 µm/2 µm=0.1. Furthermore, if the focal length f=100D1 is chosen, when the displacement distance of the third lens L3 is 2 µm, the displacement distance of the light spot is 0.02 µm. At this time, according to Equation (10), the light spot-to-lens displacement ratio S is 0.02 µm/2 µm=0.01. That is, the light spot-to-lens displacement ratio S is smaller.

In the realm of geometrical optics, light is reversible. As shown in Fig. 18C, if the third lens L3 is moved by the moving distance b2, the doublet lens (the first lens L1 and second lens L2) is considered to be shifted from the light spot SP1 to the light spot SP2, with a displacement distance Δ given by Equation (17) above. Furthermore, if this optical system has a reduction factor of G, as shown in Fig. 18C, the displacement K of the light spot SP3 is given by Equation (18) below: $K = \frac{Δ}{G}$ (18)

Assuming G=10 and focal length f=100D1, the displacement distance K equals 0.002 micrometers (µm), i.e., 2 nm. At this time, if the moving distance b2 of the third lens L3 is 2 micrometers (µm), the light spot-to-lens displacement ratio S equals 0.001.

Based on the above description, in the embodiment of the present disclosure, the fine adjustment positioning lens (e.g., the third lens L3 illustrated in Figs. 18A to 18C) adopts the lens with the relatively small light spot-to-lens displacement ratio S. The use of such the fine adjustment positioning lens in the embodiments of the present disclosure can achieve the following effects. First, the fine adjustment positioning lens allows relatively easy minute adjustments of the light spot position. Generally, using an XY stage (horizontal platform) to move the light spot by 100 micrometers (µm) to 10 micrometers (µm) is relatively easy. However, under high-precision requirements, using an XY stage to move the light spot by 1 micrometer (µm) to 0.001 micrometers (µm) is considerably difficult. To move the light spot by 1 micrometer (µm) to 0.001 micrometers (µm) usually requires highly precise instruments. However, according to the method of the present disclosure, it can be relatively easily achieved by using the fine adjustment positioning lens with the smaller light spot-to-lens displacement ratio S.

Based on the above description, according to the embodiment of the present disclosure, at least one fine adjustment positioning lens (e.g., the third lens L3 illustrated in Figs. 18A to 18C) can be disposed at an appropriate position inside the lens barrel portion of the optical system. In the case of multiple lenses, the fine adjustment positioning lenses can have the same or different focal lengths and can be set with individually adjustable ranges.

In addition, when the light spot is aligned with the center point of the focal plane (or the matching join surface, the aforementioned outward surface of the second window, etc.), an adhesive is used to fix the focusing lens. At this time, using the adhesive to bond generates a certain degree of stress. The stress may cause the aligned light spot to displace after a period of time. Different adhesives have different stress levels, so the displacement distance of the light spot also varies. Typically, the displacement distance is about 1 micrometer (µm) to several micrometers (µm). This is unacceptable for precision expanded optical fiber connectors. Therefore, after the alignment is completed, the stress issue should also be addressed.

First, the optical system is placed in the long straight tube, and the collimating lens and fine adjustment positioning lens of the lens system inside the optical system are not completely fixed. Next, the collimating lens is moved transversely (in the direction perpendicular to the optical axis) so that the focused light spot reaches a specific position, that is, so that the focused light spot coincides with or is as close as possible to the center point of the matching join surface. Afterward, the collimating lens is positioned and fixed using an adhesive, etc. Next, if necessary, the fine adjustment positioning lens can be further moved so that the light spot focused by the optical system reaches the specific position, i.e., so that the focused light spot coincides with or is as close as possible to the center point of the matching join surface. Next, the fine adjustment positioning lens is positioned and fixed using an adhesive.

After the adhesive has dried, an annealing or other heat treatment is performed to remove the stress. At this time, the focused light spot may shift slightly. If there is a second fine adjustment positioning lens, the second fine adjustment positioning lens can be moved so that the focused light spot reaches the specific position. Afterward, the second fine adjustment positioning lens is positioned and fixed using an adhesive. After drying, an annealing is carried out to remove the stress. During the alignment operation, for each lens, the above-mentioned procedures of lens movement, adhesive application, and annealing can be repeated so that the focused light spot coincides with or is as close as possible to the center point of the matching join surface.

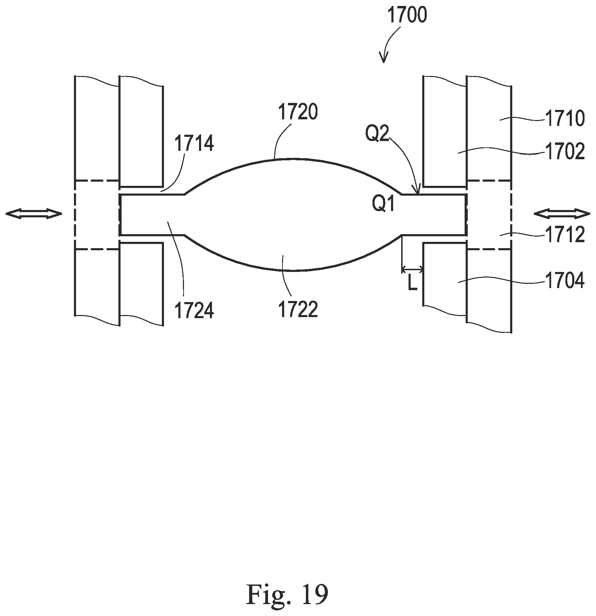

Fig. 19 is a schematic diagram illustrating a movable distance of each lens in a transverse direction according to an embodiment of the present disclosure. In the above description, it was detailed how to locate the focal point of the optical system so that the focal point coincides with the center point of the matching join surface MJ. Next, the manner in which the adjustment is actually performed will now be described. Before the explanation, as in the previous examples, the transverse direction (horizontal direction) here also refers to the direction perpendicular to the optical axis of the collimating lens 1720 relative to the surface of the figure, or it may refer to the direction perpendicular to the axis of the optical system 1700. For ease of explanation, only the collimating lens 1720 of the lens system of the optical system 1700 is shown here, and the long straight tube shown in Fig. 15A and the like is omitted.

As explained in the foregoing embodiments, the collimating lens 1720 of the lens system of the optical system 1700 includes a lens body 1722 and projecting lugs 1724. Here, although the collimating lens 1720 is illustrated, if there is a fine adjustment positioning lens, the fine adjustment positioning lens also includes a corresponding lens body and projecting lugs, as stated together here.

The projecting lug 1724 can be inserted into a hole between the positioning rings 1702 and 1704, or clamped by the two adjacent positioning rings 1702 and 1704. After insertion, slight gaps 1714 exist between the projecting lug 1724 and the positioning rings 1702 and 1704. At this time, the projecting lug 1724 can be pressed into the hole between the positioning rings 1702 and 1704, but the projecting lug 1724 can still make slight movements. In addition, the lens barrel portion 1710 has the adjustment hole 1712, which corresponds to the position of the projecting lug 1724. The projecting lugs 1724 can be contacted by a tool through the adjustment hole 1712, thereby allowing the collimating lens 1720 to move in the transverse direction (in the direction indicated by the arrow).

As shown in Fig. 19, a distance between a lens edge position point Q1 of the collimating lens 1720 and a lens spacing end point Q2 thereof is a movable distance L of the collimating lens 1720 in the transverse direction. As described above, the optical system 1700 is placed in the above-mentioned various long straight tubes, and the optical system 1700 is irradiated with the uniform light source. Meanwhile, a monitoring device such as a camera (as shown in Fig. 2A) is used on the other side of the long straight tube to observe and locate the focal point of the optical system 1700.

Afterward, a tool (e.g., a tool with a tip that can be inserted into the adjustment hole 1712, etc.) is used to contact the projecting lugs 1724 of the collimating lens 1720, thereby allowing the collimating lens 1720 to make slight movement in the transverse direction. When the focal point of the optical system 1700 coincides with the matching join surface MJ (e.g., the outward surface of the second window mentioned above), the collimating lens 1720 is no longer moved. Next, an adhesive is filled into the gap 1714 and the adjustment hole 1712 through the adjustment hole 1712 to fix the collimating lens 1720 to the lens barrel portion 1710. Similarly, as described above, after fixing the collimating lens 1720 to the lens barrel portion 1710 with the adhesive or the like, an annealing process is further required. If necessary, the above-mentioned fine adjustment positioning lens can also be used for further adjustment, and its adjustment method is the same as that of the collimating lens 1720, so it will not be repeated here.

In addition, although the long straight tube is omitted in Fig. 19, in actual adjustment, the optical system 1700 is placed in the long straight tube. Therefore, during the adjustment, an opening is also required in the tube wall of the long straight tube corresponding to the adjustment hole 1712, so that the tool can be inserted from the tube wall of the long straight tube into the adjustment hole 1712 of the lens barrel portion 1710, thereby allowing adjustment of the consistency between the focal point of the collimating lens 1720 and the center point of the matching join surface MJ.

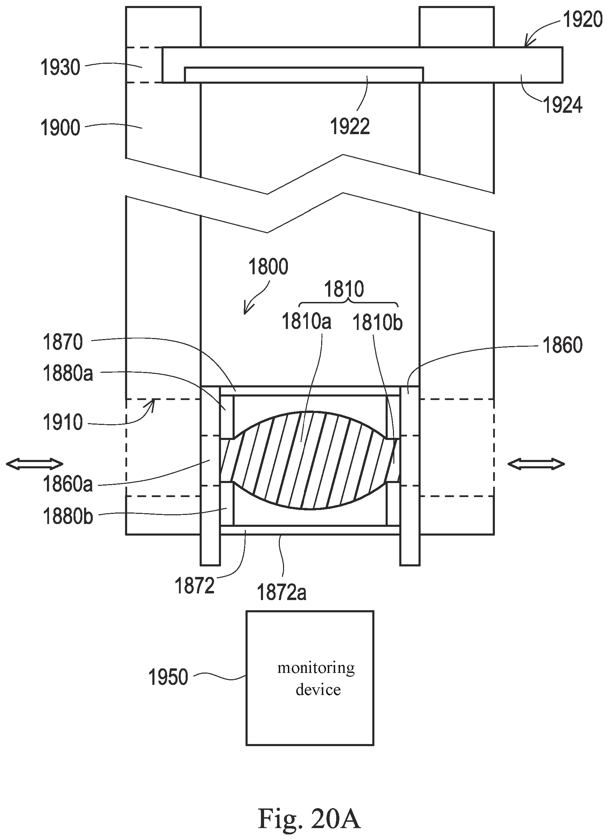

Figs. 20A to 20D are schematic diagrams of several feasible states for adjusting the focal point of the collimating lens 1720 according to the present disclosure. As shown in Fig. 20A, the optical system 1800 for the optical fiber connector is placed into the long straight tube 1900. Here, the long straight tube 1900 may adopt various long straight tube structures 1000, 1000A described in Figs. 15A to 15F, Figs. 16A to 16B, and Figs. 17A to 17B, without any limitation. However, in this example, the light source is in another form, namely, an insertable light source module 1920. Here, the tube wall of the long straight tube 1900 may form a light source insertion hole 1930 corresponding to the size of the light source module 1920. The light source insertion hole 1930 is perpendicular to the axis of the long straight tube 1900.

As an example, the light source module 1920 at least includes a uniform light source 1922 and a light source base 1924. During operation, the light source module 1920 can be inserted into the light source insertion hole 1930 provided on the upper side (or one side relative to the plane of the figure) of the long straight tube 1900. At this time, the uniform light source 1922 can generate a parallel beam incident on the optical system 1800. Of course, it is also possible to use a light source such as the uniform light source 1100 provided at the upper edge of the long straight tube 1000 shown in Figs. 15A to 15F.

In this example, the optical system 1800 includes a collimating lens 1810, a lens barrel portion 1860, a first window 1870, a second window 1872, an outward surface of a second window 1872a (i.e., the focal plane, also referred to as the matching join surface MJ), positioning rings 1880a and 1880b. The optical system 1800 corresponds to the optical system 210E described in Fig. 3E, with the difference being that the optical system 210E described in Fig. 3E is fitted with an alignment sleeve 230 to form the optical system 210E for the female optical fiber connector 200E. Therefore, the optical system of Fig. 20A and the optical system 210E described in Fig. 3E have the same or similar components with the same or similar functions and structures. The detailed description can be referred to the optical system 210E described in Fig. 3E, and will not be repeated here.

In addition, the collimating lens 1810 further includes a lens body 1810a and projecting lugs 1810b. The tube wall of the lens barrel portion 1860 further forms an adjustment hole 1860a (see the detailed description of Fig. 19). The position of the adjustment hole 1860a corresponds to the projecting lug 1810b. In addition, there is a gap between the projecting lug 1810b and the adjustment hole 1860a, which allows the projecting lug 1810b and the adjustment hole 1860a to be in contact but still being movable, thereby allowing an assembler to adjust the amount of movement of the collimating lens 1810 in the transverse direction.

The long straight tube 1900 may further include an adjustment hole (the adjustment hole of the long straight tube) 1910, and the position of which corresponds to the adjustment hole 1860a of the lens barrel portion 1860. In this way, a tool can be inserted through the adjustment hole 1910 of the long straight tube 1900 into the adjustment hole 1860a of the lens barrel portion 1860, and then contact the projecting lugs 1810b, thereby allowing the entire collimating lens 1810 to be moved in the transverse direction (indicated by the arrow). Thus, the focal point of the collimating lens 1810 can coincide with the center point of the matching join surface MJ (the outward surface of the second window 1872a). In addition, during adjustment, using the screen of the camera serving as the monitoring device 1950, the tool is brought into contact with the projecting lugs 1810b to thereby move the collimating lens 1810 in the transverse direction.

When the focal point of the collimating lens 1810 coincides with the center point of the matching join surface, an adhesive or other bonding material is injected through the adjustment hole 1860a to fix the entire collimating lens 1810 to the lens barrel portion 1860.

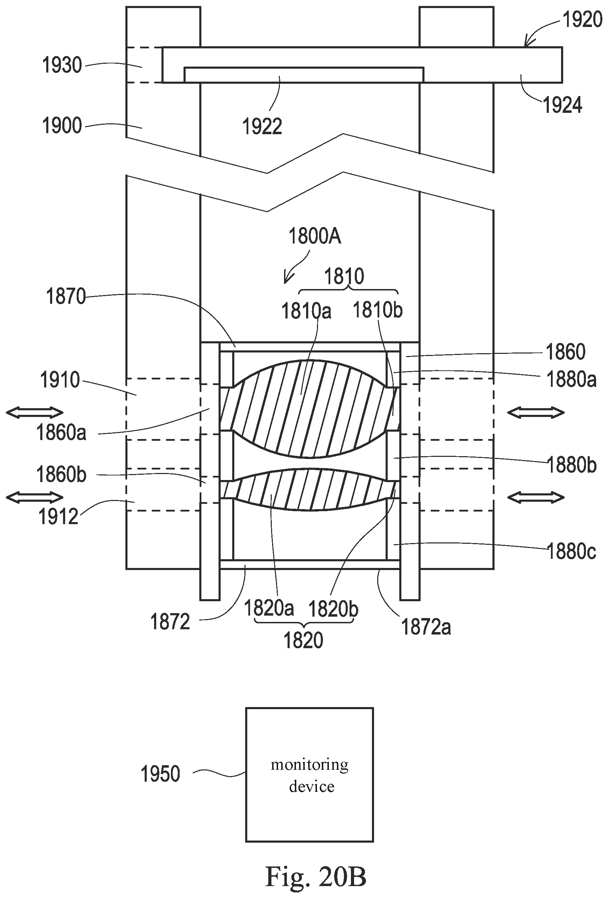

Fig. 20B shows a variation of Fig. 20A, where the same reference numerals indicate the same or similar structures or functions, and the detailed description can be referred to Fig. 20A. As shown in Fig. 20B, in this embodiment, the optical system 1800A differs from the optical system 1800 of Fig. 20A in that the optical system 1800A further includes a fine adjustment positioning lens 1820 and a positioning ring 1880c. The fine adjustment positioning lens 1820 also includes a lens body 1820a and projecting lugs 1820b.

The tube wall of the lens barrel portion 1860, in addition to the adjustment hole 1860a, further forms an adjustment hole 1860b. The position of the adjustment hole 1860b corresponds to the projecting lug 1820b of the fine adjustment positioning lens 1820, so that an assembler can adjust the amount of movement of the fine adjustment positioning lens 1820 in the transverse direction.

Similarly, the long straight tube 1900 may further include an adjustment hole 1912, and the position of which corresponds to the adjustment hole 1860b of the lens barrel portion 1860 (for the fine adjustment positioning lens 1820). In this way, a tool can be inserted through the adjustment hole 1912 of the long straight tube 1900 into the adjustment hole 1860b of the lens barrel portion 1860, and then contact the projecting lugs 1820b, thereby allowing the fine adjustment positioning lens 1820 to be moved in the transverse direction (as indicated by the arrow). Accordingly, the focal point of the lens system of the optical system (the collimating lens 1810 and fine adjustment positioning lens 1820) can coincide with the center point of the matching join surface MJ (the outward surface of the second window 1872a). In addition, during adjustment, using the screen of the camera serving as the monitoring device 1950, the tool is brought into contact with the projecting lugs 1820b to thereby move the fine adjustment positioning lens 1820 in the transverse direction. The function of the fine adjustment positioning lens 1820 can be referred to the description of Figs. 18A to 18C.

In this embodiment, after the focal point of the optical system 1800A is adjusted by adjusting the collimating lens 1810, and adhesive application, annealing and the like are performed, the focal point position may be shifted. Therefore, an additional fine adjustment positioning lens 1820 may be used to further adjust the focal point position of the optical system 1800A. Similarly, a tool is used to contact the projecting lugs 1820b of the fine adjustment positioning lens 1820. Once the focal point of the optical system 1800A is further adjusted using the fine adjustment positioning lens 1820, adhesive application, annealing and the like are also performed. That is, the adhesive or other bonding material is injected through the adjustment hole 1912 and then into the adjustment hole 1860b to fix the fine adjustment positioning lens 1820 to the lens barrel portion 1860. Thereafter, an annealing process is carried out to further reduce the stress. If this is still insufficient, another fine adjustment positioning lens may be added.

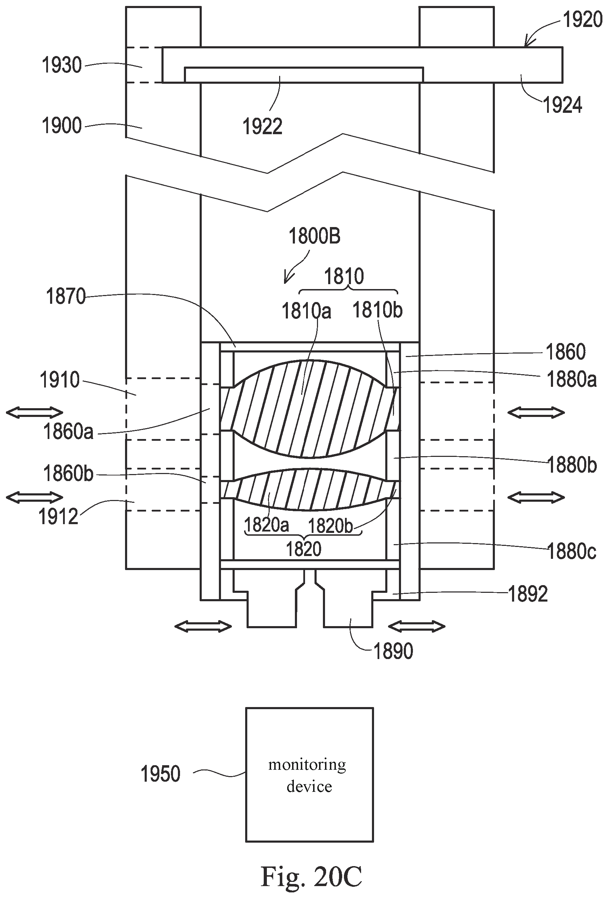

Fig. 20C shows a variation of Figs. 20A and 20B, where the same reference numerals indicate the same or similar structures or functions, and the detailed description may be referred to Figs. 20A and 20B. As shown in Fig. 20C, in this embodiment, the optical system 1800B is basically similar to the optical system 1800A of Fig. 20B, with the difference being that the optical system 1800B further includes an annular matching join surface carrier 1890 and a matching join surface carrier pressing foot 1892. Regarding the matching join surface carrier 1890 and matching join surface carrier pressing foot 1892, reference may be made to the embodiments illustrated in Figs. 4, 5A to 5D, and 6A to 6F, and the description of which is omitted herein.

Similarly, in the example shown in Fig. 20C, the adjustment of coinciding the focal point of the optical system 1800B with the center point of the matching join surface further adopts the method of the aforementioned second embodiment. As described in the second embodiment, there is a gap between the matching join surface carrier 1890 and the matching join surface carrier pressing foot 1892. By moving the matching join surface carrier 1890 transversely in the direction indicated by the arrow, the focal point of the optical system 1800B can be coincided with the center point of the matching join surface MJ. Similarly, after adjustment, an adhesive can be injected into the gap between the matching join surface carrier 1890 and the matching join surface carrier pressing foot 1892 for fixation. Of course, annealing can also be further performed to further reduce the stress.

In addition, although not illustrated, the matching join surface carrier 1890 of Fig. 20C may be replaced with the block-type matching join surface carrier of the aforementioned third embodiment, as shown in Figs. 7A to 7B and Figs. 8A to 8D. Furthermore, regarding the specific structure and adjustment method of the block-type matching join surface carrier, reference may be made to the detailed description of the embodiments shown in Figs. 9A to 9G. In addition, regarding the adjustment methods of the collimating lens 1810 and the fine adjustment positioning lens 1820 shown in Fig. 20C, reference may be made to the description of Figs. 20A and 20B, and the description of which is omitted herein.

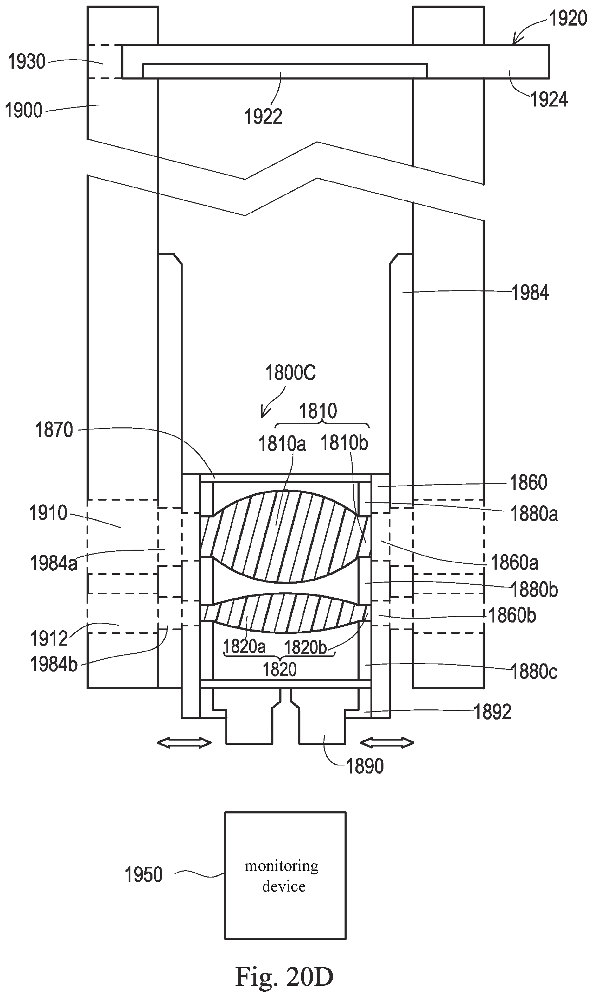

Fig. 20D illustrates a variation of Fig. 20C. Structurally, it is basically the same as that shown in Fig. 20C, and the adjustment method for coinciding the focal point of the optical system 1800C with the center point of the matching join surface is the same as that of Figs. 20A to 20C. The optical system 1800C of FIG. 20D further includes an alignment sleeve 1984 adapted to enclose the entire lens barrel portion 1860 and its internal components. The optical system shown in Fig. 20D is configured for use in the female optical fiber connector, while the optical system shown in Fig. 20C is configured for use in the male optical fiber connector. Apart from this difference, other structures and functions are basically the same. Likewise, in the configurations shown in Figs. 20A and 20B, each of the optical systems 1800, 1800A and the like may likewise be configured as the optical system for use in the female optical fiber connector, similar to that shown in Fig. 20D.

In this configuration, on the alignment sleeve 1984, adjustment holes 1984a and 1984b can further be formed at positions corresponding to the projecting lugs 1810b of the collimating lens (e.g., the focusing lens) 1810 and the projecting lugs 1820b of the fine adjustment positioning lens 1820 of the optical system 1800C. Thus, as shown in Fig. 20D, a tool can be inserted through the adjustment hole 1910 of the long straight tube 1900, the adjustment hole 1984a of the alignment sleeve 1984, and the adjustment hole 1860a of the lens barrel portion 1860 to contact the collimating lens (e.g., the focusing lens) 1810, thereby finely adjusting the position of the collimating lens (e.g., the focusing lens) 1810 in the transverse direction. After adjustment, the collimating lens (e.g., the focusing lens) 1810 is fixed in the same manner as described above. Thereafter, if necessary, the tool can be inserted through the adjustment hole 1912 of the long straight tube 1900, the adjustment hole 1984b of the alignment sleeve 1984, and the adjustment hole 1860b of the lens barrel portion 1860 to contact the fine adjustment positioning lens 1820, thereby adjusting the position of the fine adjustment positioning lens 1820 in the transverse direction. After adjustment, the fine adjustment positioning lens 1820 is fixed in the same manner as described above. In addition, the adjustment can be performed through the matching join surface carrier 1890 in the manner described in Fig. 20C.

Therefore, as described above, whether the optical system is configured as the male optical fiber connector or female optical fiber connector, it can be adjusted in the manners described above so that the focal point of the optical system coincides with the center point of the matching join surface, thereby increasing the alignment accuracy between the optical system and the optical integrated circuit.

Next, several examples of lens systems that may be implemented in the optical systems will now be described. Each of the examples given here is applicable to the optical system of the male or female optical fiber connector described in the first to third embodiments above. Furthermore, these examples of the various optical systems are not intended to be limiting, and the aforementioned methods for adjusting the focal point of the optical system to coincide with the matching join surface can be used to adjust the various optical systems described herein. In addition, the male and female optical fiber connectors constructed from these optical systems may be coupled to the optical integrated circuit including the detector, the emitter, the optical fiber, or the waveguide.

In summary, in the above embodiments, the lens system in the optical system has been described by way of example as the collimating lens, or as the combination of the collimating lens and the fine adjustment positioning lens. However, the lens system of the present disclosure is not limited thereto. The lens system may include one or more collimating lenses and may further include one or more fine adjustment positioning lenses. The number and arrangement positions of the collimating lenses and the fine adjustment positioning lenses can be appropriately set as required. Several examples are listed below for illustration.

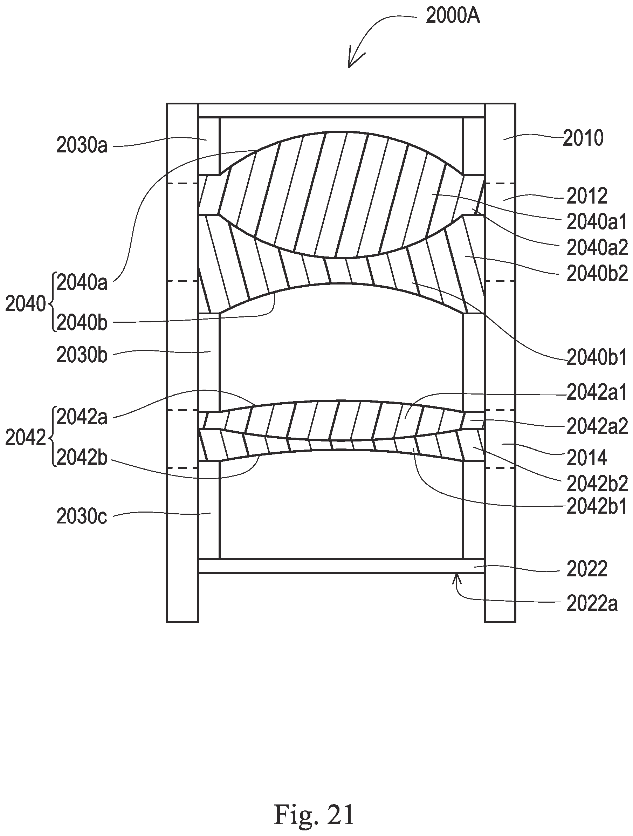

Fig. 21 is a schematic diagram illustrating an exemplary lens system in an optical system according to the present disclosure. As shown in Fig. 21, as in the above embodiments, the optical system 2000A may include a lens barrel portion 2010, a first window 2020, a second window 2022 (having the outward surface of the second window 2022a serving as the matching join surface MJ), a collimating lens 2040, positioning rings 2030a, 2030b, 2030c, etc. The structural description may refer to the description of Fig. 5A. The difference from Fig. 5A is that the collimating lens 2040 of the lens system is a doublet lens including a biconvex lens 2040a and a biconcave lens 2040b. Here, the biconvex lens 2040a consists of a lens body 2040a1 and projecting lugs 2040a2, while the biconcave lens 2040b consists of a lens body 2040b1 and projecting lugs 2040b2. In addition, the lens barrel portion 2010 likewise has an adjustment hole 2012 for adjusting the focal point of the collimating lens 2040 and fixing the collimating lens 2040. The optical system 2000A may also include a fine adjustment positioning lens 2042 composed of a doublet lens including a biconvex lens 2042a and a biconcave lens 2042b. Here, the biconvex lens 2042a consists of a lens body 2042a1 and projecting lugs 2042a2, while the biconcave lens 2042b consists of a lens body 2042b1 and projecting lugs 2042b2. In addition, the lens barrel portion 2010 likewise has an adjustment hole 2014 corresponding to the fine adjustment positioning lens 2042 for adjusting the focal point of the fine adjustment positioning lens 2042 and fixing the fine adjustment positioning lens 2042. The function of the doublet lens is that it allows incident light of different wavelengths to focus at one point, which a single lens cannot achieve. Furthermore, in general, the higher the magnification of the optical system, the more lenses are required.

In addition, in the case of collimating lens composed of multiple lenses, when adjusting the focal point of the optical system 2000A, each lens can be adjusted one by one, and the adjustment methods are as described in Fig. 19 and Figs. 20A to 20D, which will not be repeated here.

Further, as shown in Fig. 21, the second window 2022 is embedded in the lens barrel portion 2010. This configuration is suitable for further mounting the matching join surface carrier on the outward surface 2022a of the second window 2022, as illustrated in the second and third embodiments. Of course, if the matching join surface carrier is not provided, the outward surface 2022a of the second window 2022 may be aligned with the end surface (the side of the optical integrated circuit) of the lens barrel portion 2010.

In addition, the optical system 2000A shown in Fig. 21 is suitable for use as the male optical fiber connector. Of course, if it is to be used as the female optical fiber connector, the optical system 2000A may be fitted into an alignment sleeve.

In addition, the various modifications of the lens barrel portions, alignment sleeves and the like in the optical systems described in the figures of the first to third embodiments may adopt the lens systems of Fig. 21 and its various lens systems of derivative structures, which will not be described in detail herein. Those skilled in the art can make appropriate variations and modifications, all of which fall within the scope of the present disclosure.

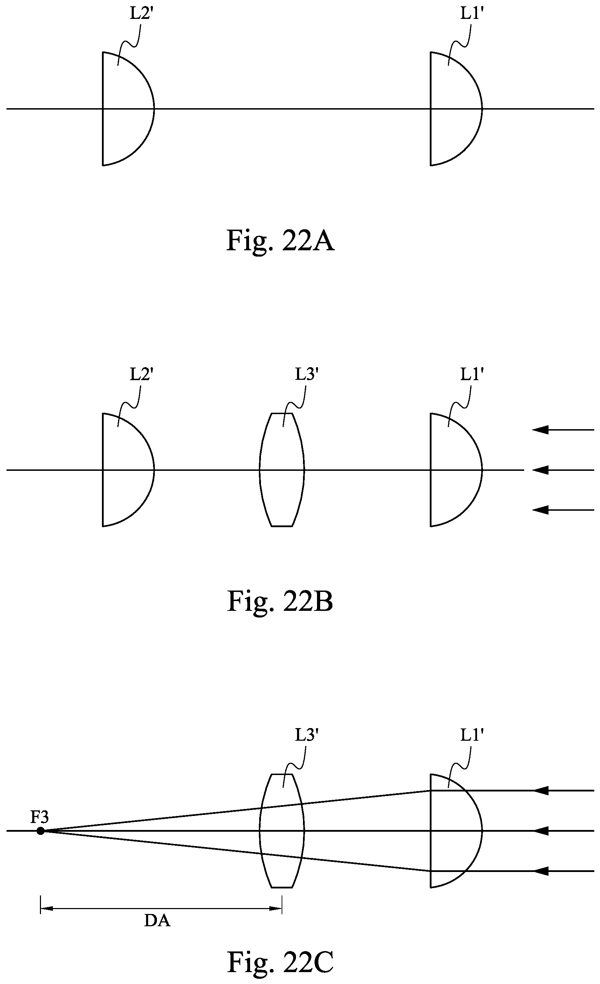

Figs. 22A to 22E are explanatory diagrams illustrating a manner of focal point movement when a fine-adjustment positioning lens is displaced according to another embodiment of the present disclosure. The difference between Figs. 18A to 18C and the lens system of the optical system of Fig. 22A is that the optical system of Fig. 22A only includes a first lens L1' and a second lens L2', wherein the first lens L1' is equivalent to the doublet lens of Figs. 18A-18C, and the second lens L2' is equivalent to the third lens L3 of Figs. 18A-18C. In this embodiment, the second lens L2' is designed as a plano-convex lens, and the focal point is designed to be on the plane of this plano-convex lens. The relationship between the vertical displacement of the first lens L1' and the second lens L2' and the displacement of the light spot position in the lens system of the optical system shown in Fig. 22A is similar to that in Figs. 18A to 18C, and therefore will not be repeated.

Besides the optical system of Fig.22A, Fig. 22B includes a lens system including a third lens L3' located between the first lens L1' and the second lens L2'. Different from the first lens L1' and the second lens L2', the third lens L3' is a slight convex lens that is almost a flat lens. In other words, the light converging effect of the third lens L3' is far less significant compared with that if the first lens L1' and the second lens L2'. Therefore, when the third lens L3' and the first lens L1' and the second lens L2' share the same principal axis, the third lens L3' barely changes the focusing point of the first lens L1' and the second lens L2' (in this case the focusing point is the focus). To simplify, it is assumed that the inclusion of the third lens L3' does not change the focusing point in the following discussion. However, such effect may be considered in actual practice.

For the ease of elaboration, the second lens L2' is first removed from the optical system, as shown in Fig. 22C. In the figure, point F3 is the focus of the first lens L1', that is spaced from the third lens L3' by a distance DA. Compared to Figs. 22A and 22B, since the light converging effect of the third lens L3' is neglected, the position of point F3 does not change. In this configuration, moving the third lens L3' in a vertical direction relative to the first lens L1' by a displacement bA causes the point F3 to offset by a displacement ΔA whose magnitude is: $ΔA = \frac{bADA}{fA}$ where focal length fA is the focal length of the third lens L3'. The formula can be derived using the method similar to that to derive formula (17) and will not be repeated.

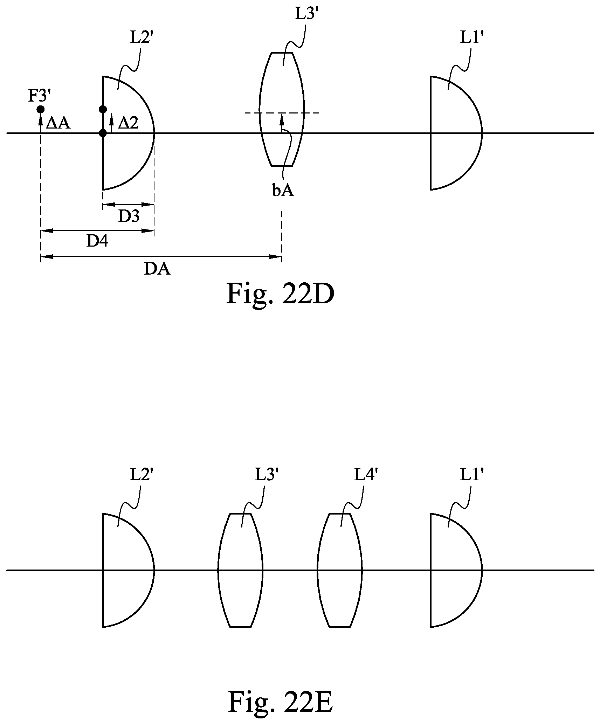

Now put the second lens L2' back to the optical system as shown in Fig. 22D. Since the third lens L3' and the first lens L1' are displaced vertically by the displacement bA, the point F3 moves to the point F3', which is spaced to the principal axis of the first lens L1' and the second lens L2' by a displacement ΔA. Now consider the image of the point F3' by the second lens L2', by lens equation: $D 4 = D 3 \left(\frac{f 2 ′}{f 2 ′ - D 3}\right)$ where focal length f2' is the focal length of the second lens L2', distance D3 is the image distance of the image of the point F3' by the convex surface of the second lens L2'. In the present embodiment, the image point is on the planar surface of the second lens L2', so the distance D3 is the thickness of the second lens L2'. Distance D4 is the horizontal distance from the point F3' to the center of the convex surface of the second lens L2'.

Since the point F3' is not on the principal axis of the second lens L2', its image by the second lens L2' will not be on the principal axis of the second lens L2' as well. To calculate the distance between the image of the point F3' by the second lens L2' and the principal axis, a standard way is to consider an object formed by connecting the point F3' and the point F3 and consider the image height Δ2 of this object by the second lens L2'. Since the object height of this virtual object is the displacement ΔA, it can be known from the magnifying power of the lens: $\frac{D 4}{D 3} = \frac{Δ A}{Δ 2}$ then it can be solved: $Δ 2 = \frac{ΔA D 3}{D 4} = \frac{D 3}{D 4} \frac{bADA}{fA} .$

This is the final displacement Δ2 caused by the displacement bA of the third lens L3' in vertical direction.

Similarly, one may consider more slight convex lenses disposed between the first lens L1' and the second lens L2'. As shown in Fig. 22E, a fourth lens L4' is illustrated. Likewise, the second lens L2' and the third lens L3' are first removed, and then if the fourth lens L4' moves in the vertical direction by a displacement bA', it leads to the point F3' to be displaced by a displacement ΔA' whose magnitude is: $ΔA ′ = \frac{bA ′ DA ′}{fA ′}$ where focal length fA' is the focal length of the fourth lens L4'. The result can be derived using the method similar to that to derive formula (17) and will not be repeated.

Consider the displacement Δ2' of light spot under this case. Similarly from the magnifying power: $\frac{D 4}{D 3} = \frac{ΔA ′}{Δ 2 ′}$ then it can be solved: $Δ 2 ′ = \frac{\left(ΔA′\right) D 3}{D 4} = \frac{D 3}{D 4} \left(\frac{bA ′ DA ′}{fA ′}\right) .$

This is the final displacement Δ2' caused by the displacement bA' of the fourth lens L4' in vertical direction. In fact, the sum of light spot displacement Δ2 caused by the moving of third lens L3' and light spot displacement Δ2' caused by the moving of the fourth lens L4' is the vector sum of the two on a plane.

The table below shows the relationship between the focal length fA of the third lens L3' in the optical system shown in Fig. 22D and the distance Δ2 of the light spot movement. The calculation in this table is based on the following parameters: the focal length f2' of the second lens L2' is 14.2 mm, the distance between the third lens L3' and the second lens L2' is 2 mm, the horizontal distance D3 of the point F3' after being imaged by the second lens L2' from the center of the second lens L2' is 3.6 mm, and the movement distance of the third lens L3' is 1 µm. $D 4 = \frac{14.2 \times 3.6}{14.2 - 3.6} = 4.8 \left(mm\right)$ $DA = 4.8 + 2 = 6.8 \left(mm\right)$ $ΔA = \frac{D 3}{D 4} \frac{bADA}{fA} = \frac{3.6}{4.8} \times \frac{1 \times 6.8}{fA} ≅ \frac{5}{fA} \left(μm\right)$

| focal length fA of the third lens L3' | distance of the light spot movement |
|---|---|
| 1000 mm | 5 nm |
| 2000 mm | 2.5 nm |
| 5000 mm | 1 nm |

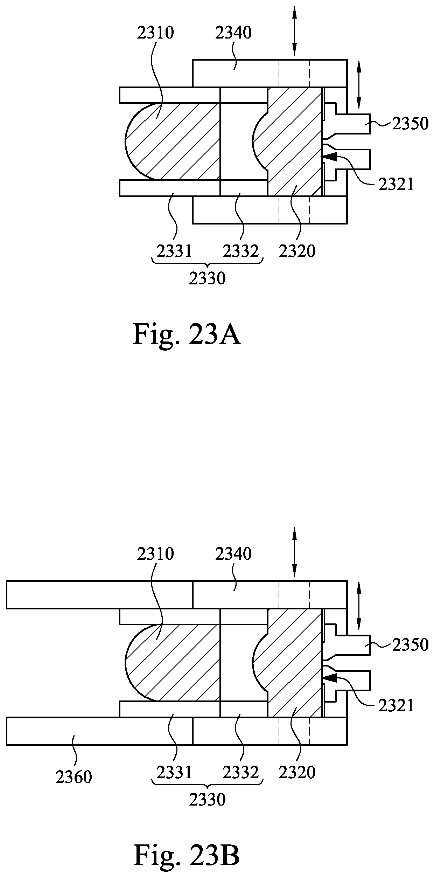

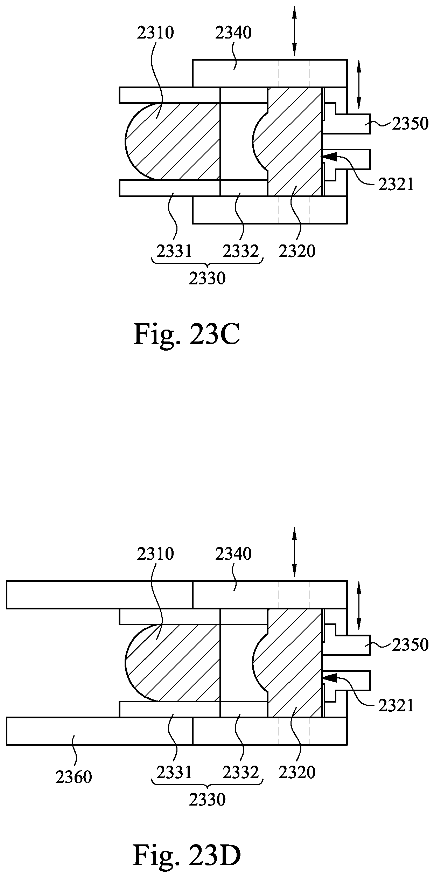

Figs. 23A to 23D are schematic diagrams respectively illustrating configurations of an optical system of male and female optical fiber connectors according to another embodiment of the present disclosure. Compared to the male connector shown in Fig. 23A, Fig. 23B includes an additional alignment sleeve 2360 (equivalent to the alignment sleeve 230 of Fig. 3A). In this embodiment, shell 2330 is located between the lens barrel portion and the lens system. The lens system includes two converging lenses and the first lens 2310 is surrounded by the shell 2330. Part of the shell 2330 is encased in the lens barrel portion 2340. The shell 2330 can be divided into a first portion 2331 and a second portion 2332. The first portion surrounds the first lens 2310 while the second portion 2332 serves as a positioning ring (equivalent to position ring 214a, 214b of Fig.3A). The two portions can separate and move in the z direction depending on the situation. In Figs. 23A and 23B, the two portions do not move relatively in the z direction. Since the matching join surface carrier 2350 and the second lens 2320 can both move in the x-y direction and the time when adhesive is applied may also be different, the second lens 2320 can be adjusted after the matching join surface carrier 2350 is adjusted, applied adhesive to, and annealed to release stress. When adhesive is being applied to the matching join surface carrier 2350, blockers are used to prevent adhesive from being applied to the second lens 2320. After the matching join surface carrier 2350 is applied with adhesive, a side of the matching join surface carrier 2350 has to stick to the focal plane 2321 to avoid errors caused by cameras when finding the midpoint. Connectors of Figs. 23A and 23B can be applied to optical fibers. Connectors of Figs. 23C and 23D correspond respectively to the connectors of Figs. 23A and 23B respectively. Compared to the connectors of Figs. 23A and 23B, connectors of Figs. 23C and 23D have another kind of matching join surface carrier 2350 for emitter or detector.

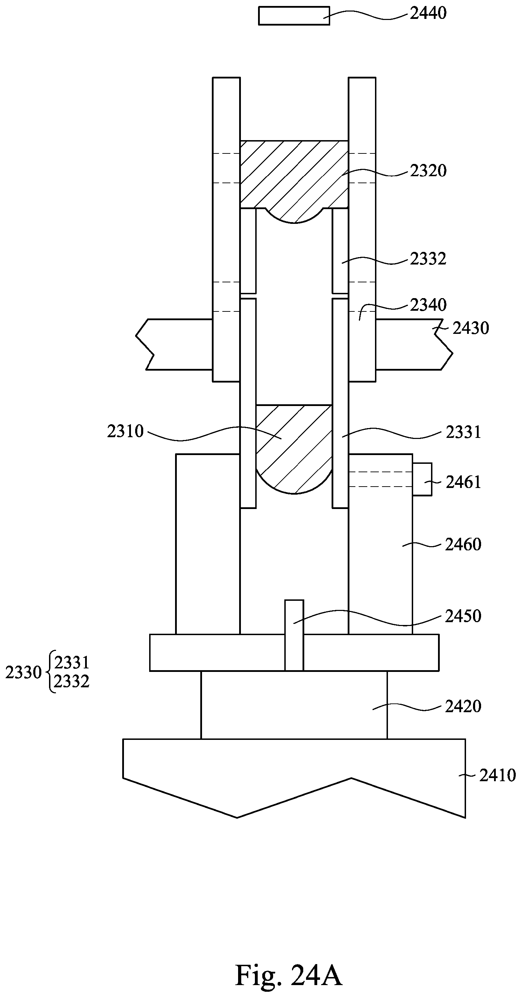

Figs. 24A to 24C are schematic diagrams illustrating the fixing and adjustment of the connectors of Figs. 23A and 23B. As shown in Fig. 24A, besides the connector, a lower desktop 2410, a z stage 2420, an upper desktop 2430, and a camera 2440 are also illustrated. In Fig. 24A, lens barrel portion 2340 of the connector is fixed to the upper desktop 2430, while the lower desktop 2410 comprises a z-stage 2420, a laser light source 2450, a support 2460 (may also be referred to as a long straight tube) and a fixing element 2461 on the support 2460, wherein the fixing element 2461 of the support 2460 is used to fix the first portion 2331 of the shell 2330 and the first lens 2310 in the shell 2330 such that the first lens 2310 can move along with the z stage 2420 and the support 2460. A distance between the first lens 2310 and the second lens 2320 is observed through the camera 2440 and adjusted to control the focal plane of the light. After the adjustment, a gap between the first portion 2331 and the second portion 2332 of the shell 2330 is filled.

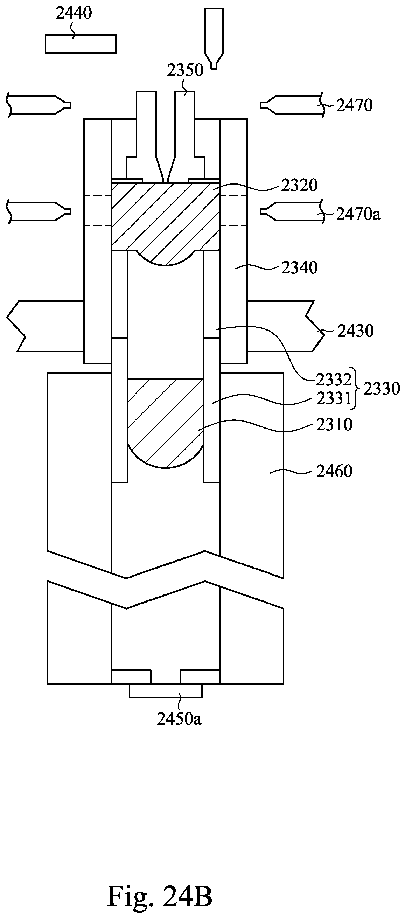

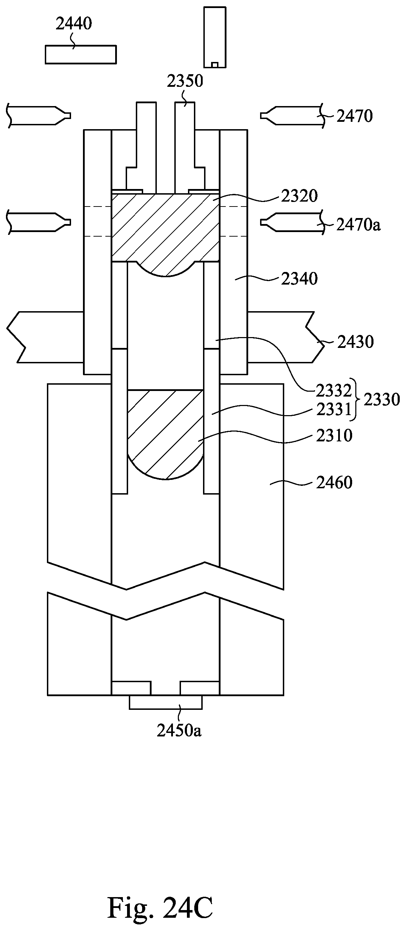

The x-y positioners 2470 and 2470a used in adjusting the matching join surface carrier 2350 and the second lens 2320 are illustrated in Figs. 24B and 24C. Different from Fig. 24A, the light sources in Figs. 24B and 24C are uniform light sources 2450a and the connectors further include the matching join surface carrier 2350. The difference between Figs. 24B and 24C lies in that an optical fiber connector is illustrated in Fig. 24B, while a detector or emitter connector is illustrated in Fig. 24C.

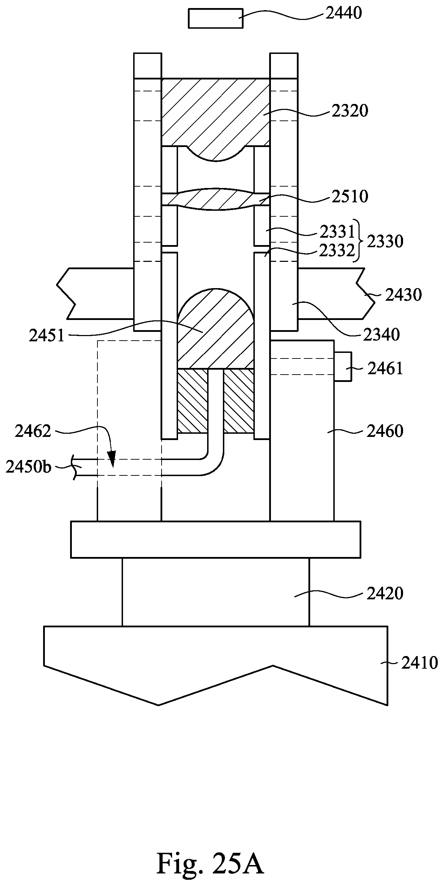

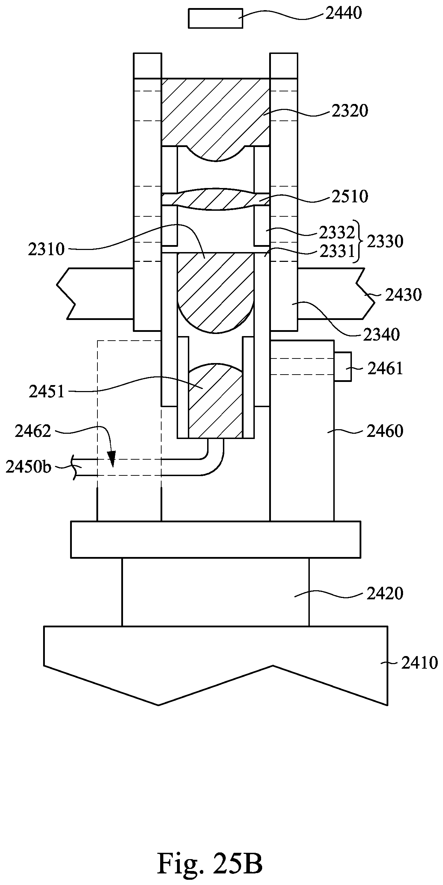

Figs. 25A and 25B are schematic diagrams illustrating in-device waveguide connectors according to another embodiment of the present disclosure. Different from Figs. 24A to 24C, light sources are provided by optical fibers 2450b in Figs. 25A and 25B and the connectors include another third lens 2510 with longer focal lengths for adjusting light spot movement and a male optical fiber lens 2451. The optical fiber lens 2451 of Fig. 25A is the first lens, while the first lens of Fig. 25B is the first lens 2310. The adjusting method for the devices of Figs. 25A and 25B is the same as that of the Figs. 24A to 25C and will not be repeated.

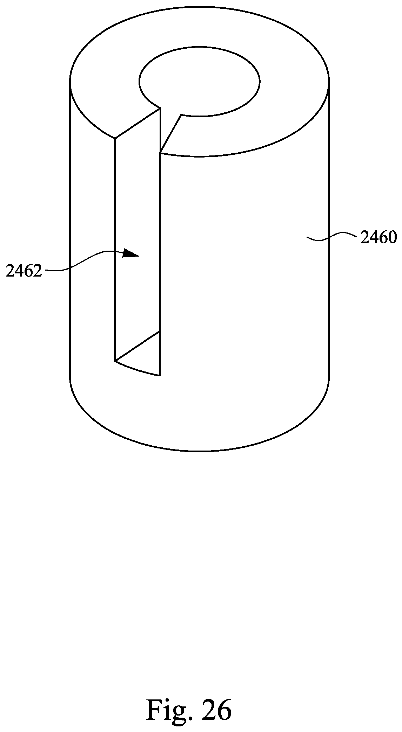

Fig. 26 is a schematic diagram illustrating a support 2460 of the device of the connectors of Figs. 25A and 25B. As shown in the figure, there is a trench 2462 left on the support 2460 such that a fiber can pass through the support 2460 (may also be referred to as a long straight tube).

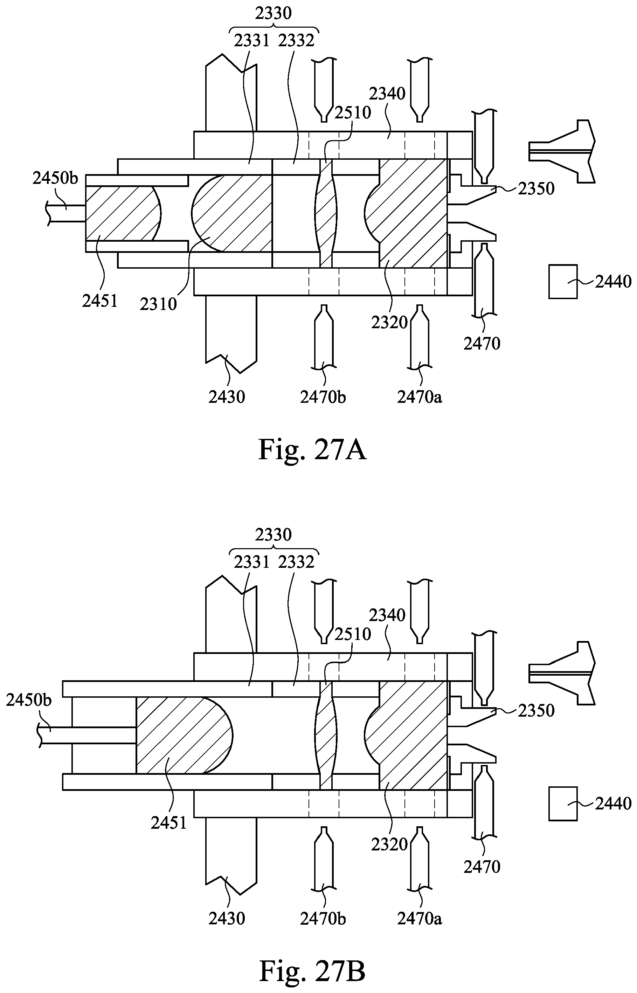

Figs. 27A and 27B are schematic diagrams illustrating the fixing and adjustment of the connectors of Figs. 25A and 25B. As shown in the figure, compared to Fig. 25B, Fig. 27A further includes matching join surface carrier 2350, three x-y positioners 2470, 2470a, and 2470b. Similarly, compared to Fig. 25A, Fig. 27B further includes matching join surface carrier 2350, three x-y positioners 2470, 2470a, and 2470b. At this time, the z direction is fixed, and the first portion 2331 and the second portion 2332 of the shell 2330 are the positioning rings.

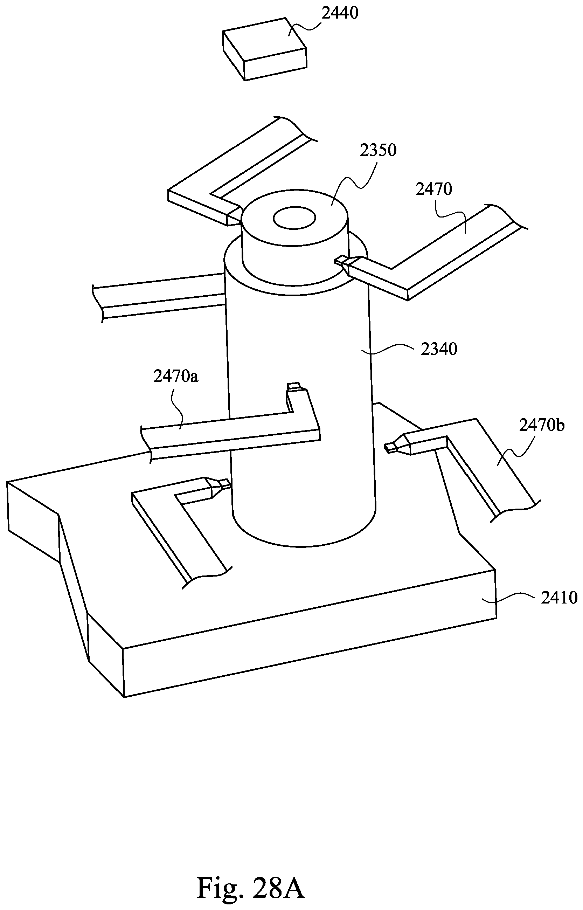

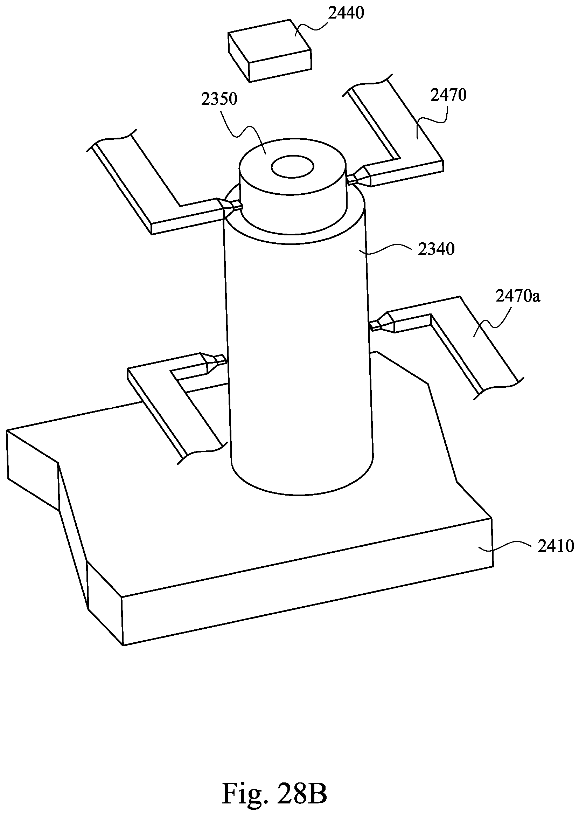

Figs. 28A and 28B are schematic diagrams illustrating the adjustment of positions using an x-y positioner according to an embodiment of the present disclosure. As shown in the figures, two or three x-y positioners are used to adjust matching join surface carriers and lenses. In Fig. 28A, three x-y positioners 2470, 2470a, and 2470b are used to adjust the matching join surface carrier 2350 and the aforementioned lenses 2320 and 2510 of a connector, wherein the connector can be the connector illustrated in Figs. 27A and 27B. In Fig. 28B, two x-y positioners 2470 and 2470a are used to adjust the matching join surface carrier 2350 and the aforementioned lenses 2320 of a connector, wherein the connector can be the connector illustrated in Figs. 24B and 24C.

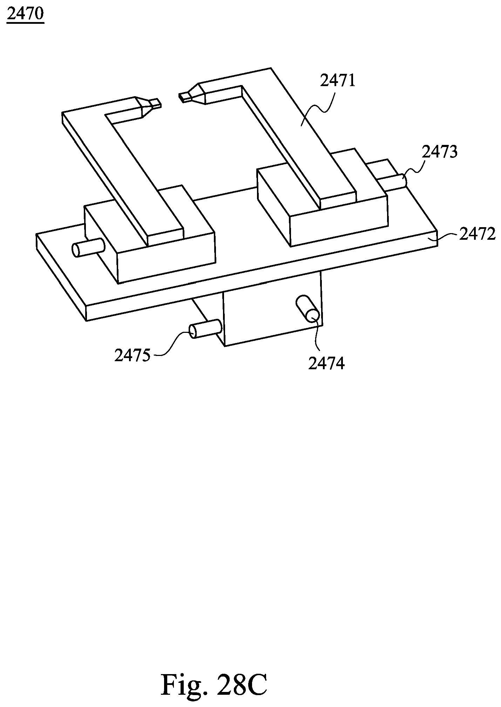

Fig. 28C is a schematic diagram of the x-y positioner 2470 according to an embodiment of the present disclosure. As shown in the figure, the x-y positioner 2470 can include a clamp portion 2471 moving in a single dimension configured to clamp an object whose position needs to be adjusted, such as a lens and a matching join surface carrier. Besides, x-y positioner 2470 further includes a plate 2472 carrying the clamp portion 2471, a step motor 2473 controlling a tightness of the clamp portion 2471, and a first adjusting rod 2474 and a second adjusting rod 2475 configured to respectively adjust the x direction movement and y direction movement of the x-y positioner 2470.

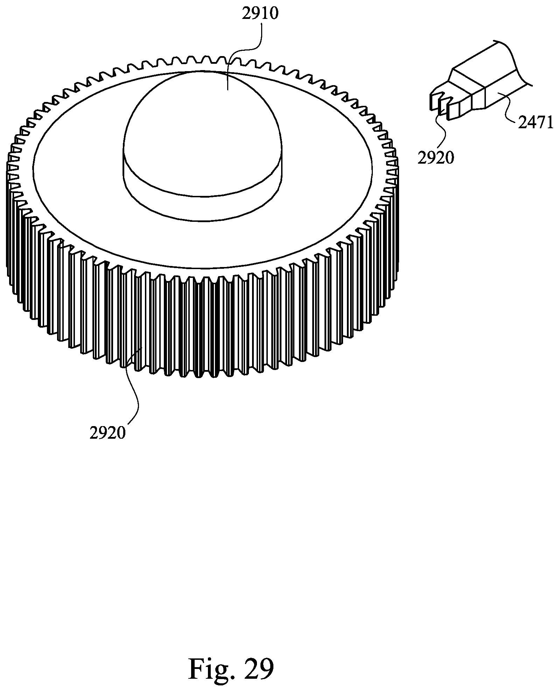

Fig. 29 is a partially enlarged view of the clamp portion 2471 of the x-y positioner and a lens 2910 according to an embodiment of the present disclosure. As shown in the figure, a surface of the clamp portion 2471 of the x-y positioner that contacts the lens 2910 has vertical serrated grooves 2920 configured to ensure that the clamp portion 2471 of the x-y positioner can hold the lens 2910. Surfaces of other elements that contact the clamp portion 2471 of the x-y positioner can also have vertical serrated grooves 2920.

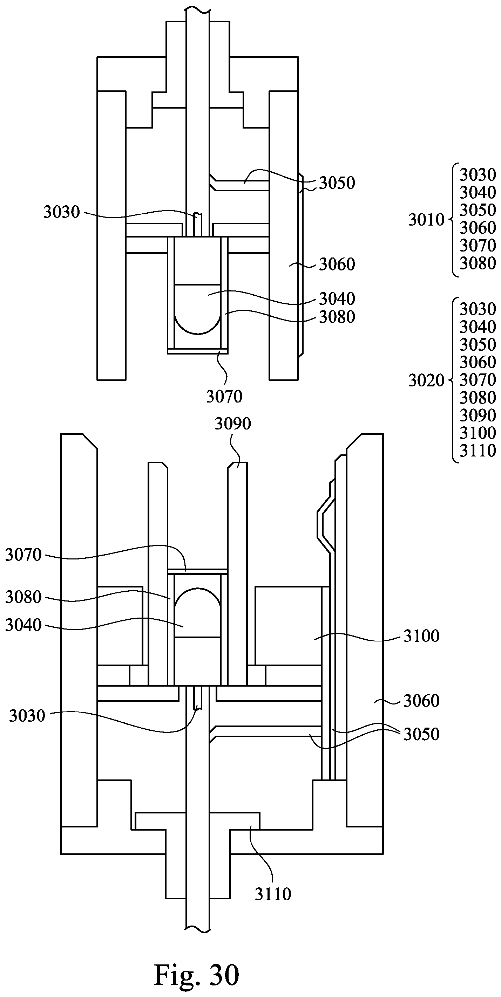

Fig. 30 is a schematic diagram of an optical fiber connector according to an embodiment of the present disclosure. As shown in the figure, the optical fiber connector includes a male connector portion 3010 and a female connector portion 3020 and a copper wire 3050 connected to the power source and electric signals. Each of the male connector portion 3010 and the female connector portion 3020 includes an optical fiber 3030, an optical fiber lens 3040, and a support 3060 surrounding the lens. The optical fiber lens 3040 of each of the male connector portion 3010 and the female connector portion 3020 is surrounded by a window 3070 and a lens barrel portion 3080. The lens barrel portion 3080 of the female connector portion 3020 is further fitted into the alignment sleeve 3090, and there is a positioning ring 3100 at the outside of the alignment sleeve 3090. A gap is kept between the positioning ring 3100 and the alignment sleeve 3090 configured to allow the optical fiber lens 3040 of the female connector portion 3020 to adjust its position. An end of the lens barrel portion 3080 of each of the male connector portion 3010 and the female connector portion 3020 includes a base portion. At the place where optical fiber passes through the base is a blocking piece 3110 configured to prevent the lens barrel portion 3080 from water damage and the optical fiber from being bent.

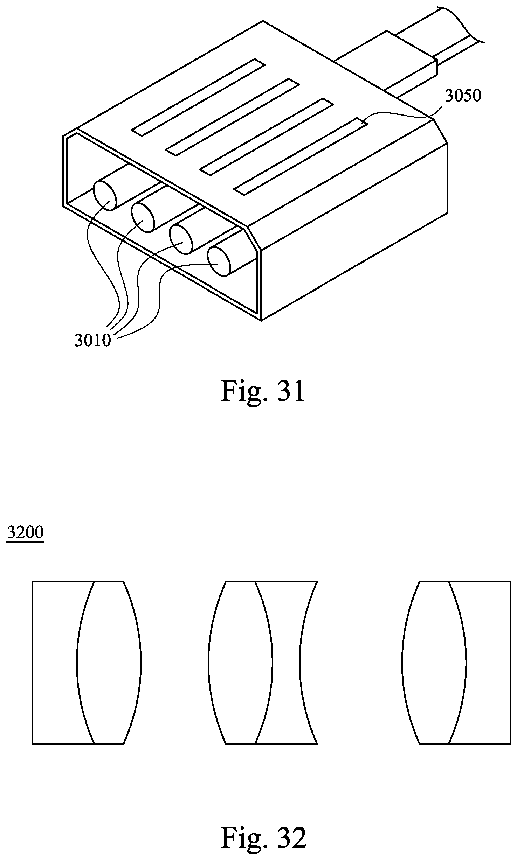

Fig. 31 is a three dimensional view of male connector portions of the optical fiber connector of Fig. 30. As shown in the figure, Fig. 31 includes four male connector portions 3010 and copper wire 3050 of the optical fiber connector of Fig. 30. In the figure, the optical fiber is connected to the connector from behind and distributes the light to the four male connector portions 3010.

In the above text, all lenses can be replaced with doublets 3200 including a convex lens and a concave lens as shown in Fig. 32 to reduce chromatic aberration so that light of different wavelengths may converge to the same point. A non-spherical design of the lens surface may also be adopted if necessary.

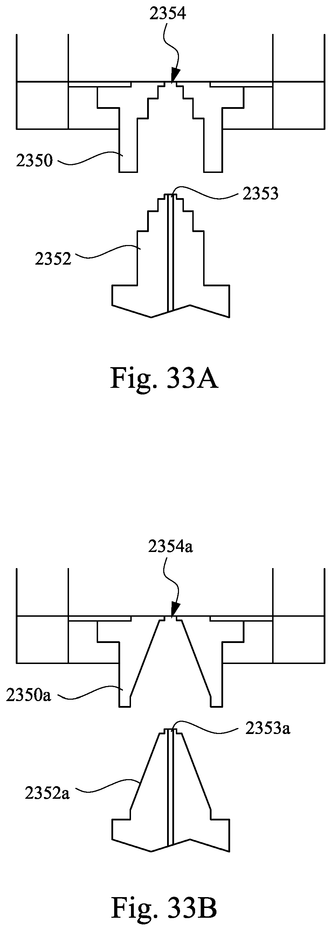

Fig. 33A is a schematic diagram illustrating a matching join surface carrier 2350 and a mating member 2352 according to an embodiment of the present disclosure. Different from Figs. 13A, 13B and Figs. 14A, 14B, the cross-section of the matching join surface carrier 2350 of Fig. 33A has a stepped inner surface and the cross-section of the mating member 2352 has a stepped outer surface along with a raised platform 2353. Thus, when the mating member 2352 is inserted to the matching join surface carrier 2350, the raised platform 2353 on the top of the mating member 2352 contacts the matching join surface MJ of the matching join surface carrier 2350 and every step behind is coupled to the corresponding step on the inner surface of the matching join surface carrier 2350. In other words, when the mating member 2352 is inserted, the raised platform 2353 on the top will attach firmly to the matching join surface MJ and the stepped structure of the mating member 2352 will be inserted into the matching join surface carrier 2350 step by step to ensure that raised platform 2353 and the recess 2354 will finally be precisely joined.

Fig. 33B is a schematic diagram illustrating a matching join surface carrier 2350a and a mating member 2352a according to an embodiment of the present disclosure. Different from Fig. 33A, the inner surface of the cross-section of the matching join surface carrier 2350a is substantially an isosceles trapezoid with the side neighboring the matching join surface MJ being the top edge that is shorter than the bottom edge. A recess 2354a is on the top edge and is connected to the matching join surface MJ. The outer surface of the cross-section of the mating member 2352a is substantially an isosceles trapezoid and has a raised platform 2353a at its top edge. Thus, when the mating member 2352a is inserted to the matching join surface carrier 2350a, the raised platform 2353a of the mating member 2352a goes into the recess 2354a and contacts the matching join surface MJ of the matching join surface carrier 2350a and the inner surface of isosceles trapezoid shape of the matching join surface carrier 2350a is coupled to the outer surface of isosceles trapezoid shape of the mating member 2352a.

Besides, in the case of Figs. 13A and 14A, light first passes through the matching join surface carrier and focuses directly on the matching join surface carrier, so one may take the matching join surface carrier of Figs. 13A and 14A into account when designing lenses. That is, the matching join surface carrier is a part of the optical system. On the other hand, in the case of Figs. 33A and 33B such consideration is not needed, which simplifies design and manufacturing.

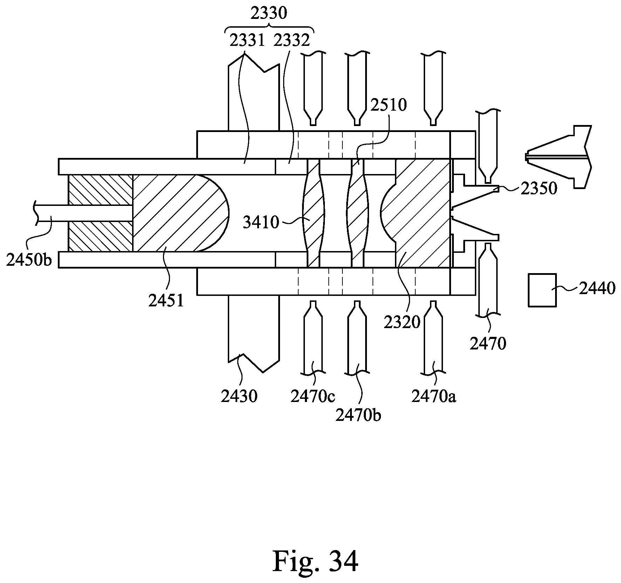

Fig. 34 is a schematic diagram illustrating a device of the connector according to an embodiment of the present disclosure. Different from Fig. 27B, the connector of Fig. 34 further includes a fourth lens 3410 with a longer focal length used to adjust light spot movement and a fourth x-y positioner 2470c. During adjustment, adhesive is not applied to the third lens 2510 and the fourth lens 3410 at the same time.

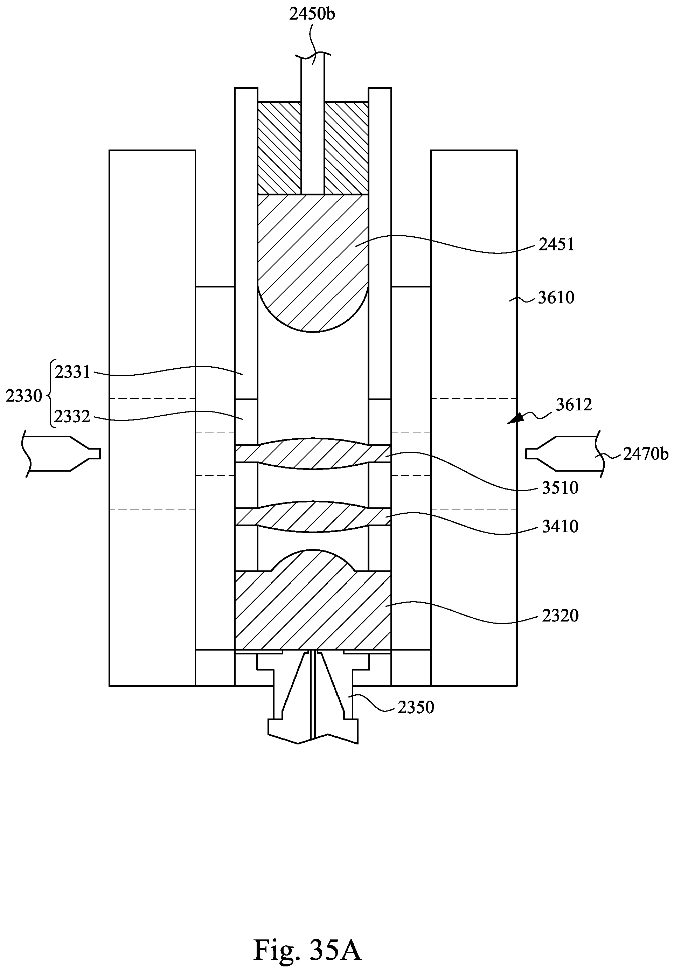

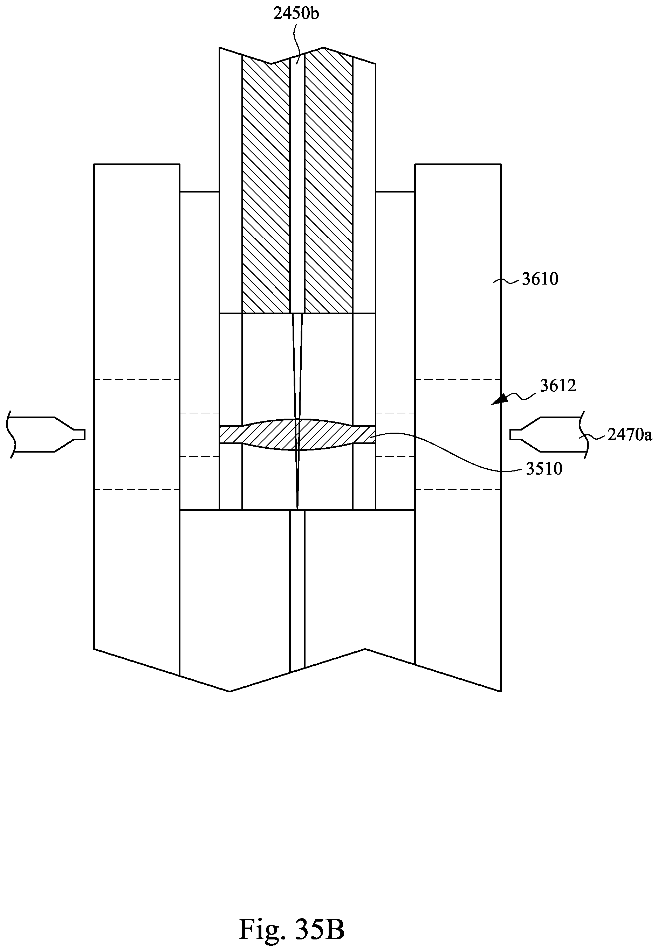

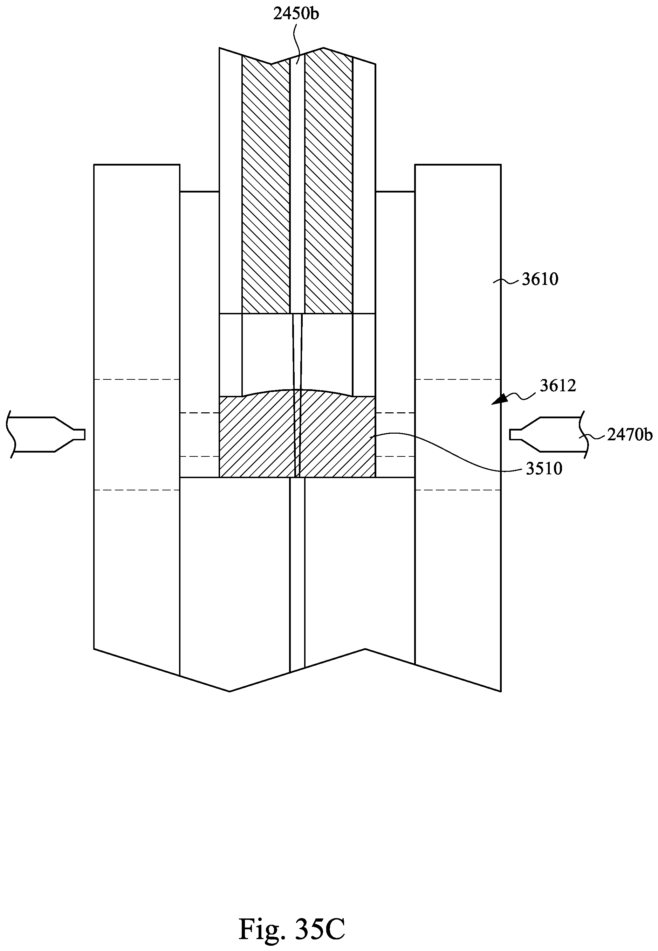

Figs. 35A to 35C are schematic diagrams illustrating connectors including seal structures and physical connecting optical fibers according to an embodiment of the present disclosure. The optical fiber connectors in Figs. 35A to 35C that have completed focusing include holes formed for various reasons on the inside of the seal structures 3610 reserved for the optical fiber connectors. At this point, the focusing point is not correctly located at the middle point of the waveguide, indicating a poor yield rate.

To overcome the issue of poor yield rate, connectors including seal structures and physical connecting optical fibers of Figs. 35A to 35C can be adjusted in the following way. First, determine an appropriate position depending on the seal structure used and form an opening 3612 at the position. Then, add an adjusting lens 3510 depending on the situation. The adjusting lens 3510 may be located at various positions or have various shapes. In other words, Figs. 35A to 35C are similar to each other and their difference lies in the positions and shapes of the adjusting lens 3510, which depend on the situations around the seal structures and the waveguides.

During adjustment corresponding to Figs. 35A to 35C, light first goes into the waveguide through the optical fiber 2450b and then through the adjusting lens 3510 and the optical signal is acquired at an appropriate node in the photonic integrated circuit. Since the cross-section of the waveguide is a rectangle, the profile of signals acquired by scanning through the adjusting lens 3510 will also be a blurred rectangle. At this point, the adjusting lens 3510 can be adjusted by the x-y positioner 2470b through the opening 3612 such that the light spot is projected to the middle point of the blurred rectangle and the adjustment is completed.

The lenses mentioned in the above text can also be replaced with, for example, a diffraction grating, a Fresnel lens, a metalens, or a simple converging lens.

In summary, the present disclosure utilizes observing the light spot formed on the imaging surface of the optical system, and transversely moving the focusing lens or fine adjustment positioning lens by means of the projecting lugs of the focusing lens or fine adjustment positioning lens, so that the focal point of the optical system coincides with the center point of the matching join surface. In addition, by providing the matching join surface carrier in the optical system, the matching join surface carrier can be moved in the transverse direction so that the focal point of the optical system coincides with the center point of the matching join surface. Therefore, calibration costs can be reduced without the need for a complex collimator, while precise alignment of the optical fiber connector is still achieved.

## Claims

1. An optical fiber connector (200A) comprising:
an optical system (210A) comprising:
a lens barrel portion (216); and
a lens system (212) disposed within the lens barrel portion (216), the lens system (212) including at least one focusing lens (212), wherein an outermost lens of the lens system has a planar focal plane (219a) serving as a matching join surface (MJ) ; and
an optical integrated circuit (250A) which is coupled to the optical system (210A), and consisting of an integrated circuit, an integrated optical circuit, or an optical fiber,
wherein a focal point (F) of the lens system (212) of the optical system (210A) is configured to coincide with a center point (C) of the matching join surface (MJ).

2. The optical fiber connector (200A) according to claim 1, wherein the optical system (210A) further comprises an alignment sleeve (230), and the lens barrel portion (216) is fitted into the alignment sleeve (230) to configure a female optical fiber connector (200A).

3. The optical fiber connector (200A) according to any one of claim 1 and 2, wherein the optical system (210A) further comprises a matching join surface carrier (160) configured to abut against the matching join surface (MJ).

4. The optical fiber connector (200A) according to any one of claim 1-3, wherein the optical integrated circuit (250A) is an integrated circuit, the integrated circuit further comprising:
an integrated circuit body (252a) having an upper surface coupled to the matching join surface (MJ) of the optical system (210A); and
an integrated circuit unit (254a) located on or embedded below the upper surface, the integrated circuit unit (254a) being coupled to the center point (C) of the matching join surface (MJ).

5. The optical fiber connector (200A) according to any one of claim 1-4, wherein the optical integrated circuit (250C) is the integrated optical circuit, the integrated optical circuit (250C) further comprising:
an integrated optical circuit body (252c) having a receiving region (258c) ;
and
an integrated optical circuit unit (254c) accommodated in the receiving region (258c), the integrated optical circuit unit (254c) being coupled to the center point (C) of the matching join surface (MJ).

6. An adjustment device of an optical system configured to adjust the optical system (210A) of an optical fiber connector (200A), comprising:
a long straight tube (1000) having a first opening (1010) and a second opening (1020) , the optical system (210A) being fitted into it from the second opening (1020);
a light source (1100) disposed at a periphery of the first opening (1010) , and configured to illuminate the optical system (210A); and
a monitoring device (140) toward the second opening (1020) of the long straight tube (1000) to monitor a light spot imaged by the optical system (210A),
wherein the optical system (250A) comprises a lens barrel portion (216) and a lens system (212), and the lens system (212) is disposed within the lens barrel portion (216) and includes at least one focusing lens (212), and an outermost lens of the lens system has a planar focal plane (219a) serving as a matching join surface (MJ), and
the at least one focusing lens (212) consists of a lens body (212a) and projecting lugs (212b), and
the lens barrel portion (216) has at least one lens barrel adjustment hole (1712) on a tube wall perpendicular to an optical axis of the optical system and corresponding to the projecting lugs (212b) of the at least one focusing lens (212), and
the long straight tube (1900) has at least one long straight tube adjustment hole (1910) on a tube wall and aligned with the at least one lens barrel adjustment hole (1860a), and
through observation of the light spot on a screen of the monitoring device (140), the projecting lugs (212b) are moved in a transverse direction perpendicular to the optical axis using a tool through the at least one long straight tube adjustment hole (1910) and the at least one lens barrel adjustment hole (1860a) so that the light spot is made to coincide with a center point (C) of the matching join surface (MJ).

7. The adjustment device according to claim 6, wherein the optical system (1800A) further comprises at least one fine adjustment positioning lens (1820) consisting of a lens body (1820a) and projecting lugs (1820b), and
the lens barrel portion (1860) further has at least one other lens barrel adjustment hole (1860b) on the tube wall perpendicular to the optical axis of the optical system and corresponding to the projecting lugs (1820b) of the at least one fine adjustment positioning lens (1820); and
the long straight tube (1900) further has at least one other long straight tube adjustment hole (1912) on the tube wall and aligned with the at least one other lens barrel adjustment hole (1860b),
through observation of the light spot on a screen of the monitoring device (140), the projecting lugs (1820b) of the at least one fine adjustment positioning lens (1820) are moved in the transverse direction perpendicular to the optical axis using the tool through the at least one other long straight tube adjustment hole (1912) and the at least one other lens barrel adjustment hole (1860b) so that the light spot is made to coincide with the center point (C) of the matching join surface (MJ).

8. The adjustment device according to any one of claim 6 and 7, wherein the optical system (1800A) further comprises a matching join surface carrier (1890) configured to abut against an outward surface of the outermost lens, and the light spot is made to coincide with the center point (C) of the matching join surface (MJ) by moving the matching join surface carrier (1890) in the transverse direction.

9. The adjustment device according to any one of claim 6-8, wherein the long straight tube (1000A) further comprises:
a first long straight inner tube (1080) fitted into the long straight tube (1000A) from a side of the first opening (1010) of the long straight tube (1000A); and
a second long straight inner tube (1090) fitted into the long straight tube (1000A) from a side of the second opening (1020) of the long straight tube (1000A), and the optical system (1200) is fitted into the second long straight inner tube (1090).

10. The adjustment device according to any one of claim 6-9, wherein the long straight tube (2460) further comprises:
a fixing element (2461) located on the long straight tube (2460) configured to fix a shell (2330) of the optical system (210A).

11. The adjustment device according to any one of claim 6-10, wherein the tool (2470) comprises:
a clamp portion (2471) configured to clamp an object;
a flat plate (2472) located below the clamp portion (2471) and configured to carry and move the clamp portion (2471) on a plane; and
a stepping motor (2473) located between the clamp portion (2471) and the flat plate (2472) and configured to control a tightness of the clamp portion (2471).

12. An adjustment method of an optical system for adjusting the optical system of an optical fiber connector, comprising:
providing the optical system (1800A) comprising a lens barrel portion (1860) and a lens system, the lens system comprising at least one focusing lens (1810), wherein an outermost lens of the lens system has a planar focal plane (1872a) serving as a matching join surface (MJ) , and the at least one focusing lens (1810) consists of a lens body (1810a) and projecting lugs (1810b), wherein the lens barrel portion (1860) has at least one lens barrel adjustment hole (1712) on a tube wall perpendicular to an optical axis of the optical system (1800A) and corresponding to the projecting lugs (1810b) of the at least one focusing lens (1810);
providing a long straight tube (1000) having a first opening (1010) and a second opening (1020), the long straight tube (1900) further having at least one long straight tube adjustment hole (1910) on a tube wall and aligned with the at least one lens barrel adjustment hole (1860a);
disposing a first uniform light source (1100) at a periphery of the first opening (1010) to illuminate the optical system (1200);
fitting the optical system (1200) into the long straight tube (1000) from a side of the second opening (1020);
providing a monitoring device (140) toward the second opening (1020) of the long straight tube (1000) to monitor a light spot imaged by a focal point (F) of the optical system (1200);
making the light spot coincide with a center point (C) of the matching join surface (MJ) through observation of the light spot on a screen of the monitoring device (140) and moving the projecting lugs (1810b) in a transverse direction perpendicular to the optical axis using a tool through the at least one long straight tube adjustment hole (1910) and the at least one lens barrel adjustment hole (1860a); and
when the light spot coincides with the center point (C) of the matching join surface (MJ), injecting an adhesive into the at least one lens barrel adjustment hole through the at least one long straight tube adjustment hole (1910) and the at least one lens barrel adjustment hole (1860a) to fix and position the at least one focusing lens (1810) to the lens barrel portion (1860).

13. The adjustment method according to claim 12, further comprising an annealing step after fixing and positioning the at least one focusing lens (1810) to the lens barrel portion (1860) with the adhesive.

14. The adjustment method according to any one of claim 12 and 13, wherein the optical system (1800A) further comprises at least one fine adjustment positioning lens (1820) consisting of a lens body (1820a) and projecting lugs (1820b), and
the lens barrel portion (1860) further has at least one other lens barrel adjustment hole (1860b) on the tube wall perpendicular to the optical axis of the optical system (1800A) and corresponding to the projecting lugs (1820b) of the at least one fine adjustment positioning lens (1820); and
the long straight tube (1900) further has at least one other long straight tube adjustment hole (1912) on the tube wall and aligned with the at least one other lens barrel adjustment hole (1860b), and
the adjustment method further comprises:
making the light spot coincide with the center point (C) of the matching join surface (MJ) through observation of the light spot on a screen of the monitoring device (140) and moving the projecting lugs (1820b) of the at least one fine adjustment positioning lens (1820) in the transverse direction perpendicular to the optical axis using the tool through the at least one other long straight tube adjustment hole (1912) and the at least one other lens barrel adjustment hole (1860b); and
when the light spot coincides with the center point (C) of the matching join surface (MJ), injecting the adhesive into the at least one other lens barrel adjustment hole (1860b) through the at least one other long straight tube adjustment hole (1912) and the at least one other lens barrel adjustment hole (1860b) to fix and position the at least one fine adjustment positioning lens (1820) to the lens barrel portion (1860).

15. The adjustment method according to any one of claim 12-14, wherein the optical system (1800A) further comprises a matching join surface carrier (2350) configured to abut against an outward surface (2321) of the outermost lens; and
making the light spot coincide with the center point (C) of the matching join surface (MJ) through observation of the light spot on a screen of the monitoring device (140) and moving the matching join surface carrier (2350) in the transverse direction; and
when the light spot coincides with the center point (C) of the matching join surface (MJ), fixing and positioning the matching join surface carrier (2350) to the lens barrel portion (2340) with the adhesive.
